# EUROPÄISCHE PATENTSCHRIFT

(11) **EP 2 981 628 B1**
(45) Veröffentlichungstag und Bekanntmachung des Hinweises auf die Patenterteilung: **02.08.2017**
(21) Anmeldenummer: 13731743.4
(22) Anmeldetag: 24.06.2013
(51) Int. Cl.: C22B 1/04, C22B 7/00, C22B 11/08

(54) **VERFAHREN UND ANLAGE ZUR EISENGEWINNUNG AUS KIESABBRAND**
METHOD AND PLANT FOR PRODUCING IRON FROM ROASTED PYRITES
PROCÉDÉ ET INSTALLATION POUR LA PRODUCTION DE FER À PARTIR DE CENDRES DE PYRITE

(30) Priorität: 17.05.2013 WO PCT/EP2013/001475
(43) Veröffentlichungstag der Anmeldung: 10.02.2016
(73) Patentinhaber: Blücher GmbH, 40699 Erkrath (DE)
(72) Erfinder: BÖHRINGER, Bertram, 40699 Erkrath (DE); SCHÖNFELD, Raik, 40699 Erkrath (DE); DYACHENKO, Alexander, 40699 Erkrath (DE); LARIN, Valeriy, 40699 Erkrath (DE)
(74) Vertreter: Von Rohr Patentanwälte Partnerschaft mbB
(86) Internationale Anmeldenummer: PCT/EP2013/063129
(87) Internationale Veröffentlichungsnummer: WO 2014/183808

(56) Entgegenhaltungen:
- GB-A- 1 456 194
- US-A- 1 943 339
- US-A- 3 896 211
- US-A- 4 353 740
- US-A1- 2007 224 109

## Beschreibung

Die vorliegende Erfindung betrifft das technische Gebiet der Gewinnung von Metallen, insbesondere von Eisen, und/oder von Bunt- und/oder Edelmetallen aus Erzen bzw. Erzrückständen, vorzugsweise aus Pyritrückständen bzw. Pyritabbrand, insbesondere Kiesabbrand.

Die vorliegende Erfindung betrifft ein Verfahren zur (Rück-)Gewinnung von metallischem Eisen bzw. Eisenchlorid aus Erzen bzw. Erzrückständen in Form von Pyritrückständen, bevorzugt aus bei der Schwefelsäureherstellung anfallendem Kiesabbrand.

Darüber hinaus betrifft die vorliegende Erfindung eine entsprechende Rückgewinnungs-Anlage zur (Rück-)Gewinnung von metallischem Eisen bzw. Eisenchlorid aus Erzen bzw. Erzrückständen in Form von Pyritrückständen, besonders bevorzugt aus bei der Schwefelsäureherstellung anfallendem Kiesabbrand, wobei die Anlage nach der Erfindung zur Durchführung des erfindungsgemäßen Verfahrens eingesetzt werden kann.

Somit betrifft die vorliegende Erfindung auch die Verwendung der erfindungsgemäßen Rückgewinnungs-Anlage in dem Verfahren nach der Erfindung zur (Rück-)Gewinnung von metallischem Eisen bzw. Eisenchlorid aus Erzen bzw. Erzrückständen in Form von Pyritrückständen.

Im Allgemeinen umfassen Erze insbesondere chemische Verbindungen von Metallen, wie Eisenverbindungen, beispielsweise in Form von Eisenoxiden, Eisencarbonaten und Eisensulfiden, wobei die in Rede stehenden Metallverbindungen in dem Erz mit nichteisenhaltigen Gesteinen als Gemenge vorliegen können.

Zu den wichtigsten Eisenerzen zählen Magnetit, Limonit, Hämatit sowie Siderit. Während Eisen im Fall von Magnetit in Form von Eisen(II, III)-Oxid (Fe₃O₄) vorliegt, ist Eisen in Hämatit maßgeblich als Eisen(II)-Oxid (Fe₂O₃) aufzufinden. Darüber hinaus liegt Eisen in Siderit vorrangig in Form von Eisen(II)-Carbonat (FeCO₃) vor.

Weiterhin sind aber auch natürliche Erze bekannt, in welchen Eisen vorrangig in Verbindung mit Schwefel vorliegt. Hierzu zählt insbesondere Pyrit, welches synonym auch als Schwefelkies bzw. aufgrund seines metallischen Glanzes und seiner messinggelben Farbgebung als Katzen- bzw. Narrengold bezeichnet wird.

Insbesondere enthält Pyrit eine Reihe weiterer technologisch bzw. ökonomisch bedeutsamer Metallkomponenten, wie z. B. Zink, Kupfer, Cobalt und Blei, und darüber hinaus weitere Inhaltsstoffe auf Basis von Calcium und Silicium, welche im Allgemeinen durch die industriell vorrangige Nutzung von Pyrit zur Herstellung von Schwefelsäure nicht verwertet werden und somit gewissermaßen ungenutzt im Material bzw. resultierenden Kiesabbrand verbleiben.

Wie zuvor angeführt, liegt Eisen in Pyrit insbesondere in Form des Sulfids vor, und zwar insbesondere als Eisen(II)-disulfid bzw. FeS₂, wobei in diesem Zusammenhang Pyrit das meist verbreitete Sulfidmineral darstellt. Im industriellen Maßstab dient es als Ausgangsmaterial zur Herstellung bzw. Gewinnung von Schwefelsäure, wobei die resultierenden Rückstände als sogenannter Pyritabbrand bzw. synonym als Purpurerz oder Kiesabbrand bezeichnet werden.

Im Rahmen der Herstellung von Schwefelsäure unter Verwendung von Pyrit als Ausgangsmaterial wird im Stand der Technik dabei im Allgemeinen derart vorgegangen, dass Pyrit als sulfidisches Metallerz einer Röstung unter Anwesenheit von Luftsauerstoff unterzogen wird, wobei hierdurch ausgehend von in Pyrit vorhandenem Eisensulfid zunächst Schwefeldioxid (SO₂) und Eisenoxide in unterschiedlichen Oxidationsstufen erhalten werden. Nachfolgend wird das so erhaltende Schwefeldioxid insbesondere im Rahmen eines sogenannten Kontaktverfahrens bzw. in einem Kontaktofen unter Einsatz eines Katalysators, beispielsweise Vanadiumpentoxid, und in Anwesenheit von zusätzlichem Sauerstoff zu Schwefeltrioxid (SO₃) oxidiert. Durch anschließende Adsorption bzw. Reaktion mit Wasser wird dann Schwefelsäure (H₂SO₄) erhalten.

Zusammenfassend wird somit bei der Schwefelsäureherstellung ausgehend von Pyrit insbesondere in Form eines vierstufigen Prozesses verfahren, wobei das Verfahren die folgenden Schritte umfasst:
(i) Röstung von Pyrit, beispielsweise in einem Wirbelschichtröstofen, zur Gewinnung von Schwefeldioxid ausgehend von Eisensulfid bzw. Eisendisulfid bzw. Eisen(II)-disulfid (mit der entsprechenden chemischen Reaktionsgleichung 4 FeS₂ + 11 O₂ → 2 Fe₂O₃ + 8 SO₂);
(ii) nachfolgende Gasreinigung insbesondere zur Aufreinigung von zuvor erhaltenem Schwefeldioxid;
(iii) Oxidation von Schwefeldioxid zu Schwefeltrioxid (mit der entsprechenden chemischen Reaktionsgleichung 2 SO₂ + O₂ → 2SO₃), wobei die Reaktion unter Katalysatorverwendung in einem Kontakt- bzw. Hordenreaktor durchgeführt werden kann; und
(iv) Adsorption von Schwefeltrioxid mit insbesondere konzentrierter wasserhaltiger Schwefelsäure zur Gewinnung weiterer Schwefelsäure, wobei das Schwefeltrioxid als Anhydrid der resultierenden Schwefelsäure fungiert (mit der chemischen Reaktionsgleichung SO₃ + H2SO₄(H₂O) → 2 H₂SO₄).

Schwefelsäure wird im Allgemeinen im industriellen Maßstab in sehr großen Mengen und in zahlreichen chemisch-technischen Bereichen eingesetzt: Ein großer Teil der hergestellten Schwefelsäure wird dabei in der Produktion von Düngemitteln eingesetzt. Darüber hinaus dient Schwefelsäure als Ausgangs- bzw. Zwischenprodukt zur Herstellung weiterer industriell relevanter Produkte, wie Katalysatoren, Tensiden, Säuren, wie Flusssäure, Sulfaten, Trockenmitteln, Reaktionshilfsmitteln und dergleichen. Nicht zuletzt aufgrund der zahlreichen Einsatzmöglichkeiten von Schwefelsäure wird deutlich, dass diesbezüglich ein hoher Bedarf besteht: So hat die weltweite Produktion an Schwefelsäure die Größenordnung von 200 Millionen Tonnen pro Jahr überschritten, so dass Schwefelsäure die weltweit meist produzierte Chemikalie darstellt.

Auch vor diesem Hintergrund wird deutlich, dass im Rahmen der Schwefelsäureherstellung unter Verwendung von Pyrit als Ausgangsmaterial große Mengen an Pyritabbrand bzw. Kiesabbrand resultieren. Hierbei handelt es sich im Allgemeinen um bei der Röstung der eingesetzten Ausgangsmaterialien bzw. -erze in Form von Pyrit anfallenden Rückstand bzw. Abfall. Insbesondere handelt es sich bei Kiesabbrand um einen festen Rückstand, der bei der Gewinnung von Schwefeldioxid bzw. Schwefelsäure durch thermische Behandlung von Pyrit als Abfallprodukt anfällt. Im Allgemeinen wird davon ausgegangen, dass weltweit jährlich mindestens 20 Millionen Tonnen Kiesabbrand im Zusammenhang mit der Herstellung von Schwefelsäure anfallen.

Dabei wird der Kiesabbrand in der Regel am Ort der Herstellung gelagert bzw. deponiert, wobei darüber hinaus weltweit bereits sehr große Bestände an Kiesabbrand im Zusammenhang mit der seit Ende des 19. Jahrhunderts durchgeführten Produktion von Schwefelsäure vorhanden sind. Da das der Schwefelsäureherstellung zugrundeliegende Pyrit vor seiner Verarbeitung in der Regel zerkleinert bzw. vermahlen wird, liegt der resultierende Kiesabbrand im Allgemeinen als feinkörnige und insbesondere relativ homogene Substanz vor.

Was den resultierenden Pyrit- bzw. Kiesabbrand im Allgemeinen anbelangt, so enthält dieser große Mengen an Eisen sowie wirtschaftlich relevante Mengen weiterer Metalle und zudem auch Edelmetalle, welche bei der Schwefelsäureherstellung nicht aus dem Ausgangsmaterial entfernt werden, so dass Kiesabbrand als solcher vor diesem Hintergrund ein wertvoller Rohstoff zur Gewinnung ökonomisch relevanter Metall- und Edelmetallmengen ist.

Insbesondere enthält Kiesabbrand Eisenoxide in Form von FeO, Fe₂O₃ (Hämatit) und/oder Fe₃O₄ (Magnetit) und Restmengen an FeS₂ (Eisendisulfid), welche insbesondere für die rötliche Farbgebung von Kiesabbrand verantwortlich sind. Neben Siliciumdioxid (SiO₂) und Sulfaten insbesondere in Form von Calciumsulfat (CaSO₄) weist Kiesabbrand darüber hinaus auch signifikante Mengen der Metalle Zink, Kupfer, Cobalt, Titan, Mangan, Vanadium, Chrom und Blei auf. Weiterhin umfasst Kiesabbrand auch Edelmetalle, insbesondere in Form von Gold bzw. Silber. Auch insofern weist Kiesabbrand ein nicht zuletzt in wirtschaftlicher Hinsicht hohes Potential im Hinblick auf die Gewinnung bzw. Rückgewinnung von Metallen, Buntmetallen und Edelmetallen auf.

Diesbezüglich ist auch beachtlich, dass Eisen mit einem Gewichtsanteil von 95 % in Bezug auf die insgesamt genutzten Metalle das weltweit meist verwendete Metall darstellt. Beispielsweise stellt Eisen den Hauptbestandteil von Stahl dar. Der Grund für den umfangreichen Einsatz von Eisen liegt neben seiner weiten Verfügbarkeit insbesondere auch darin, dass Eisen hervorragende Eigenschaften in Bezug auf Festigkeit und Zähigkeit aufweist, insbesondere sofern Eisen in Form von Legierungen mit anderen Metallen, wie Chrom, Molybdän und Nickel vorliegt. Aufgrund dieser Eigenschaften stellt Eisen für viele Bereiche der Technik einen Grundwerkstoff dar. Insbesondere wird Eisen in Form von Stahl bei der Herstellung von Fahrzeugen, Schiffen und im gesamten Baubereich, beispielsweise als Stahlbeton, eingesetzt. Hinzu kommt, dass Eisen ein ferromagnetisches Metall darstellt und insofern auch für den großtechnischen Einsatz im Bereich des Elektromagnetismus, wie in Generatoren, Transformatoren, elektrischen Drosseln, Relais und Elektromotoren, von Bedeutung ist. In diesem Zusammenhang wird Eisen entweder in Reinform oder in Kombination beispielsweise mit Silizium, Aluminium, Cobalt der Nickel als weichmagnetisches Kernmaterial zur Führung von Magnetfelder bzw. zur Abschirmung von Magnetfeldern oder zur Erhöhung der Induktivität eingesetzt. Eisen wird auch im chemischen Bereich eingesetzt, insbesondere in Form von Eisenpulver. Im Jahr 2010 überstieg die weltweite Produktion an Roheisen den Wert von 1.000 Millionen Tonnen. Dies zeigt, dass weltweit ein sehr großer Bedarf an Eisen besteht.

Vor diesem Hintergrund sind im Stand der Technik erste Ansätze verfolgt worden, den als Abfallprodukt der Schwefelsäureherstellung resultierenden Kiesabbrand wirtschaftlich zu nutzen.

So wird der bei der Schwefelsäuregewinnung verbleibende Rückstand in Form von Pyrit- bzw. Kiesabbrand beispielsweise in Hochöfen eingesetzt. Diesbezüglich wird auf die Gewinnung von Eisen fokussiert, wobei jedoch die zugrundeliegenden Verfahren ökonomisch und ökologisch mitunter nicht optimal sind, und eine Rückgewinnung weiterer Inhaltsstoffe nicht vorgesehen ist.

Darüber hinaus betrifft die US 4 259 106 A ein Verfahren zur Röstung eines eisenhaltigen Ausgangsmaterials, wie Kiesabbrand, welches auch weitere Metalle enthält, wobei die weiteren Metalle einer Chlorierung unterzogen werden sollen. In Bezug auf das Chlorierungsreagenz wird maßgeblich auf Calciumchlorid abgestellt. In diesem Zusammenhang ist lediglich eine Chlorierung der von Eisen verschiedenen Metalle vorgesehen, wobei Eisen als solches in der Schmelze verbleiben soll. Nachteilig ist zudem der hohe Energieverbrauch, welcher mit dem zugrundeliegenden Verfahren einhergeht.

Zudem zielt die GB 1 236 345 A nicht auf eine Rückgewinnung von Eisen im Speziellen ab. Insbesondere soll nur eine Chlorierung von Eisen verschiedenen Metallen zeitgleich zu der Röstung des Ausgangsmaterials erfolgen. Aufgrund der eingesetzten Chlorierungsmittel und der gewählten Verfahrensführung resultiert zudem eine hohe Korrosionsaktivität, was insbesondere hinsichtlich der dem Verfahren zugrundeliegenden Apparatur abträglich ist.

Zudem stellt die EP 0 538 168 A1 nicht auf eine Chlorierung und Rückgewinnung von Eisen aus Kiesabbrand ab. Vielmehr zielt dieses Dokument auf eine Optimierung der zur Gewinnung von Gold und Silber angeführten Cyanidlaugung, wobei eine Rückgewinnung von metallischem Eisen nicht vorgesehen ist. Die gewählte Verfahrensführung ist zudem ökonomisch nachteilig.

Weiterhin beschreibt die CN 101 067 163 A ein Behandlungsverfahren für Pyrit, wobei weder eine Röstung noch eine Chlorierung vorgesehen ist. Auch von daher ist die Isolierung einzelner Komponenten aus dem Rohmaterial wenig effizient.

Weiterhin betrifft die CN 102 605 172 A ein Verfahren unter Röstung von Pyrit, wobei eine nachfolgende Reduktion des Abbrands unter Verwendung einer Biomasse vorgesehen ist. Durch den in der Biomasse enthaltenden Kohlenstoff soll Eisen(III)-oxid zu metallischem Eisen reduziert werden. Das resultierende metallische Eisen soll über eine magnetische Abscheidung isoliert werden. Eine umfängliche Rückgewinnung weiterer Metalle ist nicht vorgesehen.

Zudem zielt die CN 102 502 527 A auf die Verwendung von Eisensulfat als Ausgangssubstanz ab, welches mit Pyrit und elementarem Schwefel zu Eisenpulver umgesetzt werden soll. Eine Chlorierung innerhalb des Rückgewinnungsverfahrens ist nicht vorgesehen. Eine selektive Auftrennung verschiedener Metallkomponenten ist nicht in effektiver Weise gewährleistet.

Die CN 102 251 067 A zielt auf eine Behandlung von Pyrit bzw. Pyritabbrand ohne Chlorierung ab, wobei metallische Bestandteile durch Laugungsverfahren abgetrennt werden sollen. Nachteilig ist hierbei jedoch der hohe Chemikalieneinsatz sowie die mitunter geringe Selektivität der Auftrennung.

Die CN 102 225 374 A betrifft eine magnetische Abscheidung von Eisen nach erfolgter Abtrennung anderer Metalle aus Pyritabbrand. Eine Chlorierung metallischer Komponenten ist nicht vorgesehen. Eine gezielte und selektive Auftrennung verschiedener Metallkomponenten ist ebenfalls nicht vorgesehen.

Darüber hinaus betrifft die CN 102 121 059 A ein Röstungsverfahren für Pyrit. Eine Chlorierung metallischer Komponenten ist nicht beschrieben. Darüber hinaus erfolgt die Reduktion von Eisen unter Verwendung von Kohlenstoff. Nachteilig hierbei ist jedoch, dass mitunter kein hochreines metallisches Eisen resultiert, da Verunreinigungen durch den zur Reduktion eingesetzten Kohlenstoff resultieren können.

Die CN 102 344 124 A beschreibt die Umwandlung von Eisensulfat über die Monohydrat-Form zu Schwefelsäure, Eisen und Eisenoxid, wobei Pyrit als Ausgangsmaterial eingesetzt wird. Eine gezielte Chlorierung ist nicht beschrieben. Eine umfängliche Auftrennung und Rückgewinnung verschiedener Metalle ist gleichermaßen nicht vorgesehen.
Weiterhin betrifft die GB 1 350 392 A die Gewinnung von Buntmetallen aus Pyrit nach erfolgter Röstung und Chlorierung der Buntmetalle. Eine Chlorierung von Eisen ist nicht vorgesehen. Die Eisenkomponente soll in Form von Eisenoxid im Rückstand verbleiben. Insofern ist eine effiziente Auftrennung sämtlicher Komponenten nicht möglich.

Die US 4 576 812 A betrifft ein Verfahren, wonach Eisenchlorid als Chloridquelle verwendet wird, wobei ausgehend von Eisenchlorid unter Einsatz von Sauerstoff nachfolgend Eisen(III)-oxid erhalten werden soll, welches dann zur Eisengewinnung eingesetzt wird. Eine Röstung des Ausgangsmaterials wird nicht beschrieben, so dass mitunter uneinheitliche Ausgangsmaterialien vorliegen.

Weiterhin zielt die DE 2 005 951 A auf ein Verfahren zur Aufbereitung von Pyritabbränden zu Einsatzstoffen für Hochöfen ab. Die Pyritabbrände sollen dabei pelletiert und in Anwesenheit von Calciumchlorid in einem Drehrohrofen gebrannt werden, wobei durch das Calciumchlorid das Eisen oxidiert werden soll. Eine weiterführende Aufbereitung bzw. Auftrennung ist nicht vorgesehen bzw. aufgrund der speziellen Verfahrensführung nicht möglich.

Die DE 637 443 A betrifft die Reduktion von Eisenchlorid unter Einsatz von Wasserdampf und gegebenenfalls Kohle ausgehend von schwefeleisenhaltigen Ausgangsstoffen, wobei elementarer Schwefel gewonnen werden soll.

Die US 3 896 211 A betrifft ein Verfahren zur Aufreinigung von Eisenoxiden, welche Verunreinigungen mit von Eisen verschiedenen Metallen aufweisen, wobei die Oxide in einer Reaktionszone bei einer Temperatur von 550 °C bis 700 °C mit einer Dampfmischung eines Halogenwasserstoffgases in Gegenwart einer bestimmten Menge an Wasserdampf in Kontakt gebracht werden, wobei Halogenverbindungen der von Eisen verschiedenen Metallverunreinigungen gebildet und verdampft werden sollen. Dabei soll das Eisenoxid als feste Phase verbleiben, und die verdampften Halogenverbindungen sollen aus der Reaktionszone mittels eines heißen Trägergases entfernt werden. Anschließend soll das aufgereinigte Eisenoxid aus der Reaktionszone entfernt und gewonnen werden.

Weiterhin betrifft die GB 1 456 194 A ein Verfahren zur Herstellung eines Eisenkörpers, wobei eine Eisenverbindung im gasförmigen Zustand mit einem Reduktionsgas zur Reaktion gebracht wird und wobei das hierdurch resultierende Eisen auf einen Formkörper aufgebracht bzw. abgeschieden wird, wobei der Formkörper auf eine Temperatur eingestellt wird, welche mindestens der Reduktionstemperatur entspricht und welche niedriger als der Schmelzpunkt von Eisen ist. Zudem soll im Bereich des Formkörpers eine turbulente Gasströmung vorliegen, um das Eisen auf dem Formkörper in Form einer festen Eisenschicht mit kristalliner Form abzuscheiden.

Darüber hinaus betrifft die US 4 353 740 A ein Verfahren zur Rückgewinnung von Gold aus einem goldhaltigen Erz, wobei hierzu eine Zermahlung des Erzes, gefolgt von einer oxidativen Röstung des Erzes und gefolgt von einer Chlorierung des Erzes durch Inkontaktbringen des Erzes mit Chlorgas vorgesehen ist, wobei das in dem Ausgangsmaterial vorhandene Gold in Goldchlorid bzw. in einen Goldchlorid/Eisenchlorid-Komplex überführt werden soll. Die gasförmigen Verbindungen sollen anschließend durch ein Halogensalz zur Abtrennung von Gold durch Bildung einer Halogensalz/Goldchlorid-Mischung geleitet werden, wobei anschließend metallisches Gold von dem Halogensalz abgetrennt wird.

Weiterhin betrifft die US 1 943 339 A ein Verfahren zur Behandlung eines Komplexerzes, welches Silbersulfide sowie andere Erzmetalle enthält, wobei zunächst die Erzpartikel mit einem Erdalkalimetalloxid beschichtet und das so beschichtete Material derart geröstet wird, dass eine Entfernung von Schwefel aus dem Silbersulfid resultiert, wobei gleichzeitig ein Erdalkalimetallsulfat gebildet wird, welches mit den silberhaltigen Teilen der Erzpartikel verbunden ist, was eine Globulisierung von Silber oder einen Kontakt mit physikalischer bzw. chemischer Wechselwirkung von Silber mit anderen Bestandteilen des Erzes verhindern soll. Anschließend soll das geröstete Erz behandelt werden derart, dass das Silber in eine lösliche Verbindung überführt wird, welche anschließend abgetrennt werden soll.

Zudem betrifft die US 2007/0224109 A1 ein Verfahren zur Herstellung eines Metallchlorids aus einem Metalloxide enthaltenden Material, wobei das Verfahren eine Kalzinierung des Ausgangsmaterials sowie eine Chlorierung des kalzinierten Produkts zur Bildung mindestens eines Metalloxids umfasst.

Weiterhin betrifft die DE 954 740 A ein Verfahren zur chlorierenden Aufarbeitung von eisen- und buntmetallhaltigen sulfidischen Erzen in mehreren Stufen. Dabei soll das aufzuschließende Erz geteilt werden, wonach in einer ersten Stufe ein Teil unter Verwendung von Chlorgas zur Bildung von Ferrichlorid und Schwefelmonochlorid (Schwefelchlorür) aufgechlort werden soll. Der andere Teil soll mit dem angefallenen Schwefelmonochlorid in einer zweiten Stufe aufgeschlossen werden, wobei das in der zweiten Stufe anfallende, Ferrochlorid enthaltende aufgeschlossene Erz in die erste Stufe überführt werden und zusammen mit noch unaufgeschlossenem Erz weiter aufgechlort werden soll.

Die wissenschaftliche Publikation gemäß Trumbull R. C. et al., "Transactions of the Institution of Mining and Metallurgy", 58, 1949, Seiten 1 bis 31*,* betrifft ein Verfahren zur Behandlung von Pyritabbränden nach dem sogenannten Henderson-Verfahren. Gemäß diesem Verfahren wird der Pyritabbrand zunächst zerkleinert und anschließend einer Röstung in Anwesenheit von Natriumchlorid unterzogen. Aus dem auf diese Weise erhaltenen Rückstand erfolgt die Entfernung von Buntmetallen. Eine Gewinnung von Eisen aus den auf diese Weise behandelten Pyritabbränden ist jedoch nicht vorgesehen. Die Röstung findet in Gegenwart von Natriumchlorid bei Temperaturen von über 350 °C und in Anwesenheit von Sauerstoff statt.

Die wissenschaftliche Publikation gemäß Pitsch H. et al., Revista de Metalurgia, 6, 1970, Seiten 490 bis 500*,* betrifft ein Verfahren zur Entfernung von Buntmetallen aus Pyritabbränden unter Verwendung von Chlorierungsreagenzien in Form von Chlorgas oder Calciumchlorid. Eine Gewinnung von Eisen aus dem behandelten Pyritabbrand ist nicht vorgesehen. Die Chlorierung des Pyritabbrands findet bei hohen Temperaturen von 1.000 bis 1.200 °C in oxidierender Atmosphäre statt, so dass etwaig resultierendes Eisen(III)-chlorid sofort zu Eisen(III)-oxid umgesetzt wird und folglich nach der Chlorierung kein Eisen(III)-chlorid vorliegt.

Die im Stand der Technik bekannten Aufbereitungsverfahren für metallische Erze, insbesondere Pyrit, bzw. für bei der Verarbeitung dieser Erze auftretende Abfallprodukte, wie Kiesabbrand, sind somit oftmals mit dem Nachteil verbunden, dass die zugrundeliegenden Verfahren zum einen verfahrenstechnisch aufwendig und unter Einsatz einer hohen Chemikalienmenge durchgeführt werden, und dass zum anderen eine umfängliche Auftrennung bzw. Rückgewinnung verschiedener Metallkomponenten nicht möglich ist. Gleichermaßen sind die für die jeweiligen Verfahren eingesetzten Anlagen aufgrund der komplexen Verfahrensführung mitunter aufwendig.

Vor diesem technischen Hintergrund liegt daher der vorliegenden Erfindung die Aufgabe zugrunde, ein effizientes Verfahren und eine entsprechende Anlage bzw. Vorrichtung zur Rohstoff(rück)gewinnung aus Erzen bzw. Erzrückständen bzw. zur Rückgewinnung insbesondere von Eisen bzw. Eisenverbindungen, insbesondere in Form von Eisenchlorid, sowie gegebenenfalls weiterer Komponenten insbesondere aus bei der Schwefelsäureherstellung anfallendem Kiesabbrand bereitzustellen, wobei die zuvor geschilderten Nachteile des Standes der Technik zumindest weitgehend vermieden oder aber wenigstens abgeschwächt werden sollen.

Insbesondere ist eine Aufgabe der vorliegenden Erfindung darin zu sehen, ein effizientes Verfahren und diesbezügliche Anlagen bzw. Vorrichtungen bereitzustellen, anhand derer eine möglichst umfängliche und selektive Rückgewinnung insbesondere von Eisen bzw. Eisenverbindungen, insbesondere Eisenchlorid, aus dem zugrundeliegenden Abbrand bzw. Rückstand ermöglicht werden soll. Dabei soll das Verfahren bzw. die entsprechenden Anlagen auch die darüber hinausgehende Abtrennung bzw. Rückgewinnung einer Vielzahl verschiedener Metalle sowie Edelmetalle aus dem zugrundeliegenden Abbrand selektiv und mit hoher Reinheit ermöglichen.

Darüber hinaus besteht eine weitere Aufgabe der vorliegenden Erfindung in der Bereitstellung eines Verfahrens mit hoher Effizienz unter Minimierung des Chemikalien- bzw. Energieeinsatzes zur Rückgewinnung von Eisen bzw. Eisenverbindungen, insbesondere Eisenchlorid, aus einem zugrundeliegenden Pyritrückstand bzw. Kiesabbrand, insbesondere im Hinblick auf eine Rezyklierung bzw. Wiederverwertung der im Rahmen des Rückgewinnungsverfahrens eingesetzten Prozesschemikalien.

Zudem sollen gemäß einer weiteren Aufgabenstellung der vorliegenden Erfindung entsprechende Anlagen bzw. Vorrichtungen bereitgestellt werden, welche eine effiziente Verfahrensführung zur selektiven Rückgewinnung insbesondere von Eisen und Eisenverbindungen, wie Eisenchlorid, aus dem Pyritrückstand bzw. Kiesabbrand ermöglichen, wobei die in Rede stehenden Anlagen bzw. Vorrichtungen gleichzeitig auch unter ökonomischen und ökologischen Gesichtspunkten optimiert sein sollen.

Die zuvor geschilderte Aufgabenstellung wird erfindungsgemäß durch den Gegenstand von Patentanspruch 1 gelöst, welcher das erfindungsgemäße Verfahren zur (Rück-)Gewinnung von metallischem Eisen bzw. Eisenchlorid aus Erzen bzw. Erzrückständen in Form von Pyritrückständen, bevorzugt aus bei der Schwefelsäureherstellung anfallendem Kiesabbrand, betrifft; weitere vorteilhafte Ausgestaltungen und Weiterbildungen dieses Erfindungsaspekts sind Gegenstand des entsprechenden Verfahrensnebenanspruchs sowie der zugrundeliegenden Verfahrensunteransprüche.

Weiterer Gegenstand der vorliegenden Erfindung ist zudem die erfindungsgemäße Rückgewinnungs-Anlage zur (Rück-)Gewinnung von metallischem Eisen und/oder Eisenchlorid aus Erzen bzw. Erzrückständen in Form von Pyritrückständen, besonders bevorzugt aus bei der Schwefelsäureherstellung anfallendem Kiesabbrand, wie sie in dem entsprechenden, die erfindungsgemäße Anlage betreffenden unabhängigen Anspruch definiert ist; weitere vorteilhafte Ausgestaltungen und Weiterbildungen der erfindungsgemäßen Anlage sind Gegenstand des entsprechenden Nebenanspruchs sowie der die erfindungsgemäße Anlage betreffenden Unteransprüche.

Darüber hinaus ist Gegenstand der vorliegenden Erfindung die Verwendung der Rückgewinnungs-Anlage nach der Erfindung in dem erfindungsgemäßen Verfahren zur (Rück-)Gewinnung von Eisen bzw. Eisenchlorid aus Erzen bzw. Erzrückständen in Form von Pyritrückständen gemäß dem diesbezüglichen Verwendungsanspruch.

Es versteht sich von selbst, dass Ausgestaltungen, Ausführungsformen, Vorteile und dergleichen, welche nachfolgend zu Zwecken der Vermeidung von Wiederholungen nur zu einem Erfindungsaspekt angeführt sind, selbstverständlich auch in Bezug auf die übrigen Erfindungsaspekte entsprechend gelten.

Weiterhin versteht es sich von selbst, dass bei nachfolgenden Werte-, Zahlen- und Bereichsangaben die angegebenen Bereiche nicht beschränkend zu verstehen sind; es versteht sich von selbst, dass einzelfallbedingt oder anwendungsbezogen von den angegebenen Bereichen und Angaben abgewichen werden kann, ohne dass der Rahmen der vorliegenden Erfindung verlassen ist.

Zudem gilt, dass sämtliche im Folgenden genannten Werte- bzw. Parameterangaben oder dergleichen grundsätzlich mit genormten oder explizit angegebenen Bestimmungsverfahren oder aber mit dem Fachmann an sich geläufigen Bestimmungsverfahren bestimmt bzw. ermittelt werden können.

Bei allen nachstehend genannten relativen bzw. prozentualen, insbesondere gewichtsbezogenen Mengenangaben, ist zudem zu beachten, dass diese Angaben im Rahmen der vorliegenden Erfindung vom Fachmann derart auszuwählen bzw. zu kombinieren sind, dass in der Summe - gegebenenfalls unter Einbeziehung weiterer Komponenten bzw. Inhaltsstoffe bzw. Bestandteile, insbesondere wie nachfolgend definiert - stets 100 % bzw. 100 Gew.-% resultieren. Dies versteht sich für den Fachmann aber von selbst.

Dies vorausgeschickt, wird im Folgenden die vorliegende Erfindung näher beschrieben.

Gegenstand der vorliegenden Erfindung ist somit - gemäß einem **ersten** Aspekt der vorliegenden Erfindung - ein Verfahren zur (Rück-)Gewinnung von metallischem Eisen und/oder Eisenchlorid aus Erzen und/oder Erzrückständen in Form von Pyritrückständen, bevorzugt aus bei der Schwefelsäureherstellung anfallendem Kiesabbrand, wobei das Verfahren die folgenden Verfahrensschritte umfasst:
(a) Bereitstellung, insbesondere Aufbereitung, eines Ausgangsmaterials in Form mindestens eines Erzes und/oder Erzrückstands, wobei das Ausgangsmaterial
   (i) Eisen als Hauptbestandteil und
   (ii) mindestens ein Edelmetall, ausgewählt aus Gold und/oder Silber, sowie
   (iii) mindestens ein weiteres Metall, ausgewählt aus der Gruppe von Kupfer, Zink, Blei, Cobalt, Titan, Mangan, Vanadium und Chrom,
   enthält;
(b) Oxidationsbehandlung, insbesondere Calcinierung und/oder oxidative Röstung, des in Verfahrensschritt (a) bereitgestellten Ausgangsmaterials unter Verwendung mindestens eines Oxidationsmittels, insbesondere Sauerstoff, unter Erhalt von Eisenoxid und Oxiden der weiteren Metalle;
(c) Chlorierung der in Verfahrensschritt (b) erhaltenen Oxidationsprodukte unter Verwendung mindestens eines rezyklierbaren Chlorierungsmittels, umfassend die Chlorierung von Eisenoxid und Oxiden der weiteren Metalle unter Erhalt von Eisenchlorid, insbesondere Eisen(III)-chlorid, und Chloriden der weiteren Metalle;
(d) selektive Abtrennung von Eisenchlorid, insbesondere Eisen(III)-chlorid, aus dem in Verfahrensschritt (c) erhaltenen Produktgemisch und nachfolgende Abtrennung von Chloriden der weiteren Metalle aus dem von Eisenchlorid befreiten Produktgemisch, wobei die selektive Abtrennung von Eisenchlorid, insbesondere Eisen(III)-chlorid, mittels Sublimation des Eisenchlorids, insbesondere Eisen(III)-chlorids, erfolgt und das auf diese Weise selektiv abgetrennte Eisenchlorid, insbesondere Eisen(III)-chlorid, als solches mittels nachfolgender Desublimation gewonnen wird oder das auf diese Weise selektiv abgetrennte Eisenchlorid, insbesondere Eisen(III)-chlorid, einer Reduktion zum Erhalt von metallischem Eisen unterzogen wird;
wobei in Verfahrensschritt (c) die Chlorierung als Festphasenreaktion und unter Verwendung von Ammoniumchlorid (NH₄Cl) als Chlorierungsmittel durchgeführt wird, wobei das in Verfahrensschritt (c) als Chlorierungsmittel eingesetzte Ammoniumchlorid durch Rückgewinnung von bei der Chlorierung der Oxidationsprodukte aus dem Chlorierungsmittel resultierendem Ammoniak (NH₃) und nachfolgende Reaktion des Ammoniaks mit Chlorwasserstoff (HCl) rezykliert wird und wobei die Rezyklierung des Ammoniumchlorids in einer Reaktions- und Kondensationsvorrichtung durchgeführt wird, und
wobei die vorgenannten Verfahrensschritte (a) bis (d) in der vorangehend angeführten Reihenfolge durchgeführt werden.

Das erfindungsgemäße Verfahren betrifft somit maßgeblich die gezielte bzw. selektive Rohstoffgewinnung von metallischem Eisen und von Eisenverbindungen aus Pyritrückständen bzw. bevorzugt aus bei der Schwefelsäureherstellung anfallendem Kiesabbrand. Das erfindungsgemäße Verfahren betrifft somit die gezielte bzw. selektive Rückgewinnung aus Pyritrückständen bzw. bevorzugt aus bei der Schwefelsäureherstellung anfallendem Kiesabbrand. Ein besonderer Fokus des erfindungsgemäßen Verfahrens liegt dabei auf der gezielten Isolierung von Eisen, welches erfindungsgemäß sowohl insbesondere in Form von Eisenchlorid als wichtiges Handels- bzw. Industrieprodukt als auch in Form von metallischem Eisen als bedeutender Rohstoff insbesondere für die Metallindustrie bereitgestellt werden kann. Dabei können sowohl metallisches Eisen als solches als auch die entsprechenden Eisenverbindungen (und zwar in Form von Eisenchlorid, vorzugsweise in Form von Eisen(III)-chlorid), mit hoher Stoffreinheit bereitgestellt werden.

Durch die selektive Sublimation von Eisenchlorid, insbesondere Eisen(III)-chlorid (FeCl₃), aus dem Produktgemisch kann eine gezielte Abtrennung der Eisenkomponente aus dem Produktgemisch realisiert werden, so dass auf dieser Basis sozusagen die Hauptkomponente des eingesetzten Ausgangsmaterials, nämlich Eisen, isoliert bzw. abgetrennt werden kann, und zwar in Form des entsprechenden Eisenchlorids. Die selektive Sublimation bzw. Abtrennung von Eisenchlorid erfolgt dabei insbesondere auf Basis der gezielten Auswahl der Sublimationstemperatur. Denn das abzutrennende bzw. zu isolierende Eisenchlorid, insbesondere Eisen(III)-chlorid (FeCl₃), weist - ohne sich auf diese Theorie beschränken zu wollen - andersartige Sublimationseigenschaften als die Chloride der weiteren Metalle bzw. die weiteren Komponenten in dem Produktgemisch auf, insbesondere dahingehend, dass Eisenchlorid insbesondere im Vergleich zu den weiteren Chloriden eine geringere Sublimationstemperatur aufweist. Durch die gezielte Auswahl der Sublimationstemperatur kann somit ein selektives Entfernen der Eisenkomponente aus dem Produktgemisch realisiert werden.

Dabei kann erfindungsgemäß das erhaltene bzw. isolierte Eisenchlorid einerseits bereitgestellt werden und andererseits eine Weiterverarbeitung zu metallischem Eisen vorgesehen sein, und zwar mittels Reduktion. Insbesondere können hierzu entsprechende Teilströme des sublimierten Eisenchlorids jeweils für die Desublimation bzw. die Reduktion eingesetzt werden. Somit kann in Verfahrensschritt (d) insbesondere derart verfahren werden, dass das zuvor mittels Sublimation selektiv abgetrennte Eisenchlorid, insbesondere Eisen(III)-chlorid, als solches zumindest teilweise mittels nachfolgender Desublimation gewonnen und das auf diese Weise selektiv abgetrennte Eisenchlorid, insbesondere Eisen(III)-chlorid, zumindest teilweise einer Reduktion zum Erhalt von metallischem Eisen unterzogen wird, insbesondere unter vorangehender Aufteilung des sublimierten Eisenchlorids in zwei Teilströme.

Was das aus dem Produktgemisch entfernte und insbesondere sublimierte Eisenchlorid, insbesondere Eisen(III)-chlorid (FeCl₃), anbelangt, so kann dies somit als solches rückgewonnen werden: Hierzu wird das abgetrennte und/oder isolierte und insbesondere sublimierte Eisenchlorid, insbesondere Eisen(III)-chlorid (FeCl₃), zum Erhalt von insbesondere festem und/oder aufgereinigtem Eisenchlorid, insbesondere Eisen(III)-chlorid (FeCl₃), desublimiert. Die Desublimation kann in einer entsprechenden Desublimations- bzw. Kondensationsvorrichtung durchgeführt werden. In diesem Zusammenhang kann insbesondere gasförmiges Eisenchlorid aus der Sublimationsvorrichtung in die Desublimationsvorrichtung überführt werden. Auf diese Weise wird insbesondere partikuläres bzw. festes Eisenchlorid erhalten, welches als solches ein wirtschaftlich relevantes Industrie- bzw. Handelsprodukt darstellt, insbesondere im Hinblick auf seinen Einsatz als Pigment bzw. Flockungs- und/oder Fällungsmittel, insbesondere in Kläranlagen oder dergleichen.

Darüber hinaus kann das abgetrennte bzw. isolierte und insbesondere sublimierte und somit gasförmige Eisenchlorid, insbesondere Eisen(III)-chlorid (FeCl₃), zum Erhalt von metallischem Eisen reduziert werden. In diesem Zusammenhang kann mindestens ein Reduktionsmittel verwendet werden. Bei dem Reduktionsmittel handelt es sich vorzugsweise um Wasserstoff oder Erdgas (insbesondere Methan), bevorzugt Wasserstoff.

Zudem erfolgt die Abtrennung der Eisenkomponente, welche im Allgemeinen einen Hauptbestandteil bzw. eine Hauptkomponente des erfindungsgemäß eingesetzten Pyrit- bzw. Kiesabbrands darstellt, in der Abfolge der Verfahrensdurchführung insbesondere vor der gegebenenfalls vorgesehenen Abtrennung bzw. Rückgewinnung der weiteren Komponenten. Folglich wird die Hauptkomponente sehr früh entfernt, was einerseits zu hohen Ausbeuten in Bezug auf Eisen als solches aber auch im Hinblick auf die Abtrennung weiterer Komponenten führt. Denn aufgrund der erfindungsgemäßen Verfahrensführung werden infolge der Abtrennung von Eisen die relativen Anteile der weiteren Komponenten in dem von Eisen befreiten Produktgemisch entsprechend erhöht, was wiederum eine der Gewinnung von Eisen nachgeschaltete bzw. nachfolgende Rückgewinnung dieser Rohstoffe optimiert, insbesondere im Hinblick auf einen verringerten Chemikalien- bzw. Energieeinsatz zur Abtrennung der weiteren und von Eisen verschiedenen Metallkomponenten bzw. der Edelmetalle. Diese erfindungsgemäße Konzeption erhöht die Effizienz der Rückgewinnung der weiteren Metallkomponenten bzw. Edelmetalle somit insgesamt.

Bei dem erfindungsgemäß eingesetzten Kiesabbrand handelt es sich insbesondere um aus der Schwefelsäureherstellung stammenden Kiesabbrand. Kiesabbrand fällt im Rahmen der Schwefelsäureherstellung insbesondere als Abfall oder Rückstand an. Das erfindungsgemäße Verfahren ist dabei mit dem zentralen Vorteil verbunden, dass aus dem zugrundeliegenden Ausgangsmaterial - welches als Abfallstoff in großen Mengen vorliegt - eine Vielzahl von Rohstoffen auf Basis von Metallen bzw. Metallverbindungen gewonnen bzw. isoliert werden kann, wobei das erfindungsgemäße Verfahren in diesem Zusammenhang gleichermaßen eine hohe Selektivität in Bezug auf die aus dem Ausgangsmaterial zu gewinnenden Metallkomponenten ermöglicht. Insbesondere ermöglicht das erfindungsgemäße Verfahren auch eine effektive Rückgewinnung bzw. Aufreinigung von in dem Ausgangsmaterial vorhandenen Edelmetallen, wie Gold oder Silber. Insgesamt ist erfindungsgemäß somit eine umfängliche Verwertung des Ausgangsmaterials bei hoher Selektivität der Stoffauftrennung gegeben.

Aufgrund der speziellen Verfahrensführung gemäß der vorliegenden Erfindung ist zudem ein zumindest im Wesentlichen vollständiger Aufschluss des Ausgangsmaterials möglich, wobei gleichermaßen die Bereitstellung hochreiner Endprodukte aus dem Ausgangsmaterial ermöglicht wird, so dass insgesamt in Bezug auf die aufgereinigten Metallkomponenten auch hohe Qualitäten bzw. Stoffreinheiten gewährleistet sind.

Eine weitere zentrale Idee der vorliegenden Erfindung ist zudem darin zu sehen, dass das im Rahmen der Chlorierung der Metallkomponenten eingesetzte Chlorierungsmittel, welches erfindungsgemäß, wie nachfolgend geschildert, Ammoniumchlorid (NH₄Cl) ist, rezykliert bzw. regeneriert werden kann. In diesem Zusammenhang ist zudem herauszustellen, dass die zur Rezyklierung eingesetzten Komponenten bzw. Ausgangsstoffe gleichermaßen im Rahmen des erfindungsgemäßen Verfahrens bzw. Prozessablaufs selbst anfallen bzw. bereitgestellt werden, so dass auf diese Weise eine weitere Optimierung vorliegt, insbesondere da der zusätzliche Einsatz von Chemikalien zur Rezyklierung entfallen kann.

Was den Begriff "Rezyklierung" betrifft, wie dieser im Rahmen der vorliegenden Erfindung in Bezug auf das Chlorierungsmittel verwendet wird, so ist dieser Begriff sehr breit zu verstehen. Insbesondere bezieht sich der Begriff "Rezyklierung" auf eine erneute Gewinnung von zuvor im Rahmen des erfindungsgemäßen Verfahrens zur Chlorierung der Metallkomponenten eingesetztem und erschöpftem bzw. abgebautem Chlorierungsmittel. Dabei erfolgt die Rezyklierung insbesondere auf Basis chemischer Reaktionen, wonach insbesondere im Rahmen der Chlorierung von dem Chlorierungsmittel stammende Abbauprodukte isoliert und als Edukt im Rahmen nachfolgender chemischer Reaktionen mit einem entsprechenden Reaktionspartner zur erneuten Gewinnung des Chlorierungsmittels als Rezyklat eingesetzt werden. Wie nachfolgend noch im Detail angeführt, handelt es sich bei dem erfindungsgemäß eingesetzten Chlorierungsmittel um Ammoniumchlorid (NH₄Cl), wobei das im Rahmen der Chlorierung anfallende Abbauprodukt, nämlich Ammoniak (NH₃), mit einer anorganischen Chlorverbindung in Form von Chlorwasserstoff zur Reaktion gebracht wird, wodurch das Rezyklat, nämlich Ammoniumchlorid, erhalten wird, welches wiederum erneut als Chlorierungsmittel eingesetzt werden kann.

Dabei ist ein weiterer Vorteil des erfindungsgemäßen Verfahrens darin zu sehen, dass, wie zuvor angeführt, die zur Rezyklierung erforderlichen Ausgangssubstanzen insbesondere im Rahmen des erfindungsgemäßen Verfahrens selbst generiert werden bzw. anfallen, so dass in Bezug auf das Chlorierungsmittel gewissermaßen ein geschlossener Stoffkreislauf resultieren kann, und zwar insbesondere was den Chlorbestandteil anbelangt, einhergehend mit einer erhöhten Effizienz des erfindungsgemäßen Verfahrens bei gleichzeitig reduzierten Kosten und verbesserter ökologischer Bilanz. Im Rahmen der vorliegenden Erfindung ist es jedoch gleichermaßen möglich, dass die Edukte zur Rezyklierung des Chlorierungsmittels, insbesondere im Hinblick auf die anorganische Chlorverbindung, extern hinzugegeben werden können. Auch vor diesem Hintergrund weist das erfindungsgemäße Verfahren eine hohe Flexibilität auf, so dass das erfindungsgemäße Verfahren gewissermaßen vor dem Hintergrund des konkret durchgeführten Verfahrensablaufs, wie nachfolgend definiert, auch im Hinblick auf die Rezyklierung des Chlorierungsmittels gewissermaßen individuell angepasst bzw. maßgeschneidert werden kann.

Aufgrund der erfindungsgemäßen Verfahrensdurchführung resultiert ein gleichermaßen ökonomisch wie ökologisch optimiertes Verfahren mit einem verringerten Anfall von Abfallstoffen und Abgasen, wobei gleichzeitig auch der erforderliche Energieeinsatz zur Durchführung des Verfahrens verringert ist.

Zusammenfassend wird somit im Rahmen der vorliegenden Erfindung erstmals ein Verfahren zur gezielten bzw. selektiven Aufarbeitung insbesondere von Pyritrückständen, wie Kiesabbrand, bereitgestellt, welches eine effiziente und umfängliche Nutzung eines Abfallstoffs bzw. Rückstands, nämlich insbesondere von aus der Schwefelsäureherstellung stammenden Kiesabbrand, ermöglicht. Diesbezüglich ist auch von Bedeutung, dass die in Rede stehenden Pyritrückstände bzw. Kiesabbrände durch die jahrzehntelange Produktion von Schwefelsäure in großen Mengen zur Verwendung bereitliegen, so dass erfindungsgemäß auf entsprechend umfangreiche Ressourcen zurückgegriffen werden kann. In diesem Zusammenhang besteht ein weiterer Vorteil der erfindungsgemäßen Konzeption darin, dass auch unter umweltspezifischen Aspekten mitunter nicht unproblematische Lagerhalden der zuvor angeführten Pyritrückstände bzw. Kiesabbrände abgebaut bzw. verringert werden können.

Wie zuvor angeführt, weist das im Rahmen des erfindungsgemäßen Verfahrens eingesetzte Ausgangsmaterial eine Vielzahl von Metallen bzw. Metallkomponenten auf, wobei im Allgemeinen Eisen einen Hauptbestandteil darstellt. Was das zugrundeliegende Eisen sowie die weiteren metallischen Komponenten, wie Kupfer, Zink, Blei, Cobalt, Titan, Mangan, Vanadium und Chrom, anbelangt, so liegen diese in dem für das erfindungsgemäße Verfahren eingesetzten Ausgangsmaterial insbesondere nicht in metallischer Form als solcher, sondern vielmehr in Form von entsprechenden metallhaltigen Verbindungen, insbesondere in Form von Oxiden, vor, wobei die jeweiligen Metalle diesbezüglich auch in unterschiedlichen Oxidationsstufe vorliegen können. So verhält es sich für Eisen in Bezug auf das Ausgangsmaterial typischerweise so, dass Eisen beispielsweise als Eisen(II)-oxid, Eisen(II, III)-oxid und/oder Eisen(III)-oxid vorliegen kann, insbesondere wie nachfolgend noch angeführt. Darüber hinaus verhält es sich für die in dem Ausgangsmaterial vorhandenen Edelmetalle, vorzugsweise in Bezug auf Gold, derart, dass die jeweiligen Edelmetalle, vorzugsweise Gold, in metallischer Form in dem Ausgangsmaterial vorliegen. Was das im Ausgangsmaterial vorhandene Silber anbelangt, so kann dieses im Allgemeinen im Ausgangsmaterial in Form einer Verbindung, insbesondere als Oxid, aber auch in metallischer Form vorliegen.

Im Rahmen der vorliegenden Erfindung hat es sich als besonders vorteilhaft erwiesen, wenn in Verfahrensschritt (c) die Chlorierung unter Verwendung von Ammoniumchlorid als Chlorierungsmittel durchgeführt wird. Erfindungsgemäß wird somit in Verfahrensschritt (c) Ammoniumchlorid (NH₄Cl) als Chlorierungsmittel eingesetzt. In diesem Zusammenhang kann es insbesondere vorgesehen sein, dass das Ammoniumchlorid (NH₄Cl) als insbesondere partikulärer Feststoff und/oder als Reinsubstanz eingesetzt wird. Der erfindungsgemäß vorgesehene Einsatz eines speziellen Chlorierungsmittels in Form von Ammoniumchlorid ist insbesondere mit dem Vorteil verbunden, dass sich Ammoniumchlorid in hervorragender Weise zur Rezyklierung eignet und darüber hinaus gute Anwendungseigenschaften aufweist, insbesondere auch im Hinblick auf seine relativ geringe Toxizität und das Vorliegen als Feststoff, was die Dosierbarkeit verbessert.

Erfindungsgemäß kann das Chlorierungsmittel in Form von Ammoniumchlorid zu Zwecken der Chlorierung der Oxidationsprodukte bzw. vorgenannten Metalle der Chlorierungsvorrichtung zugeführt bzw. in die Chlorierungsvorrichtung eingebracht werden.

Insbesondere im Hinblick auf die Verwendung eines speziellen Chlorierungsmittels in Form von Ammoniumchlorid kann es sich im Rahmen des erfindungsgemäßen Verfahrens derart verhalten, dass in Verfahrensschritt (c) bei der Chlorierung insbesondere gasförmiges Ammoniak (NH₃) und gegebenenfalls insbesondere gasförmiges Wasser, vorzugsweise insbesondere gasförmiges Ammoniak (NH₃), resultiert bzw. resultieren. In diesem Zusammenhang kann insbesondere gasförmiges Ammoniak (NH₃) als aus der Chlorierung aus dem Chlorierungsmittel, insbesondere Ammoniumchlorid (NH₄Cl), hervorgehendes Umsetzungsprodukt resultieren. Hierzu kann insbesondere auf die nachfolgende Reaktionsgleichung (iii) verwiesen werden.

Erfindungsgemäß ist es insbesondere vorgesehen, dass das in Verfahrensschritt (c) eingesetzte Chlorierungsmittel, nämlich Ammoniumchlorid (NH₄Cl), durch Rückgewinnung und/oder Abtrennung von bei der Chlorierung der vorgenannten Metalle bzw. Oxidationsprodukte aus dem Chlorierungsmittel resultierenden Umsetzungsprodukten, nämlich von vorzugsweise gasförmigem Ammoniak (NH₃), und nachfolgende Reaktion der Umsetzungsprodukte, nämlich von vorzugsweise gasförmigem Ammoniak (NH₃), mit einer vorzugsweise anorganischen Chlorverbindung, nämlich Chlorwasserstoff (HCl), rezykliert wird.

Erfindungsgemäß wird die Rezyklierung des Chlorierungsmittels, nämlich Ammoniumchlorid (NH₄Cl), in einer Reaktions- bzw. Kondensationsvorrichtung durchgeführt.

In diesem Zusammenhang kann erfindungsgemäß beispielsweise derart verfahren werden, dass bei der Chlorierung der Metalle bzw. Oxidationsprodukte resultierendes Ammoniak (NH₃) aus der Chlorierungsvorrichtung abgeführt und in eine Reaktions- bzw. Kondensationsvorrichtung eingebracht wird und dort mit der ebenfalls in die Reaktions- bzw. Kondensationsvorrichtung eingebrachten anorganischen Chlorverbindung, nämlich Chlorwasserstoff (HCl), zum Erhalt von Ammoniumchlorid (NH₄Cl) zur Reaktion gebracht wird. Auf diese Weise kann das Chlorierungsmittel in Form von Ammoniumchlorid (NH₄Cl) rezykliert und dem Chlorierungsprozess erneut zugeführt werden. Aufgrund dieser erfindungsgemäßen Verfahrensweise wird somit eine weitere Verfahrensoptimierung im Rahmen der vorliegenden Erfindung gewährleistet.

Was die der Rezyklierung des Chlorierungsmittels zugrundeliegende Umsetzung bzw. Reaktion von Ammoniak (NH₃) einerseits und der anorganischen Chlorverbindung, nämlich Chlorwasserstoff (HCl), andererseits anbelangt, so kann diese insbesondere in der Gasphase erfolgen, insbesondere wobei resultierendes Ammoniumchlorid (NH₄Cl) in fester Phase resultiert bzw. kondensiert. Aufgrund dieser speziellen erfindungsgemäßen Verfahrensweise wird somit insbesondere partikuläres Ammoniumchlorid als Feststoff in hoher Reinheit erhalten, was mit entsprechenden Vorteilen bei der nachfolgenden Chlorierung einhergeht.

Insbesondere kann es somit im Rahmen der vorliegenden Erfindung vorgesehen sein, dass die aus dem Chlorierungsmittel resultierenden Umsetzungsprodukte, insbesondere nämlich Ammoniak (NH₃), einerseits und die vorzugsweise anorganische Chlorverbindung, insbesondere nämlich Chlorwasserstoff (HCl), andererseits in der Gasphase zum Erhalt von Ammoniumchlorid (NH₄Cl), vorzugsweise als insbesondere partikulärer Feststoff und/oder als Reinsubstanz, zur Reaktion gebracht werden.

Die zugrundeliegende Reaktion zur Rezyklierung von Ammoniumchlorid kann dabei insbesondere gemäß der nachfolgenden Reaktionsgleichung (i) erfolgen:

(i) NH₃ + HCl → NH₄Cl.

Erfindungsgemäß kann es weiterhin vorgesehen sein, dass das erhaltene bzw. rezyklierte Chlorierungsmittel, nämlich Ammoniumchlorid (NH₄Cl), in Verfahrensschritt (c) erneut eingesetzt wird, insbesondere durch erneute Zufuhr bzw. erneutes Einbringen in die Chlorierungsvorrichtung. Insbesondere kann das erhaltene bzw. rezyklierte Chlorierungsmittel, nämlich Ammoniumchlorid (NH₄Cl), den zu chlorierenden Oxidationsprodukten bzw. dem aus Verfahrensschritt (b) resultierendem Produktgemisch in Verfahrensschritt (c) erneut zugeführt werden.

Die vorzugsweise anorganische Chlorverbindung, nämlich Chlorwasserstoff (HCl), kann gemäß einer besonderen Ausführungsform der vorliegenden Erfindung durch die in Verfahrensschritt (d) gegebenenfalls durchgeführte Reduktion von Eisenchlorid, insbesondere unter Einsatz eines Reduktionsmittels, vorzugsweise Wasserstoff oder Erdgas (insbesondere Methan), bevorzugt Wasserstoff, erhalten werden. Beispielsweise kann die vorzugsweise anorganische Chlorverbindung, insbesondere Chlorwasserstoff (HCl), durch Reduktion von Eisenchlorid erhalten werden.

In diesem Zusammenhang kann es im Hinblick auf die Rezyklierung des Chlorierungsmittels erfindungsgemäß insbesondere vorgesehen sein, dass die vorzugsweise anorganische Chlorverbindung, insbesondere Chlorwasserstoff (HCl), durch die gegebenenfalls vorgesehene Reduktion von in Verfahrensschritt (c) erhaltenem Eisenchlorid, vorzugsweise Eisen(III)-chlorid (FeCl₃), insbesondere unter Einsatz eines Reduktionsmittels, vorzugsweise Wasserstoff oder Erdgas (insbesondere Methan), bevorzugt Wasserstoff, erhalten wird.

Gleichermaßen kann die zur Rezyklierung eingesetzte anorganische Chlorverbindung, insbesondere Chlorwasserstoff (HCl), auch aus der gegebenenfalls durchgeführten Reduktion der in Verfahrensschritt (c) erhaltenen Chloride der weiteren Metalle, insbesondere wie zuvor definiert, erhalten werden.

Aufgrund der erfindungsgemäßen Konzeption mit der speziellen Rezyklierung des Chlorierungsmittels können die jeweiligen Substanzen bzw. Edukte im Rahmen des erfindungsgemäßen Verfahrens selbst bereitgestellt werden, so dass hinsichtlich des Chlorierungsmittels gewissermaßen ein geschlossener Stoffkreislauf vorliegt, was wiederum mit einem reduzierten Chemikalieneinsatz und somit insbesondere auch mit einer verbesserten ökonomischen wie ökologischen Bilanz des erfindungsgemäßen Verfahrens einhergeht.

In Verfahrensschritt (d) sollte die Reduktion des abgetrennten und insbesondere sublimierten Eisenchlorids, insbesondere Eisen(III)-chlorid, unter Verwendung mindestens eines Reduktionsmittels durchgeführt werden. Als Reduktionsmittel wird in besonders bevorzugter Weise Wasserstoff eingesetzt werden. Insbesondere für den Fall, dass als Reduktionsmittel Wasserstoff eingesetzt wird, kann bei der zuvor beschriebenen Reduktion neben metallischem Eisen auch Chlorwasserstoff (HCl) resultieren.

In diesem Zusammenhang kann es gleichermaßen vorgesehen sein, dass, wie zuvor angeführt, der bei der Reduktion resultierende Chlorwasserstoff (HCl) zur Rezyklierung des Chlorierungsmittels, nämlich Ammoniumchlorid (NH₄Cl), eingesetzt wird, insbesondere wie zuvor definiert. In diesem Zusammenhang kann es gleichermaßen vorgesehen sein, dass das in Verfahrensschritt (c) bei der Chlorierung resultierende insbesondere gasförmige Ammoniak (NH₃) einerseits und der Chlorwasserstoff (HCl) andererseits zusammengeführt und/oder in Kontakt gebracht werden und zur Reaktion zum Erhalt des rezyklierten Chlorierungsmittels, nämlich Ammoniumchlorid (NH₄Cl), gebracht werden. Insbesondere kann in diesem Zusammenhang, wie zuvor beschrieben, in einer Reaktions- bzw. Kondensationsvorrichtung verfahren werden. In diesem Zusammenhang kann es erfindungsgemäß insbesondere vorgesehen sein, dass das gasförmige Ammoniak (NH₃) aus der Chlorierungsvorrichtung einerseits und der Chlorwasserstoff (HCl) andererseits aus der Reduktionsvorrichtung jeweils abgeführt und jeweils in die Reaktions- bzw. Kondensationsvorrichtung eingebracht und zum Erhalt von Ammoniumchlorid (NH₄Cl) zur Reaktion gebracht werden.

Das erfindungsgemäß erhaltene metallische Eisen zeichnet sich durch eine hohe Stoffreinheit aus. So kann es erfindungsgemäß der Fall sein, dass das erhaltene metallische Eisen eine Reinheit von mindestens 90 Gew.-%, insbesondere mindestens 95 Gew.-%, vorzugsweise mindestens 98 Gew.-%, bevorzugt mindestens 99 Gew.-%, besonders bevorzugt mindestens 99,5 Gew.%, ganz besonders bevorzugt mindestens 99,99 Gew.-%, berechnet als Element und bezogen auf das erhaltene metallische Eisen, aufweist.

Mit der hohen Reinheit des so erhaltenen metallischen Eisens gehen entsprechende positive Eigenschaften des Eisens einher, insbesondere im Hinblick auf eine hohe magnetische Sättigung, hohe elektrische Leitfähigkeit und gute Säurebeständigkeit. Das auf Basis des erfindungsgemäßen Verfahrens erhaltene, hochreine metallische Eisen entspricht als Handelsprodukt insbesondere auch den Qualitätsanforderungen bzw. Qualitätsmerkmalen von sogenanntem Carbonyl-Eisen oder ARMCO-Eisen.

Nicht zuletzt aufgrund des hohen Anteils an Eisen in dem zuvor angeführten Ausgangsmaterial können erfindungsgemäß insgesamt hohe Ausbeuten bei gleichzeitig hoher Produktqualität des erhaltenen metallischen Eisens realisiert werden.

Aufgrund der erfindungsgemäßen Verfahrensführung mit der gezielten Oxidation, Chlorierung und selektiven Sublimation kann die Eisenkomponente in effektiver Weise aus dem zugrundeliegenden Ausgangsmaterial isoliert werden, was zu hohen Produktausbeuten führt. In diesem Zusammenhang kann das in Verfahrensschritt (d) erhaltene und von Eisenchlorid, vorzugsweise Eisen(III)-chlorid (FeCl₃), befreite Produktgemisch einen (Rest-)Eisengehalt von weniger als 10 Gew.-%, insbesondere weniger als 5 Gew.-%, vorzugsweise weniger als 3 Gew.-%, berechnet als Element und bezogen auf das Trockengewicht des Produktgemischs, aufweisen. In entsprechender Weise steigt somit in Bezug auf das in Verfahrensschritt (d) erhaltene und von Eisen befreite Produktgemisch der relative Anteil der weiteren Komponenten, so dass diese sozusagen in Bezug auf das resultierende Produktgemisch aufkonzentriert werden, was auch deren nachfolgende Abtrennung bzw. Aufreinigung weiter verbessert und auch diesbezüglich zu höheren Ausbeuten führt.

Gemäß diesem Aspekt der vorliegenden Erfindung betrifft die vorliegende Erfindung somit gleichermaßen ein Verfahren zur (Rück-)Gewinnung von metallischem Eisen und/oder Eisenverbindungen, insbesondere Eisenchlorid, aus Erzen und/oder Erzrückständen in Form von Pyritrückständen, bevorzugt aus bei der Schwefelsäureherstellung anfallendem Kiesabbrand, insbesondere wie in einem der vorangehenden Ansprüche definiert, wobei das Verfahren die folgenden Verfahrensschritte umfasst:
(a) Bereitstellung, insbesondere Aufbereitung, eines Ausgangsmaterials in Form mindestens eines Erzes und/oder Erzrückstands, insbesondere mindestens eines Pyritrückstands, vorzugsweise mindestens eines bei der Schwefelsäureherstellung anfallenden Kiesabbrands, wobei das Ausgangsmaterial
   (i) Eisen als Hauptbestandteil und
   (ii) mindestens ein Edelmetall, ausgewählt aus Gold und/oder Silber, sowie
   (iii) mindestens ein weiteres Metall, ausgewählt aus der Gruppe von Kupfer, Zink, Blei, Cobalt, Titan, Mangan, Vanadium und Chrom, bevorzugt ausgewählt aus der Gruppe von Kupfer, Zink, Blei und Cobalt,
   enthält;
(b) Oxidationsbehandlung, insbesondere Calcinierung und/oder oxidative Röstung, des in Verfahrensschritt (a) bereitgestellten Ausgangsmaterials, vorzugsweise unter Verwendung mindestens eines Oxidationsmittels, insbesondere Sauerstoff, unter Erhalt von Eisenoxid und Oxiden der weiteren Metalle;
(c) Chlorierung der in Verfahrensschritt (b) erhaltenen Oxidationsprodukte unter Verwendung mindestens eines rezyklierbaren Chlorierungsmittels, umfassend die Chlorierung von Eisenoxid und Oxiden der weiteren Metalle unter Erhalt von Eisenchlorid, insbesondere Eisen(III)-chlorid, und Chloriden der weiteren Metalle,
   wobei die Chlorierung als Festphasenreaktion und unter Verwendung von Ammoniumchlorid als Chlorierungsmittel durchgeführt wird,
   wobei das Chlorierungsmittel, nämlich Ammoniumchlorid (NH₄Cl), durch Rückgewinnung und/oder Abtrennung von bei der Chlorierung der Oxidationsprodukte aus dem Chlorierungsmittel resultierenden Umsetzungsprodukten in Form von vorzugsweise gasförmigem Ammoniak (NH₃) und nachfolgende Reaktion der Umsetzungsprodukte in Form von vorzugsweise gasförmigem Ammoniak (NH₃) mit einer vorzugsweise anorganischen Chlorverbindung in Form von Chlorwasserstoff (HCl) rezykliert wird, wobei die Rezyklierung des Ammoniumchlorids in einer Reaktions- und Kondensationsvorrichtung durchgeführt wird, insbesondere wobei die vorzugsweise anorganische Chlorverbindung in Form von Chlorwasserstoff (HCl) durch die in Verfahrensschritt (d) gegebenenfalls durchgeführte Reduktion von Eisenchlorid, insbesondere unter Einsatz eines Reduktionsmittels, vorzugsweise Wasserstoff oder Erdgas (insbesondere Methan), bevorzugt Wasserstoff, erhalten wird, und
   wobei das erhaltene und/oder rezyklierte Chlorierungsmittel, nämlich Ammoniumchlorid (NH₄Cl), in Verfahrensschritt (c) erneut eingesetzt wird;
(d) selektive Abtrennung von Eisenchlorid aus dem in Verfahrensschritt (c) erhaltenen Produktgemisch und gegebenenfalls nachfolgende Abtrennung von Chloriden der weiteren Metalle aus dem von Eisenchlorid befreiten Produktgemisch, wobei die selektive Abtrennung von Eisenchlorid, insbesondere Eisen(III)-chlorid, mittels Sublimation des Eisenchlorids, insbesondere Eisen(III)-chlorid, erfolgt und das auf diese Weise selektiv abgetrennte Eisenchlorid, insbesondere Eisen(III)-chlorid, als solches mittels nachfolgender Desublimation gewonnen oder das auf diese Weise selektiv abgetrennte Eisenchlorid, insbesondere Eisen(III)-chlorid, einer Reduktion zum Erhalt von metallischem Eisen unterzogen wird;
wobei die vorgenannten Verfahrensschritte (a) bis (d) in der vorangehend angeführten Reihenfolge durchgeführt werden.

Was im Allgemeinen das im Rahmen des erfindungsgemäßen Verfahrens eingesetzte Ausgangsmaterial, insbesondere in Form von Pyritrückständen bzw. Kiesabbrand, anbelangt, so kann das Ausgangsmaterial Eisen in Form mindestens eines Eisenoxids enthalten. In diesem Zusammenhang kann es insbesondere vorgesehen sein, dass das Ausgangsmaterial Eisenoxid in Form von Eisen(II)-oxid (FeO), Eisen(III)-oxid (Fe₂O₃) und/oder Eisen(II, III)-oxid (Fe₃O₄) enthält.

In diesem Zusammenhang kann das Ausgangsmaterial Eisen, insbesondere in Form von Eisenoxid, in Mengen im Bereich von 10 Gew.-% bis 75 Gew.-%, insbesondere im Bereich von 20 Gew.-% bis 70 Gew.-%, vorzugsweise im Bereich von 30 Gew.-% bis 65 Gew.-%, bevorzugt im Bereich von 40 Gew.-% bis 60 Gew.-%, berechnet als Element und bezogen auf das Trockengewicht des Ausgangsmaterials, enthalten. Wie zuvor angeführt, stellt Eisen somit die Hauptkomponente des aufzuarbeitenden Ausgangsmaterials dar, so dass auch vor diesem Hintergrund im Rahmen des erfindungsgemäßen Verfahrens hohe Rückgewinnungsmengen bzw. Ausbeuten in Bezug auf Eisen ermöglicht werden.

Darüber hinaus kann das Ausgangsmaterial das Edelmetall, insbesondere Gold und/oder Silber, in Mengen im Bereich von 0,1 g/t bis 300 g/t, insbesondere im Bereich von 0,5 g/t bis 200 g/t, vorzugsweise im Bereich von 0,75 g/t bis 100 g/t, bevorzugt im Bereich von 1 g/t bis 50 g/t, berechnet als Element und bezogen auf das Trockengewicht des Ausgangsmaterials, enthalten. Die obigen Angaben beziehen sich auf die Summe der genannten Metalle in dem Ausgangsmaterial.

Insbesondere kann das Ausgangsmaterial Gold in Form von metallischem Gold enthalten. Gold liegt insbesondere auch von daher in metallischer Form vor, dass es aufgrund der edlen Stoffeigenschaften des Elements einer Verbrennung in Anwesenheit von Sauerstoff nicht zugänglich ist.

Insbesondere kann das Ausgangsmaterial in diesem Zusammenhang Gold in Mengen im Bereich von 0,1 g/t bis 15 g/t, insbesondere im Bereich von 0,2 g/t bis 10 g/t, vorzugsweise im Bereich von 0,5 g/t bis 8 g/t, bevorzugt im Bereich von 1 g/t bis 5 g/t, berechnet als Element und bezogen auf das Trockengewicht des Ausgangsmaterials, enthalten.

Darüber hinaus kann das Ausgangsmaterial Silber in Form von metallischem Silber bzw. in Form von Silberoxid, insbesondere Silber(I)-oxid, enthalten. Silber ist im Allgemeinen als Edelmetall relativ reaktionsträge, ist jedoch weniger edel als Gold, so dass Silber in dem Ausgangsmaterial zumindest teilweise auch in Form von Silberoxid, wie zuvor angeführt, vorliegen kann.

Was das Edelmetall Silber in dem Ausgangsmaterial weiterhin anbelangt, so kann das Ausgangsmaterial Silber in Mengen im Bereich von 1 g/t bis 300 g/t, insbesondere im Bereich von 2 g/t bis 200 g/t, vorzugsweise im Bereich von 3 g/t bis 100 g/t, bevorzugt im Bereich von 5 g/t bis 50 g/t, berechnet als Element und bezogen auf das Trockengewicht des Ausgangsmaterials, enthalten.

Aufgrund des Vorhandenseins von Edelmetallen, insbesondere Gold und/oder Silber, in relevanten Mengen ist das Ausgangsmaterial auch in Bezug auf die Rückgewinnung dieser Edelmetalle von wirtschaftlicher Bedeutung. Insbesondere wird auf Basis des erfindungsgemäßen Verfahrens - neben der Gewinnung von Eisen und weiteren wirtschaftlich interessanten Produkten - auch eine effiziente und kostengünstige Methode zur Rückgewinnung von Edelmetallen, wie Gold bzw. Silber, aus dem zugrundeliegenden Ausgangsmaterial bereitgestellt, was zu einer signifikanten Steigerung der Wirtschaftlichkeit des erfindungsgemäßen Verfahrens führt, da die Edelmetallkomponenten im Allgemeinen einen hohen materiellen Wert aufweisen.

Weiterhin kann das Ausgangsmaterial das weitere Metall, insbesondere Kupfer, Zink, Blei, Cobalt, Titan, Mangan, Vanadium und/oder Chrom, vorzugsweise Kupfer, Zink, Blei und/oder Cobalt, in Mengen im Bereich von 0,001 Gew.-% bis10 Gew.-%, insbesondere im Bereich von 0,005 Gew.-% bis 5 Gew.-%, vorzugsweise im Bereich von 0,0075 Gew.-% bis 3 Gew.-%, bevorzugt im Bereich von 0,01 Gew.-% bis 2 Gew.-%, berechnet als Element und bezogen auf das Trockengewicht des Ausgangsmaterials, enthalten. Die obigen Angaben beziehen sich auf die Summe der genannten Metalle in dem Ausgangsmaterial.

Was in diesem Zusammenhang das weitere Metall in Form von Kupfer anbelangt, so kann das Ausgangsmaterial Kupfer in Form von Kupferoxid, insbesondere Kupfer(I)-oxid und/oder Kupfer(II)-oxid enthalten.

In diesem Zusammenhang kann das Ausgangsmaterial Kupfer, insbesondere in Form von Kupferoxid, in Mengen im Bereich von 0,01 Gew.-% bis 5 Gew.-%, insbesondere im Bereich von 0,05 Gew.-% bis 3 Gew.-%, vorzugsweise im Bereich von 0,075 Gew.-% bis 2 Gew.-%, bevorzugt im Bereich von 0,1 Gew.-% bis 1 Gew.-%, berechnet als Element und bezogen auf das Trockengewicht des Ausgangsmaterials, enthalten.

Was zudem das weitere Metall in Form von Zink anbelangt, so kann das Ausgangsmaterial Zink in Form von Zinkoxid, insbesondere Zink(II)-oxid, enthalten.

In diesem Zusammenhang kann das Ausgangsmaterial Zink, insbesondere in Form von Zinkoxid, in Mengen im Bereich von 0,02 Gew.-% bis 10 Gew.-%, insbesondere im Bereich von 0,075 Gew.-% bis 5 Gew.-%, vorzugsweise im Bereich von 0,1 Gew.-% bis 3 Gew.-%, bevorzugt im Bereich von 0,2 Gew.-% bis 2 Gew.-%, berechnet als Element und bezogen auf das Trockengewicht des Ausgangsmaterials, enthalten.

Was darüber hinaus das weitere Metall in Form von Blei anbelangt, so kann das Ausgangsmaterial Blei in Form von Bleioxid, insbesondere Blei(II)-oxid, enthalten.

In diesem Zusammenhang kann das Ausgangsmaterial Blei, insbesondere in Form von Bleioxid, in Mengen im Bereich von 0,01 Gew.-% bis 5 Gew.-%, insbesondere im Bereich von 0,05 Gew.-% bis 4 Gew.-%, vorzugsweise im Bereich von 0,1 Gew.-% bis 2 Gew.-%, bevorzugt im Bereich von 0,15 Gew.-% bis 1,5 Gew.-%, berechnet als Element und bezogen auf das Trockengewicht des Ausgangsmaterials, enthalten.

Was darüber hinaus das weitere Metall in Form von Cobalt anbelangt, so kann das Ausgangsmaterial Cobalt in Form von Cobaltoxid, insbesondere Cobalt(II)-oxid, enthalten.

Diesbezüglich kann das Ausgangsmaterial Cobalt, insbesondere in Form von Cobaltoxid, in Mengen im Bereich von 0,001 Gew.-% bis 2 Gew.-%, insbesondere im Bereich von 0,005 Gew.-% bis 1 Gew.-%, vorzugsweise im Bereich von 0,0075 Gew.-% bis 0,5 Gew.-%, bevorzugt im Bereich von 0,01 Gew.-% bis 0,1 Gew.-%, berechnet als Element und bezogen auf das Trockengewicht des Ausgangsmaterials, enthalten.

Was darüber hinaus das weitere Metall in Form von Titan anbelangt, so kann das Ausgangsmaterial Titan in Form von Titanoxid enthalten.

Diesbezüglich kann das Ausgangsmaterial Titan, insbesondere in Form von Titanoxid, in Mengen im Bereich von 0,001 Gew.-% bis 2 Gew.-%, insbesondere im Bereich von 0,005 Gew.-% bis 1 Gew.-%, vorzugsweise im Bereich von 0,0075 Gew.-% bis 0,5 Gew.-%, bevorzugt im Bereich von 0,01 Gew.-% bis 0,1 Gew.-%, berechnet als Element und bezogen auf das Trockengewicht des Ausgangsmaterials, enthalten.

Was zudem das weitere Metall in Form von Mangan anbelangt, so kann das Ausgangsmaterial Mangan in Form von Manganoxid enthalten.

Diesbezüglich kann das Ausgangsmaterial Mangan, insbesondere in Form von Manganoxid, in Mengen im Bereich von 0,001 Gew.-% bis 2 Gew.-%, insbesondere im Bereich von 0,005 Gew.-% bis 1 Gew.-%, vorzugsweise im Bereich von 0,0075 Gew.-% bis 0,5 Gew.-%, bevorzugt im Bereich von 0,01 Gew.-% bis 0,1 Gew.-%, berechnet als Element und bezogen auf das Trockengewicht des Ausgangsmaterials, enthalten.

Was darüber hinaus das weitere Metall in Form von Vanadium anbelangt, so kann das Ausgangsmaterial Vanadium in Form von Vanadiumoxid enthalten.

Diesbezüglich kann das Ausgangsmaterial Vanadium, insbesondere in Form von Vanadiumoxid, in Mengen im Bereich von 0,001 Gew.-% bis 2 Gew.-%, insbesondere im Bereich von 0,005 Gew.-% bis 1 Gew.-%, vorzugsweise im Bereich von 0,0075 Gew.-% bis 0,5 Gew.-%, bevorzugt im Bereich von 0,01 Gew.-% bis 0,1 Gew.-%, berechnet als Element und bezogen auf das Trockengewicht des Ausgangsmaterials, enthalten.

Was darüber hinaus das weitere Metall in Form von Chrom anbelangt, so kann das Ausgangsmaterial Chrom in Form von Chromoxid enthalten.

Diesbezüglich kann das Ausgangsmaterial Chrom, insbesondere in Form von Chromoxid, in Mengen im Bereich von 0,001 Gew.-% bis 2 Gew.-%, insbesondere im Bereich von 0,005 Gew.-% bis 1 Gew.-%, vorzugsweise im Bereich von 0,0075 Gew.-% bis 0,5 Gew.-%, bevorzugt im Bereich von 0,01 Gew.-% bis 0,1 Gew.-%, berechnet als Element und bezogen auf das Trockengewicht des Ausgangsmaterials, enthalten.

Darüber hinaus kann das Ausgangsmaterial mindestens ein Halbmetall enthalten. Insbesondere kann das Halbmetall ausgewählt werden aus der Gruppe von Silicium, Arsen, Selen, Antimon, Tellur und deren Kombinationen, insbesondere Silicium. Dabei kann das Ausgangsmaterial das Halbmetall, insbesondere Silicium, Arsen, Selen, Antimon und/oder Tellur, in Mengen im Bereich von 1 Gew.-% bis 40 Gew.-%, insbesondere im Bereich von 2 Gew.-% bis 30 Gew.-%, vorzugsweise im Bereich von 3 Gew.-% bis 20 Gew.-%, bevorzugt im Bereich von 4 Gew.-% bis 15 Gew.-%, berechnet als Elemente und bezogen auf das Trockengewicht des Ausgangsmaterials, enthalten. Die obigen Angaben beziehen sich auf die Summe der genannten Halbmetalle in dem Ausgangsmaterial.

Weiterhin kann das Ausgangsmaterial mindestens ein Übergangsmetall, insbesondere Mangan und/oder Molybdän, enthalten.

Insbesondere kann das Ausgangsmaterial Silicium, insbesondere in Form von Siliciumoxid, bevorzugt Siliciumdioxid (SiO₂), enthalten.

Insbesondere kann das Ausgangsmaterial Silicium, insbesondere in Form von Siliciumoxid, in Mengen im Bereich von 0,5 Gew.-% bis 30 Gew.-%, insbesondere im Bereich von 1 Gew.-% bis 20 Gew.-%, vorzugsweise im Bereich von 2 Gew.-% bis 15 Gew.-%, bevorzugt im Bereich von 3 Gew.-% bis 10 Gew.-%, berechnet als Element und bezogen auf das Trockengewicht des Ausgangsmaterials, enthalten.

Weiterhin kann das Ausgangsmaterial Arsen enthalten, insbesondere in Mengen von höchstens 1 Gew.-%, insbesondere höchstens 0,5 Gew.-%, vorzugsweise höchstens 0,3 Gew.-%, berechnet als Element und bezogen auf das Trockengewicht des Ausgangsmaterials.

Das Ausgangsmaterial kann darüber hinaus mindestens ein Alkali- und/oder Erdalkalimetall, insbesondere mindestens ein Erdalkalimetall, vorzugsweise Calcium, enthalten.

Insbesondere kann das Alkali- und/oder Erdalkalimetall, insbesondere das Erdalkalimetall, vorzugsweise Calcium, in Form mindestens eines Salzes, insbesondere Sulfats, vorliegen. Insbesondere kann das Ausgangsmaterial Calciumsulfat enthalten.

In diesem Zusammenhang kann das Ausgangsmaterial das Alkali- und/oder Erdalkalimetall, insbesondere das Erdalkalimetall, vorzugsweise Calcium, bevorzugt in Form von Calciumsulfat, in Mengen im Bereich von 0,2 Gew.-% bis 20 Gew.-%, insbesondere im Bereich von 0,5 Gew.-% bis 15 Gew.-%, vorzugsweise im Bereich von 1 Gew.-% bis 10 Gew.-%, bevorzugt im Bereich von 2 Gew.-% bis 8 Gew.-%, berechnet als Element und bezogen auf das Trockengewicht des Ausgangsmaterials, enthalten.

Darüber hinaus kann das Ausgangsmaterial mindestens ein Nichtmetall, insbesondere ausgewählt aus der Gruppe von Kohlenstoff, Stickstoff, Schwefel und Phosphor, insbesondere Schwefel, vorzugsweise in Form der jeweiligen Salze, enthalten.

In diesem Zusammenhang kann das Ausgangsmaterial Schwefel, insbesondere in Form von schwefelhaltigen Salzen, vorzugsweise Sulfiden, wie Eisendisulfid, und/oder besonders bevorzugt Sulfaten, enthalten.

In diesem Zusammenhang kann das Ausgangsmaterial Schwefel in Mengen im Bereich von 0,2 Gew.-% bis 15 Gew.-%, insbesondere im Bereich von 0,5 Gew.-% bis 10 Gew.-%, vorzugsweise im Bereich von 1 Gew.-% bis 8 Gew.-%, bevorzugt im Bereich von 1,5 Gew.-% bis 6 Gew.-%, berechnet als Element und bezogen auf das Trockengewicht des Ausgangsmaterials, enthalten.

Erfindungsgemäß kann es insbesondere der Fall sein, dass das Ausgangsmaterial, insbesondere der Pyritrückstand bzw. der Kiesabbrand, die folgenden Inhaltsstoffe, jeweils berechnet als Element und jeweils bezogen auf das Trockengewicht des Ausgangsmaterials, umfasst:
- Eisen, insbesondere in Form von Eisenoxid, beispielsweise in Mengen im Bereich von 10 Gew.-% bis 75 Gew.-%, insbesondere im Bereich von 20 Gew.-% bis 70 Gew.-%, vorzugsweise im Bereich von 30 Gew.-% bis 65 Gew.-%, bevorzugt im Bereich von 40 Gew.-% bis 60 Gew.-%;
- Gold, insbesondere in Mengen im Bereich von 0,1 g/t bis 15 g/t, insbesondere im Bereich von 0,2 g/t bis 10 g/t, vorzugsweise im Bereich von 0,5 g/t bis 8 g/t, bevorzugt im Bereich von 1 g/t bis 5 g/t;
- Silber, insbesondere in Mengen im Bereich von 1 g/t bis 300 g/t, insbesondere im Bereich von 2 g/t bis 200 g/t, vorzugsweise im Bereich von 3 g/t bis 100 g/t, bevorzugt im Bereich von 5 g/t bis 50 g/t;
- Kupfer, insbesondere in Form von Kupferoxid, beispielsweise in Mengen im Bereich von 0,01 Gew.-% bis 5 Gew.-%, insbesondere im Bereich von 0,05 Gew.-% bis 3 Gew.-%, vorzugsweise im Bereich von 0,075 Gew.-% bis 2 Gew.-%, bevorzugt im Bereich von 0,1 Gew.-% bis 1 Gew.-%;
- Zink, insbesondere in Form von Zinkoxid, beispielsweise in Mengen im Bereich von 0,02 Gew.-% bis 10 Gew.-%, insbesondere im Bereich von 0,075 Gew.-% bis 5 Gew.-%, vorzugsweise im Bereich von 0,1 Gew.-% bis 3 Gew.-%, bevorzugt im Bereich von 0,2 Gew.-% bis 2 Gew.-%;
- Blei, insbesondere in Form von Bleioxid, beispielsweise in Mengen im Bereich von 0,01 Gew.-% bis 5 Gew.-%, insbesondere im Bereich von 0,05 Gew.-% bis 4 Gew.-%, vorzugsweise im Bereich von 0,1 Gew.-% bis 2 Gew.-%, bevorzugt im Bereich von 0,15 Gew.-% bis 1,5 Gew.-%;
- Cobalt, insbesondere in Form von Cobaltoxid, beispielsweise in Mengen im Bereich von 0,001 Gew.-% bis 2 Gew.-%, insbesondere im Bereich von 0,005 Gew.-% bis 1 Gew.-%, vorzugsweise im Bereich von 0,0075 Gew.-% bis 0,5 Gew.-%, bevorzugt im Bereich von 0,01 Gew.-% bis 0,1 Gew.-%;
- Titan, insbesondere in Form von Titanoxid, beispielsweise in Mengen im Bereich von 0,001 Gew.-% bis 2 Gew.-%, insbesondere im Bereich von 0,005 Gew.-% bis 1 Gew.-%, vorzugsweise im Bereich von 0,0075 Gew.-% bis 0,5 Gew.-%, bevorzugt im Bereich von 0,01 Gew.-% bis 0,1 Gew.-%;
- Mangan, insbesondere in Form von Manganoxid, beispielsweise in Mengen im Bereich von 0,001 Gew.-% bis 2 Gew.-%, insbesondere im Bereich von 0,005 Gew.-% bis 1 Gew.-%, vorzugsweise im Bereich von 0,0075 Gew.-% bis 0,5 Gew.-%, bevorzugt im Bereich von 0,01 Gew.-% bis 0,1 Gew.-%;
- Vanadium, insbesondere in Form von Vanadiumoxid, beispielsweise in Mengen im Bereich von 0,001 Gew.-% bis 2 Gew.-%, insbesondere im Bereich von 0,005 Gew.-% bis 1 Gew.-%, vorzugsweise im Bereich von 0,0075 Gew.-% bis 0,5 Gew.-%, bevorzugt im Bereich von 0,01 Gew.-% bis 0,1 Gew.-%;
- Chrom, insbesondere in Form von Chromoxid, beispielsweise in Mengen im Bereich von 0,001 Gew.-% bis 2 Gew.-%, insbesondere im Bereich von 0,005 Gew.-% bis 1 Gew.-%, vorzugsweise im Bereich von 0,0075 Gew.-% bis 0,5 Gew.-%, bevorzugt im Bereich von 0,01 Gew.-% bis 0,1 Gew.-%;
- Silicium, insbesondere in Form von Siliciumdioxid, beispielsweise in Mengen im Bereich von 0,5 Gew.-% bis 30 Gew.-%, insbesondere im Bereich von 1 Gew.-% bis 20 Gew.-%, vorzugsweise im Bereich von 2 Gew.-% bis 15 Gew.-%, bevorzugt im Bereich von 3 Gew.-% bis 10 Gew.-%;
- Arsen, beispielsweise in Mengen von höchstens 1 Gew.-%, insbesondere höchstens 0,5 Gew.-%, vorzugsweise höchstens 0,3 Gew.-%;
- Calcium, insbesondere in Form von Calciumsulfat, beispielsweise in Mengen im Bereich von 0,2 Gew.-% bis 20 Gew.-%, insbesondere im Bereich von 0,5 Gew.-% bis 15 Gew.-%, vorzugsweise im Bereich von 1 Gew.-% bis 10 Gew.-%; und/oder
- Schwefel, insbesondere in Form von schwefelhaltigen Salzen, beispielsweise in Mengen im Bereich von 0,2 Gew.-% bis 15 Gew.-%, insbesondere im Bereich von 0,5 Gew.-% bis 10 Gew.-%, vorzugsweise im Bereich von 1 Gew.-% bis 8 Gew.-%, bevorzugt im Bereich von 1,5 Gew.-% bis 6 Gew.-%.

Das Ausgangsmaterial kann dabei die folgenden Inhaltsstoffe, jeweils bezogen auf das Trockengewicht des Ausgangsmaterials, umfassen:
- Eisen(II, III)-oxid (Fe₃O₄), insbesondere in Mengen im Bereich von 10 Gew.-% bis 80 Gew.-%, insbesondere im Bereich von 20 Gew.-% bis 70 Gew.-%, vorzugsweise im Bereich von 30 Gew.-% bis 60 Gew.-%;
- Eisen(III)-oxid (Fe₂O₃), insbesondere in Mengen im Bereich von 5 Gew.-% bis 50 Gew.-%, insbesondere im Bereich von 10 Gew.-% bis 40 Gew.-%, vorzugsweise im Bereich von 15 Gew.-% bis 30 Gew.-%;
- Siliciumdioxid, insbesondere in Mengen im Bereich von 2 Gew.-% bis 30 Gew.-%, insbesondere im Bereich von 5 Gew.-% bis 25 Gew.-%, vorzugsweise im Bereich von 10 Gew.-% bis 20 Gew.-%; und/oder
- Calciumsulfat, insbesondere in Mengen im Bereich von 1 Gew.-% bis 25 Gew.-%, insbesondere im Bereich von 2 Gew.-% bis 20 Gew.-%, vorzugsweise im Bereich von 5 Gew.-% bis 15 Gew.-%.

Das zugrundeliegende Ausgangsmaterial in Form von Pyritrückständen bzw. Kiesabbrand, wie er insbesondere bei der Herstellung von Schwefelsäure anfällt, weist somit neben Eisen, insbesondere in Form von Eisenoxiden, als Hauptbestandteil auch zahlreiche weitere Metalle bzw. Edelmetalle auf, so dass das erfindungsgemäß eingesetzte Ausgangsmaterial, sich in hervorragender Weise zum Einsatz im Rahmen der vorliegenden Erfindung eignet, da eine Vielzahl verschiedener technisch sowie wirtschaftlich relevanter Komponenten auf Basis von Metallen bzw. Edelmetallen aus dem Ausgangsmaterial erhalten bzw. rückgewonnen wird, wobei das erfindungsgemäße Verfahren diesbezüglich eine selektive und umfängliche Rückgewinnung der in Rede stehenden Komponenten, insbesondere auch in Form der jeweiligen Metalle, ermöglicht.

Was das erfindungsgemäße Verfahren als solches anbelangt, so kann es erfindungsgemäß vorgesehen sein, dass in Verfahrensschritt (a) bzw. vor Durchführung von Verfahrensschritt (b) eine Zerkleinerung bzw. Homogenisierung des Ausgangsmaterials durchgeführt wird. Insbesondere kann das Ausgangsmaterial auf mittlere Teilchengrößen, insbesondere mittlere Teilchengrößen D₅₀, im Bereich von 0,1 µm bis 10 cm, insbesondere 1 µm bis 5 cm, vorzugsweise 100 µm bis 1 cm, bevorzugt 500 µm bis 0,5 cm, eingestellt werden. Hierzu können übliche und dem Fachmann an sich wohlbekannte Zerkleinerungsvorrichtungen, wie Brech- bzw. Mahlvorrichtungen, eingesetzt werden. Die Teilchengrößenbestimmung kann gleichermaßen mit dem Fachmann an sich wohlbekannten Verfahren, beispielsweise auf Basis von Lichtmikroskopie, Röntgenbeugung, Lichtbeugung, wie Laserdiffraktometrie, durchgeführt werden. Die gegebenenfalls im Rahmen des erfindungsgemäßen Verfahrens vorgesehene Zerkleinerung insbesondere zum Erhalt einheitlicher Teilchengrößen des zugrundeliegenden Ausgangsmaterials führt zu einer besseren Handhabbarkeit sowie zu einer verbesserten Rückgewinnung der jeweiligen Metallbestandteile, insbesondere aufgrund eines verbesserten Aufschlusses des Materials und dergleichen.

Weiterhin kann es im Rahmen der vorliegenden Erfindung vorgesehen sein, dass in Verfahrensschritt (a) und/oder vor Durchführung von Verfahrensschritt (b) eine Trocknung des Ausgangsmaterials durchgeführt wird. In diesem Zusammenhang kann das Ausgangsmaterial auf Temperaturen im Bereich von 50 °C bis 180 °C, insbesondere 80 °C bis 160 °C, vorzugsweise 100 °C bis 140 °C, erwärmt werden. Erfindungsgemäß ist es dabei von Vorteil, wenn das Ausgangsmaterial auf eine Restfeuchte von höchstens 5 Gew.-%, insbesondere höchstens 3 Gew.-%, vorzugsweise höchstens 2 Gew.-%, bevorzugt höchstens 1 Gew.-%, bezogen auf das getrocknete Ausgangsmaterial, eingestellt wird. Die Einstellung des Ausgangsmaterials auf eine definierte Restfeuchte, wie zuvor definiert, führt insbesondere zu einem weiterführend verbesserten Verfahrensablauf sowohl im Hinblick auf die Handhabbarkeit des Ausgangsmaterials als auch in Bezug auf die dem erfindungsgemäßen Verfahren zugrundeliegenden chemischen Reaktionsabläufe.

Was das erfindungsgemäße Verfahren weiterhin anbelangt, so ist es erfindungsgemäß von Vorteil, wenn in Verfahrensschritt (b) die Oxidationsbehandlung als Festphasenreaktion durchgeführt wird. Insbesondere sollte die Oxidationsbehandlung unter Erwärmung des Ausgangsmaterials durchgeführt werden. Insbesondere kann die Oxidationsbehandlung bei Temperaturen im Bereich von 500 °C bis 1.000 °C, insbesondere im Bereich von 600 °C bis 900 °C, vorzugsweise im Bereich von 650 °C bis 950 °C, durchgeführt werden. In erfindungsgemäß bevorzugter Weise sollte die Oxidationsbehandlung unter Verwendung bzw. in Gegenwart eines vorzugsweise gasförmigen Oxidationsmittels, insbesondere Luft und/oder Sauerstoff, durchgeführt werden.

In diesem Zusammenhang kann die Oxidationsbehandlung im Allgemeinen in dem Fachmann grundsätzlich bekannten, für diesen Zweck geeigneten Vorrichtungen durchgeführt werden. Insbesondere kann die Oxidationsbehandlung in einer Oxidations- und/oder Röstvorrichtung durchgeführt werden. In diesem Zusammenhang kann die Oxidations- und/oder Röstvorrichtung beispielsweise ausgewählt werden aus der Gruppe von Drehrohröfen, Trommelöfen, Wirbelschichtöfen und Flugstromreaktoren.

Insbesondere ist es erfindungsgemäß vorgesehen, dass bei der Oxidationsbehandlung in Verfahrensschritt (b) Eisen zumindest im Wesentlichen vollständig in die dreiwertige und/oder trivalente Form, insbesondere in Eisen(III), vorzugsweise in Eisen(III)-Oxid, überführt wird. Insbesondere wird bei der Oxidationsbehandlung in Verfahrensschritt (b) somit Eisen(III) erhalten. Zudem kann es in Verfahrensschritt (b) vorgesehen sein, dass bei der Oxidationsbehandlung Eisen(II, III)-oxid und/oder Eisen(II)-oxid in Eisen(III)-oxid überführt werden.

Bei der Oxidationsbehandlung in Verfahrensschritt (b) wird somit eine zumindest im Wesentlichen vollständige Umsetzung der verschiedenen Oxidationsstufen bzw. Oxide von Eisen in dem Ausgangsmaterial zu Eisen(III)-oxid gewährleistet. Insbesondere kann die Umsetzung der jeweiligen Eisenoxide zu Eisen(III)-oxid gemäß der folgenden Reaktionsgleichung (ii) bzw. (iii) erfolgen:

(ii) 2 Fe₃O₄ + ½ O₂ → 3 Fe₂O₃ bzw.

(iii) 4 FeO + 3 O₂ → 2 Fe₂O₃

Die Umsetzung von Eisen zu Eisen(III)-oxid wird insbesondere vor dem Hintergrund durchgeführt, dass erfindungsgemäß eine nachgeschaltete bzw. nachfolgende Chlorierung zum Erhalt von Eisen(III)-chlorid (FeCl₃) vorgesehen ist, welches im Hinblick auf die erfindungsgemäße Verfahrensführung über optimale Sublimations- und damit Abtrennungseigenschaften verfügt, wie nachfolgend noch angeführt.

Im Rahmen der Oxidationsbehandlung in Verfahrensschritt (b) kann es gleichermaßen vorgesehen sein, dass auch die weiteren Metalle, insbesondere wie zuvor definiert, vorzugsweise Kupfer, Zink, Blei, Cobalt, Titan, Mangan, Vanadium und/oder Chrom, bevorzugt Kupfer, Zink, Blei und/oder Cobalt, und gegebenenfalls das Edelmetall in Form von Silber in jeweils einheitliche Oxidationsstufen überführt werden, insbesondere in die jeweils höchste Oxidationsstufe des Metalls.

In diesem Zusammenhang kann das bei bzw. nach der Oxidationsbehandlung in Verfahrensschritt (b) erhaltene Produktgemisch Eisen(III)-oxid in Mengen im Bereich von 10 Gew.-% bis 95 Gew.-%, insbesondere im Bereich von 20 Gew.-% bis 90 Gew.-%, vorzugsweise im Bereich von 40 Gew.-% bis 85 Gew.-%, bezogen auf das Trockengewicht des in Verfahrensschritt (b) erhaltenen Produktgemischs, enthalten. Im Rahmen der vorliegenden Erfindung werden die in dem Ausgangsmaterial enthaltenen Eisenoxide somit vorzugsweise zumindest im Wesentlichen zu Eisen(III)-oxid umgesetzt.

Im Rahmen der Oxidationsbehandlung kann es gleichermaßen vorgesehen sein, dass auch die weiteren Metalle, insbesondere Kupfer, Zink, Blei und/oder Cobalt, weiterführend oxidiert werden, insbesondere zum Erhalt von Kupfer(II)-oxid, Zink(II)-oxid, Blei(II)-oxid und/oder Cobalt(II)-oxid. Auch dies ist der nachfolgenden Chlorierung dieser Metalle zuträglich. Entsprechendes gilt für die Metalle Titan, Mangan, Vanadium und Chrom.

Somit ist es erfindungsgemäß insbesondere vorgesehen, dass das bei der Oxidationsbehandlung in Verfahrensschritt (b) erhaltene Produktgemisch das weitere Metall in Form des Metalloxids, vorzugsweise in Form von Kupfer(II)-oxid, Zink(II)-oxid, Blei(II)-oxid und Cobalt(II)-oxid, enthält. Insbesondere kann das bei der Oxidationsbehandlung in Verfahrensschritt (b) erhaltene Produktgemisch Silberoxid enthalten. Somit kann gegebenenfalls auch eine weiterführende Oxidation des Edelmetalls in Form von Silber im Rahmen der Oxidationsbehandlung vorliegen.

Darüber hinaus kann das aus der Oxidation resultierende Produktgemisch Siliciumdioxid (SiO₂) sowie Calciumsulfat (CaSO₄) enthalten, welche sozusagen jeweils zumindest im Wesentlichen unverändert in dem Produktgemisch verbleiben.

Was die im Rahmen des erfindungsgemäßen Verfahrens nachfolgend durchgeführte Chlorierung insbesondere der in Verfahrensschritt (b) resultierenden Oxide von Eisen bzw. der in Verfahrensschritt (b) resultierenden Oxide der weiteren Metalle bzw. gegebenenfalls von Silberoxid anbelangt, so ist es erfindungsgemäß vorgesehen, dass in Verfahrensschritt (c) die Chlorierung als Festphasenreaktion durchgeführt wird.

In diesem Zusammenhang sollten in Verfahrensschritt (c) die in Verfahrensschritt (b) erhaltenen Oxidationsprodukte und/oder das bei der Oxidationsbehandlung in Verfahrensschritt (b) erhaltene Produktgemisch auf Temperaturen im Bereich von 100 °C bis 320 °C, insbesondere im Bereich von 150 °C bis 302 °C, vorzugsweise im Bereich von 180°C bis 300 °C, gebracht werden. Insbesondere sollte in Verfahrensschritt (c) die Chlorierung bei Temperaturen im Bereich von 100 °C bis 320 °C, insbesondere im Bereich von 150 °C bis 302 °C, vorzugsweise im Bereich von 180°C bis 300 °C, durchgeführt werden.

Was die Chlorierung gemäß Verfahrensschritt (c) weiterhin anbelangt, so kann diese in dem Fachmann an sich wohlbekannten Chlorierungsvorrichtungen durchgeführt werden. Insbesondere kann die Chlorierung in Verfahrensschritt (c) in einer Chlorierungsvorrichtung durchgeführt werden, insbesondere wobei die Chlorierungsvorrichtung ausgewählt wird aus der Gruppe von Drehrohröfen und Trommelöfen.

Was die Chlorierung weiterhin anbelangt, so ist es erfindungsgemäß von besonderem Vorteil, wenn derart verfahren wird, dass in Verfahrensschritt (c) Eisenoxid, insbesondere Eisen(III)-oxid, zu Eisenchlorid, insbesondere Eisen(III)-chlorid (FeCl₃), umgesetzt wird.

Wie zuvor angeführt, weist das in bevorzugter Weise resultierende Eisen(III)-chlorid bzw. FeCl₃ im Hinblick auf die erfindungsgemäße Verfahrensführung optimale Abtrennungseigenschaften auf, insbesondere im Hinblick auf die Sublimationseigenschaften von Eisen(III)-chlorid.

Insbesondere kann gemäß der vorliegenden Erfindung, wonach, wie nachfolgend noch im Detail angeführt, als Chlorierungsmittel Ammoniumchlorid (NH₄Cl) eingesetzt wird, die Umsetzung von Eisen(III)-oxid zu dem entsprechenden Chlorid gemäß der nachfolgenden Reaktionsgleichung (iv) durchgeführt werden:

(iv) Fe₂O₃ + 6 NH₄Cl → 2 FeCl₃ + 6 NH₃ + 3 H₂O.

Gleichermaßen kann es gemäß der erfindungsgemäßen Verfahrensführung mit der Chlorierung der zuvor erhaltenen bzw. in dem Produktgemisch vorhandenen Metalloxide vorgesehen sein, dass in Verfahrensschritt (c) Kupferoxid, vorzugsweise Kupfer(II)-oxid, zu Kupferchlorid, insbesondere Kupfer(II)-chlorid (CuCl₂), umgesetzt wird. Gleichermaßen kann es vorgesehen sein, dass in Verfahrensschritt (c) Zinkoxid, vorzugsweise Zink(II)-oxid, zu Zinkchlorid, insbesondere Zink(II)-chlorid (ZnCl₂), umgesetzt wird. Zudem kann es vorgesehen sein, dass in Verfahrensschritt (c) Bleioxid, vorzugsweise Blei(II)-oxid, zu Bleichlorid, insbesondere Blei(II)-chlorid (PbCl₂), umgesetzt wird. Schließlich kann es vorgesehen sein, dass in Verfahrensschritt (c) Cobaltoxid, vorzugsweise Cobalt(II)-oxid, zu Cobaltchlorid, insbesondere Cobalt(II)-chlorid (CoCl₂), umgesetzt wird. Zudem kann in Verfahrensschritt (c) Mangan, insbesondere Manganoxid, zu Manganchlorid umgesetzt werden. In Verfahrensschritt (c) kann gleichermaßen Vanadium, insbesondere Vanadiumoxid, zu Vanadiumchlorid umgesetzt werden. Schließlich kann in Verfahrensschritt (c) Chrom, insbesondere Chromoxid, zu Chromchlorid umgesetzt werden.

Darüber hinaus kann in Verfahrensschritt (c) Silberoxid, vorzugsweise Silber(I)-oxid, zu Silberchlorid, insbesondere Silber(I)-chlorid (AgCI), umgesetzt werden.

Wie zuvor angeführt, ist es erfindungsgemäß vorgesehen, dass in Verfahrensschritt (d) eine Abtrennung bzw. Isolierung von Eisenchlorid, insbesondere Eisen(III)-chlorid (FeCl₃), aus dem in Verfahrensschritt (c) erhaltenen Produktgemisch erfolgt, und zwar mittels einer insbesondere selektiven Sublimation.

In diesem Zusammenhang hat es sich erfindungsgemäß als besonders vorteilhaft herausgestellt, wenn in Verfahrensschritt (d) die Sublimation von Eisenchlorid, insbesondere Eisen(III)-chlorid, aus dem in Verfahrensschritt (c) erhaltenen Produktgemisch durch Sublimation erfolgt, insbesondere bei Temperaturen im Bereich von 200 °C bis 400 °C, insbesondere im Bereich von 250 °C bis 375 °C, vorzugsweise im Bereich von 275 °C bis 350 °C, bevorzugt im Bereich von 300 °C bis 325 °C.

In diesem Zusammenhang kann die Abtrennung bzw. Isolierung von Eisenchlorid, insbesondere Eisen(III)-chlorid (FeCl₃), in einer Abtrennvorrichtung, insbesondere Sublimationsvorrichtung, vorzugsweise in einem Drehrohrofen, Wirbelschichtofen und/oder Trommelofen, durchgeführt werden, in welche das aufzureinigende Produktgemisch mit den entsprechenden Chloriden zuvor eingebracht werden sollte.

Gemäß einer erfindungsgemäß bevorzugten Ausführungsform kann im Rahmen der vorliegenden Erfindung beispielsweise derart verfahren werden, dass Verfahrensschritt (c), also die Chlorierung der in Verfahrensschritt (b) erhaltenen Oxidationsprodukte, und Verfahrensschritt (d), also insbesondere die Abtrennung und/oder Isolierung von Eisenchlorid, insbesondere Eisen(III)-chlorid (FeCl₃), kontinuierlich in einer gemeinsamen Vorrichtung, erfolgen kann, insbesondere wobei es sich bei der gemeinsamen Vorrichtung um einen Drehrohrofen handeln kann. In diesem Zusammenhang kann die gemeinsame Vorrichtung, insbesondere der Drehrohrofen, einen ersten Abschnitt bzw. Bereich zur Durchführung von Verfahrensschritt (c) und einen zweiten Abschnitt bzw. Bereich zur Durchführung von Verfahrensschritt (d), insbesondere zur Abtrennung und/oder Isolierung von Eisenchlorid, insbesondere Eisen(III)-chlorid (FeCl₃), aufweisen.

Gemäß dieser erfindungsgemäßen Ausführungsform kann somit die Chlorierung einerseits und die Abtrennung von Eisenchlorid andererseits in ein und derselben Apparatur durchgeführt werden. Wie zuvor angeführt, handelt es sich bei der gemeinsamen Apparatur insbesondere um einen Drehrohrofen, wobei der Drehrohrofen entlang der Drehrohrachse einen ersten Reaktionsbereich mit einer ersten Temperaturzone zur Durchführung der in Verfahrensschritt (c) beschriebenen Chlorierung mit den diesbezüglich erfindungsgemäß vorgesehenen Temperaturen und einen zweiten Sublimationsbereich zur Abtrennung von Eisenchlorid mit den entsprechenden Sublimationstemperaturen, wie in Verfahrensschritt (d) beschrieben, aufweist.

Erfindungsgemäß führt die Desublimation in Verfahrensschritt (d) darüber hinaus insbesondere zum Erhalt von festem bzw. aufgereinigtem Eisenchlorid, insbesondere Eisen(III)-chlorid (FeCl₃).

Darüber hinaus sollte die in Verfahrensschritt (d) gegebenenfalls durchgeführte Reduktion von Eisenchlorid, insbesondere Eisen(III)-chlorid in der Gasphase erfolgen, insbesondere bei Temperaturen im Bereich von 400 °C bis 800 °C, insbesondere im Bereich von 450 °C bis 750 °C, vorzugsweise im Bereich von 500 °C bis 700 °C, bevorzugt im Bereich von 550 °C bis 650 °C.

Die Reduktion von Eisenchlorid, insbesondere Eisen(III)-chlorid, kann dabei in einer Reduktionsvorrichtung durchgeführt werden. Entsprechende Reduktionsvorrichtungen sind dem Fachmann zu diesem Zweck wohlbekannt, so dass es diesbezüglich keiner weiteren Ausführungen bedarf. Hierzu kann insbesondere gasförmiges Eisenchlorid aus der Sublimationsvorrichtung in die Reduktionsvorrichtung überführt werden.

Was das erfindungsgemäße Verfahren weiterhin anbelangt, so kann es zudem vorgesehen sein, dass in Verfahrensschritt (d), insbesondere nach erfolgter Abtrennung bzw. Isolierung von Eisenchlorid, insbesondere Eisen(III)-chlorid (FeCl₃), eine weitere und/oder nachfolgende Abtrennung und/oder Isolierung der Chloride der weiteren Metalle aus dem Produktgemisch erfolgt.

Insbesondere kann es im Rahmen der vorliegenden Erfindung vorgesehen sein, dass in Verfahrensschritt (d), insbesondere nach erfolgter Abtrennung und/oder Isolierung von Eisenchlorid, insbesondere Eisen(III)-chlorid (FeCl₃), eine weitere und/oder nachfolgende Abtrennung und/oder Isolierung von Kupferchlorid, insbesondere Kupfer(II)-chlorid (CuCl₂), und/oder von Zinkchlorid, insbesondere Zink(II)-chlorid (ZnCl₂), und/oder von Bleichlorid, insbesondere Blei(II)-chlorid (PbCl₂), und/oder von Cobaltchlorid, insbesondere Cobalt(II)-chlorid (CoCl₂), erfolgt. Entsprechendes kann für Titanchlorid, Manganchlorid, Vanadiumchlorid und/oder Chromchlorid gelten.

Hierzu kann die weitere bzw. nachfolgende Abtrennung bzw. Isolierung der Chloride der weiteren Metalle aus dem Produktgemisch beispielsweise in einer Aufschlämm- bzw. Dispergiervorrichtung, insbesondere in einem Rührkessel und/oder Rührreaktor, vorzugsweise mit mindestens einer Abzugseinrichtung, und/oder einer Gegenstromvorrichtung, vorzugsweise mit jeweils mindestens einer Abzugseinrichtung, erfolgen.

In diesem Zusammenhang kann erfindungsgemäß beispielsweise derart verfahren werden, dass das insbesondere von Eisenchlorid, vorzugsweise Eisen(III)-chlorid (FeCl₃), befreite Produktgemisch in einer flüssigen Phase und/oder in einem flüssigen Medium, insbesondere Wasser, aufgenommen, insbesondere aufgeschlämmt und/oder dispergiert, wird.

Gemäß diesem Aspekt der vorliegenden Erfindung können die löslichen Bestandteile des insbesondere von Eisenchlorid, vorzugsweise Eisen(III)-chlorid (FeCl₃), befreiten Produktgemischs, insbesondere die Chloride der weiteren Metalle, insbesondere Kupferchlorid, vorzugsweise Kupfer(II)-chlorid (CuCl₂), und/oder Zinkchlorid, vorzugsweise Zink(II)-chlorid (ZnCl₂), und/oder Bleichlorid, vorzugsweise Blei(II)-chlorid (PbCl₂), und/oder Cobaltchlorid, vorzugsweise Cobalt(II)-chlorid (CoCl₂), insbesondere zumindest im Wesentlichen vollständig in Lösung gebracht und/oder suspendiert werden, vorzugsweise in Lösung gebracht werden. Auf diese Weise können die in Rede stehenden Chloride der weiteren Metalle durch Überführung in eine Suspension bzw. Lösung aus dem aufgeschlämmten Produktgemisch abgetrennt bzw. entfernt werden, wobei aufgrund der guten Löslichkeit bzw. Suspendierbarkeit der Chloride eine hohe Abtrennungs- bzw. Aufreinigungsrate erreicht werden kann.

Was die Abtrennung der Chloride der weiteren Metalle im Allgemeinen anbelangt, so kann diese auf Basis einer sogenannten Wasserlaugung bzw. auf Basis von sogenannten Leaching-Verfahren durchgeführt werden, welche dem Fachmann als solche wohlbekannt sind, so dass es hierzu keiner weiteren Ausführungen bedarf.

Erfindungsgemäß kann es vorgesehen sein, dass die erhaltene Lösung und/oder Suspension, vorzugsweise Lösung, welche die in Rede stehenden Chloride enthält, von dem verbleibenden Produktgemisch abgetrennt wird, beispielsweise mittels Filtration oder dergleichen, insbesondere unter Verwendung entsprechender Filtervorrichtungen.

In diesem Zusammenhang kann eine weitere Aufarbeitung der erhaltenen Lösung bzw. Suspension zur insbesondere selektiven Abtrennung bzw. Isolierung der Chloride der weiteren Metalle, insbesondere Kupferchlorid, vorzugsweise Kupfer(II)-chlorid (CuCl₂), und/oder Zinkchlorid, vorzugsweise Zink(II)-chlorid (ZnCl₂), und/oder Bleichlorid, vorzugsweise Blei(II)-chlorid (PbCl₂), und/oder Cobaltchlorid, vorzugsweise Cobalt(II)-chlorid (CoCl₂), und/oder Titanchlorid und/oder Manganchlorid und/oder Vanadiumchlorid und/oder Chromchlorid, bzw. zum Erhalt der metallischen Form des jeweiligen Metalls erfolgen. Die insbesondere selektive Abtrennung bzw. Isolierung der Chloride der weiteren Metalle bzw. die Überführung in die metallische Form der jeweiligen Metalle kann dabei auf Basis elektrochemischer, sorptiver, insbesondere adsorptiver Verfahren bzw. mittels insbesondere selektiver Fällung und/oder insbesondere selektiver Sedimentation oder dergleichen erfolgen. Insbesondere können die Metalle mittels Reduktion in metallischer Form erhalten werden. Die diesbezüglichen Verfahren sind dem Fachmann wohlbekannt, so dass es diesbezüglich keiner weiteren Ausführungen bedarf.

Was somit die Abtrennung bzw. Isolierung der Chloride der weiteren Metalle anbelangt, so wird erfindungsgemäß insbesondere derart verfahren, dass die entsprechenden Metallchloride in Lösung und/oder Suspension, vorzugsweise in Lösung, überführt und somit von dem zumindest im Wesentlichen nicht löslichen Bestandteilen des zuvor von Eisen befreiten Produktgemischs abgetrennt werden und die auf diese Weise erhaltene Lösung bzw. Suspension einer selektiven Abtrennung der Chloride der weiteren Metalle unterzogen wird.

Auf diese Weise können im Rahmen der vorliegenden Erfindung auch die entsprechenden Chloride der weiteren Metalle aus dem zugrundeliegenden Produktgemisch auf Basis des eingesetzten Ausgangsmaterials abgetrennt werden, so dass auf diese Weise weitere industriell bzw. technisch verwertbare Rohstoffe bzw. Handelsprodukte erhalten werden können, welche sich beispielsweise zur Verwendung als bzw. in Katalysatoren, zur Herstellung von Farbstoffen bzw. Pigmenten oder dergleichen eignen, wobei die in Rede stehenden Rohstoffe in Form der Chloride der weiteren Metalle gleichermaßen über eine hohe Stoff- bzw. Produktreinheit verfügen.

Was das verbleibende, insbesondere zumindest im Wesentlichen nicht lösliche und von Eisen sowie von den weiteren Metallen, wie zuvor definiert, befreite Produktgemisch anbelangt, so umfasst dieses insbesondere noch die Edelmetallkomponenten, insbesondere Gold und/oder Silber, sowie die Bestandteile Silicium, insbesondere Siliciumdioxid, sowie Calciumsulfat. Insbesondere kann das verbleibende Produktgemisch auch Silberchlorid enthalten, welches in Wasser praktisch unlöslich ist.

Durch die vorgeschaltete Abtrennung bzw. Isolierung der Eisenkomponente sowie der weiteren Metallkomponenten aus dem Produktgemisch erfolgt eine nochmalige Anreicherung bzw. weitere Aufkonzentrierung bzw. eine Erhöhung des relativen Anteils insbesondere auch der Edelmetalle, wie Gold und/oder Silber, in dem verbleibenden Produktgemisch, was der nachfolgend gegebenenfalls vorgesehenen Abtrennung der Edelmetalle insbesondere auch im Hinblick auf die Wirtschaftlichkeit des zugrundeliegenden Verfahrens sowie der Ausbeutungsgrade zuträglich ist.

So kann es im Rahmen der vorliegenden Erfindung vorgesehen sein, dass das in Verfahrensschritt (d) erhaltene bzw. nach Durchführung von Verfahrensschritt (d) vorliegende Produktgemisch, jeweils berechnet als Element und jeweils bezogen auf das Trockengewicht des Produktgemischs, umfasst:
- Gold, insbesondere in Mengen im Bereich von 1 g/t bis 50 g/t, vorzugsweise im Bereich von 1 g/t bis 40 g/t, bevorzugt im Bereich von 2 g/t bis 20 g/t, besonders bevorzugt im Bereich von 3 g/t bis 15 g/t;
- Silber, insbesondere in Mengen im Bereich von 2 g/t bis 600 g/t, vorzugsweise im Bereich von 5 g/t bis 500 g/t, bevorzugt im Bereich von 10 g/t bis 400 g/t, besonders bevorzugt im Bereich von 15 g/t bis 200 g/t.

Erfindungsgemäß kann - zur gezielten Rückgewinnung der zuvor angereicherten Edelmetalle - in Anschluss an Verfahrensschritt (d) ein Verfahrensschritt (e) durchgeführt werden. In Verfahrensschritt (e) kann eine Abtrennung des Edelmetalls, insbesondere von Gold und/oder Silber, aus dem in Verfahrensschritt (d) erhaltenen und/oder dem von Eisenchlorid, vorzugsweise Eisen(III)-chlorid (FeCl₃), und von den Chloriden der weiteren Metalle befreiten Produktgemisch erfolgen. Auch aufgrund der zuvor vorgenommenen Anreicherung der Edelmetalle in dem Produktgemisch können dabei hohe Ausbeuten erzielt werden.

Was die gegebenenfalls vorgesehene Abtrennung des Edelmetalls anbelangt, so kann in erfindungsgemäß bevorzugter Weise derart verfahren werden, dass in Verfahrensschritt (e) die Abtrennung des Edelmetalls, insbesondere von Gold und/oder Silber, aus dem in einer flüssigen Phase und/oder in einem flüssigen Medium, insbesondere Wasser, aufgenommenen, insbesondere aufgeschlämmten und/oder dispergierten Produktgemisch erfolgt. Insbesondere kann die Abtrennung des Edelmetalls, insbesondere von Gold und/oder Silber, in mindestens einer Abtrenn- und/oder Filtervorrichtung durchgeführt werden. Hierzu kann, sofern erforderlich, das in Verfahrensschritt (d) erhaltene Produktgemisch erneut mit einem Dispergier- bzw. Lösemittel, insbesondere Wasser, versetzt werden.

In diesem Zusammenhang hat es sich erfindungsgemäß von Vorteil erwiesen, wenn in Verfahrensschritt (e) das Edelmetall, insbesondere Gold und/oder Silber, insbesondere zumindest im Wesentlichen vollständig in Lösung bzw. Suspension, insbesondere in Lösung, gebracht bzw. überführt wird. Dies kann beispielsweise derart erfolgen, dass mindestens eine Komplexierungskomponente bzw. -verbindung zur Überführung des Edelmetalls, insbesondere Gold und/oder Silber, in Lösung und/oder Suspension, vorzugsweise Lösung, eingesetzt bzw. in Kontakt insbesondere mit dem Produktgemisch bzw. dem Edelmetall gebracht wird.

Im Allgemeinen kann es sich bei der in Rede stehenden Komplexierungskomponente bzw. -verbindung um eine Substanz handeln, welche mit dem Edelmetall, insbesondere Gold und/oder Silber, vorzugsweise eine Komplexverbindung bildet, welche in dem Lösemittel, insbesondere Wasser, zumindest im Wesentlichen vollständig löslich bzw. suspendierbar ist.

Insbesondere kann die Komplexierungskomponente bzw. Verbindung ausgewählt sein aus der Gruppe von Cyanidlauge, lod/Brom-Lösung und Thiosulfatlösung. Insbesondere kann eine Lösung des Salzes der Blausäure, insbesondere Natriumcyanid (NaCN) als Komponente zur Überführung des Edelmetalls in eine Lösung und/oder Suspension eingesetzt werden.

Insbesondere eignet sich als diesbezügliche Komponente, wie zuvor angeführt, eine Natriumcyanid-Lösung, welche synonym auch als Cyanidlauge bezeichnet wird. Denn im Rahmen der sogenannten Cyanidlaugung wird Gold und/oder Silber in insbesondere sauerstoffhaltiger Natriumcyanid-Lösung als Komplexverbindung gelöst bzw. suspendiert, insbesondere auf Basis der nachfolgenden Reaktionsgleichung (v):

(v) 4 Au + 8 NaCN + O₂ + 2 H₂O → 4 Na[Au(CN)₂] + 4 NaOH.

Für das Edelmetall in Form von Silber gilt in entsprechender Weise die Reaktionsgleichung (vi):

(vi) 4 Ag + 8 NaCN + O₂ + 2 H₂O → 4 Na[Ag(CN)₂] + 4 NaOH.

Nachfolgend kann es weiterhin vorgesehen sein, dass die erhaltene Lösung und/oder Suspension des Edelmetalls, insbesondere Gold und/oder Silber, von dem verbleibenden Produktgemisch insbesondere mittels Filtration abgetrennt wird und das Edelmetall, insbesondere Gold und/oder Silber, aus der Lösung und/oder Suspension gewonnen wird, insbesondere mittels Ausfällverfahren oder sorptiver, insbesondere adsorptiver Verfahren.

Beispielsweise kann eine Ausfällung des Edelmetalls unter Einsatz von Zink bzw. Aluminium, vorzugsweise in feinpartikulärer Form, erfolgen, insbesondere auf Basis der nachfolgenden Reaktionsgleichungen (vii) und (viii):

(vii) 2 Na[Au(CN)₂] + Zn → Na₂[Zn(CN)₂] + 2 Au;

(viii) 2 Na[Ag(CN)₂] + Zn → Na₂[Zn(CN)₂] + 2 Ag.

Der Ausfällung des Edelmetalls kann eine weitere Abfiltration und Aufreinigung des erhaltenen Rohedelmetalls folgen.

Gemäß einer weiteren Ausführungsform der vorliegenden Erfindung können auch sorptive, insbesondere adsorptive Aufreinigungsverfahren zum Erhalt des Edelmetalls eingesetzt werden, insbesondere auf Basis eines vorzugsweise partikulären Adsorptionsmaterials, insbesondere Aktivkohle. Hierzu kann mit entsprechenden Adsorptionssäulen oder dergleichen verfahren werden. Grundsätzlich können auch weitere Gewinnungs- bzw. Aufreinigungsverfahren, wie Amalgamverfahren und/oder Anodenschlammverfahren, zum Erhalt des Edelmetalls eingesetzt werden.

Auf Basis des erfindungsgemäßen Verfahrens ist somit eine effiziente Rückgewinnung auch von Edelmetallen, wie Gold und/oder Silber, aus dem zugrundeliegenden Ausgangsmaterial möglich, wobei diesbezüglich hohe Ausbeuteraten erhalten werden, insbesondere auch vor dem Hintergrund, dass die entsprechenden Edelmetalle in dem zu behandelnden Produktgemisch bereits durch die vorgeschaltete Entfernung der jeweiligen Metallkomponenten sozusagen aufkonzentriert sind. Auf Basis des erfindungsgemäßen Verfahrens können sehr hohe Stoffreinheiten auch für die aufgereinigten bzw. isolierten Edelmetalle erhalten werden.

Im Rahmen der vorliegenden Erfindung kann es sich zudem insbesondere derart verhalten, dass das in Verfahrensschritt (d) und/oder in Verfahrensschritt (e) erhaltene Produktgemisch weiterhin aus dem Ausgangsmaterial stammendes Silicium, insbesondere in Form eines Siliciumoxids, bevorzugt Siliciumdioxid, enthält. Gleichermaßen kann es sich im Rahmen der vorliegenden Erfindung derart verhalten, dass das in Verfahrensschritt (d) und/oder in Verfahrensschritt (e) erhaltene Produktgemisch weiterhin mindestens ein aus dem Ausgangsmaterial stammendes Alkali- und/oder Erdalkalimetall, insbesondere mindestens ein Erdalkalimetall, vorzugsweise Calcium, enthält. Insbesondere kann das Alkali- bzw. Erdalkalimetall, insbesondere das Erdalkalimetall, vorzugsweise Calcium, in Form mindestens eines Salzes, insbesondere Sulfats, vorliegen. Insbesondere kann das in Verfahrensschritt (d) bzw. in Verfahrensschritt (e) erhaltene Produktgemisch aus dem Ausgangsmaterial stammendes Calciumsulfat enthalten. Denn was die vorgenannten Komponenten im Speziellen anbelangt, so werden diese zumindest im Wesentlichen nicht auf Basis der für die Aufreinigung der jeweiligen Metallkomponenten bzw. Edelmetallbestandteile angeführten Verfahrensschritte aus dem Produktgemisch entfernt bzw. chemisch verändert, so dass diese als solche zumindest im Wesentlichen vollständig in dem noch verbleibenden Produktgemisch vorhanden sind.

In diesem Zusammenhang kann erfindungsgemäß im Hinblick auf das noch verbleibende Produktgemisch insbesondere eine weitere Abtrennung bzw. Verarbeitung von Siliciumdioxid vorgesehen sein. Beispielsweise kann eine Reduktion zu Silicium erfolgen, beispielsweise auf Basis der folgenden Reaktionsgleichung (ix):

(ix) SiO₂ + C → Si + CO₂.

Was darüber hinaus das in dem Produktgemisch verbleibende Calciumsulfat anbelangt, so kann dieses als solches verwertet werden, beispielsweise zur Herstellung von Gipsbaustoffen oder dergleichen.

Insbesondere kann das erfindungsgemäße Verfahren auch unter Verwendung der nachfolgend definierten Rückgewinnungs-Anlage nach der Erfindung durchgeführt werden.

Wie zuvor angeführt, wird das erfindungsgemäße Verfahren durch die diesbezüglichen Verfahrensneben- und Unteransprüche sowie die Bezugnahme auf die entsprechenden Figurendarstellungen weiterführend beschrieben.

Im Ergebnis wird somit auf Basis der vorliegenden Erfindung ein hocheffizientes Verfahren zur insbesondere selektiven und umfänglichen Aufreinigung bzw. Isolierung von Metallen, insbesondere zum Erhalt von metallischem Eisen, sowie weiterer Metallkomponenten und gegebenenfalls Edelmetallen, wie Gold und Silber, aus Pyritabfällen, wie Kiesabbrand, bereitgestellt.

Gemäß einer besonderen Ausführungsform der vorliegenden Erfindung kann derart vorgegangen werden, dass zuvor bei 120 °C getrockneter Kiesabbrand einer oxidativen Röstung bei 700 °C mit dem Zweck der Überführung von Eisen in die dreiwertige Form unterzogen wird. Nachfolgend kann der oxidierte Kiesabbrand mit festem Ammoniumchlorid bei einer Temperatur von 300 °C zum Zweck der Überführung von Eisen in die Chloridform unter Erhalt von Ammoniak und Wasser in der Gasphase behandelt werden. Anschließend kann das erhaltene Eisenchlorid durch Sublimation aus dem Produktgemisch abgetrennt werden. Eisenchlorid wird dabei bei einer Temperatur von 950 °C in die Gasphase überführt bzw. sublimiert, wobei Siliciumdioxid und Calciumsulfat sowie die Chloride der weiteren Metalle und die Edelmetallkomponenten in dem festen Produktgemisch verbleiben. Das verbleibende Produktgemisch weist einen im Vergleich zum Ausgangsmaterial erhöhten Edelmetallgehalt auf. Anschließend kann Eisenchlorid mit Wasserstoff zum Erhalt von metallischem Eisen und Chlorwasserstoffgas reduziert bzw. behandelt werden. Die Gasströme von Ammoniak und Chlorwasserstoff können zur erneuten Bildung von Ammoniumchlorid zusammengeführt und zur Reaktion gebracht werden. Aus dem nach der Entfernung von Eisenchlorid verbleibenden Produktgemisch können die Chloride der weiteren Metalle durch Aufschlämmen in Lösung überführt und abgetrennt werden. Das so erhaltene Restproduktgemisch kann nach Entfernung der Chloride der weiteren Metalle mit einer Cyanidlösung zur Überführung von Gold und Silber in eine lösliche Form behandelt werden. Der in dem aufgereinigten Produktgemisch verbleibende Rest, welcher eine Mischung von Siliciumdioxid (Quarz) und Calciumsulfat (Gips) umfasst, kann von der Gold bzw. Silber enthaltenden Lösung mittels Filtration abgetrennt werden. Schließlich kann das Edelmetall in Form von Gold bzw. Silber durch Ausfällung erhalten werden.

Im Folgenden wird die vorliegende Erfindung auf Basis des erfindungsgemäßen Verfahrens anhand bevorzugter Ausführungsbeispiele bzw. Ausführungsformen darstellenden Zeichnungen bzw. Figurendarstellungen näher erläutert. Im Zusammenhang mit der Erläuterung dieser bevorzugten Ausführungsbeispiele des erfindungsgemäßen Verfahrens, welche jedoch in Bezug auf das erfindungsgemäße Verfahren keinesfalls beschränkend sind, werden auch weitergehende Vorteile, Eigenschaften, Aspekte und Merkmale der vorliegenden Erfindung aufgezeigt.

In den Figurendarstellungen zeigt:
- Fig. 1: eine schematische Darstellung bzw. Übersicht des erfindungsgemäßen Verfahrens zur Rohstoffgewinnung aus Erzen bzw. Erzrückständen, nämlich zur Rückgewinnung von Metallen aus Pyritrückständen, bevorzugt aus bei der Schwefelsäureherstellung anfallendem Kiesabbrand;
- Fig. 2: eine weitere schematische Darstellung bzw. Übersicht des erfindungsgemäßen Verfahrens gemäß einer weiteren erfindungsgemäß bevorzugten Ausführungsform.

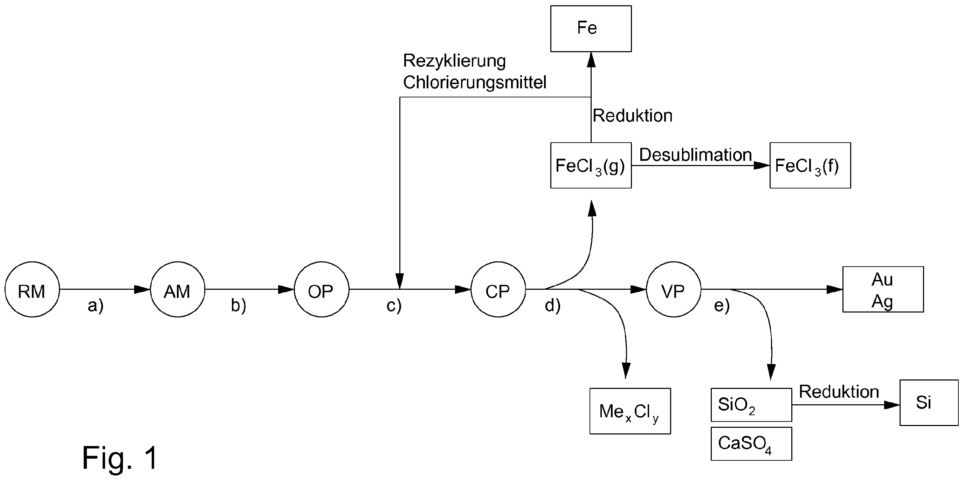

Fig. 1 schematisiert eine besondere Ausführungsform des erfindungsgemäßen Verfahrens wie sie nachfolgend weiterführend definiert wird:
Insbesondere zeigt Fig. 1 die erfindungsgemäße Verfahrensführung, wonach zunächst ein Rohmaterial RM vorliegt bzw. bereitgestellt wird, wobei es sich hierbei um ein Erz bzw. einen Erzrückstand in Form eines Pyritrückstands bzw. insbesondere um einen aus der Schwefelsäureherstellung stammenden Kiesabbrand handelt. Das Rohmaterial RM enthält insbesondere Eisen, vorzugsweise als Hauptbestandteil, und mindestens ein Edelmetall, insbesondere Gold und/oder Silber, sowie mindestens ein weiteres Metall, vorzugsweise ausgewählt aus der Gruppe von Kupfer, Zink, Blei und Cobalt, wobei insbesondere Eisen sowie das weitere Metall in Form von Oxiden vorliegen.

In Verfahrensschritt (a) erfolgt dann die Bereitstellung, insbesondere Aufbereitung, eines Ausgangsmaterials AM auf Basis des zugrundeliegenden Rohmaterials RM. Die Aufbereitung kann eine Zerkleinerung des Rohmaterials RM und/oder eine Trocknung des Rohmaterials RM zum Erhalt des aufbereiteten Ausgangsmaterials AM umfassen.

Nachfolgend wird das Ausgangsmaterial AM, wie in Fig. 1 dargestellt, gemäß Verfahrensschritt (b) einer Oxidationsbehandlung unterzogen, welche insbesondere als Calcinierung bzw. oxidative Röstung durchgeführt werden kann. In diesem Zusammenhang wird insbesondere ein Oxidationsmittel, wie Luft und/oder Sauerstoff, verwendet. Es resultiert ein Material OP mit entsprechenden Oxidationsprodukten, wobei die Oxidationsprodukte insbesondere Eisenoxid und gegebenenfalls Oxide der weiteren Metalle umfassen. Insbesondere in Bezug auf Eisenoxid wird in diesem Zusammenhang Eisen(III)-oxid erhalten.

Fig. 1 zeigt weiterhin, dass in einem weiteren Verfahrensschritt (c) eine Chlorierung der in Verfahrensschritt (b) erhaltenen Oxidationsprodukte, insbesondere Oxide, erfolgt, so dass in entsprechender Weise chlorierte Produkte CP resultieren. Dabei erfolgt die Chlorierung der Oxide mittels eines rezyklierbaren Chlorierungsmittels, nämlich Ammoniumchlorid (NH₄Cl). Es resultieren zum einen ausgehend von Eisen(III)-oxid entsprechend Eisen(III)-chlorid (FeCl₃) und ausgehend von den weiteren Metalloxiden entsprechende Chloride der weiteren Metalle (MeₓCl_{y} mit Me = Cu, Zn, Pb, Co, Ti, V bzw. Cr, insbesondere Cu, Zn, Pb bzw. Co).

Die durch die Chlorierung erhaltenen chlorierten Produkte CP können dann aus dem in Verfahrensschritt (c) erhaltenen Produktgemisch abgetrennt bzw. isoliert werden, wie Fig. 1 gemäß dem dort angeführten Verfahrensschritt (d) veranschaulicht. Insbesondere wird das zuvor in Verfahrensschritt (c) erhaltene Eisen(III)-chlorid (FeCl₃) in Verfahrensschritt (d) sublimiert, so dass gasförmiges Eisen(III)-chlorid (FeCl₃(g)) erhalten wird, welches entsprechend aus dem festen Restgemisch bzw. Rückstand abgetrennt werden kann.

In diesem Zusammenhang zeigt Fig. 1 zudem, dass das so erhaltene insbesondere gasförmige Eisen(III)-chlorid zum einen zum Erhalt von festem Eisen(III)-chlorid desublimiert werden kann und dass zum anderen das insbesondere gasförmige Eisen(III)-chlorid einer Reduktion zum Erhalt von metallischem Eisen (Fe) unterzogen werden kann. Die bei der Reduktion von Eisen(III)-chlorid zu metallischem Eisen anfallenden Reaktionsprodukte, insbesondere in Form einer anorganischen Chlorverbindung, nämlich Chlorwasserstoff, können, wie in Fig. 1 gleichermaßen schematisch veranschaulicht, zur Rezyklierung des Chlorierungsmittels verwendet werden, wobei die aus der Reduktion erhaltene anorganische Chlorverbindung, nämlich Chlorwasserstoff, mit bei der Chlorierung aus dem Chlorierungsmittel resultierendem Umsetzungsprodukt, insbesondere mit gasförmigem Ammoniak (NH₃), zur Reaktion gebracht wird, so dass auf diese Weise erneut das Chlorierungsmittel in Form von Ammoniumchlorid (NH₄Cl) erhalten wird, welches in Verfahrensschritt (c) erneut eingesetzt werden kann.

Fig. 1 zeigt darüber hinaus, dass in Verfahrensschritt (d) auch eine nachfolgende Abtrennung der Chloride der weiteren Metalle (MeₓCl_{y}) durchgeführt werden kann, welche insbesondere der Abtrennung von Eisen(III)-chlorid nachgeschaltet ist. Es resultiert aus Verfahrensschritt (d) ein verbleibendes Produktgemisch (VP), welches gegebenenfalls gemäß Verfahrensschritt (e), wie in Fig. 1 gleichermaßen verdeutlicht, einer weiteren Aufreinigung, insbesondere im Hinblick auf die Abtrennung von Edelmetallen, wie Gold und/oder Silber, zugeführt werden kann. Das in Verfahrensschritt (e) verbleibende und von Gold bzw. Silber befreite feste Produktgemisch umfasst insbesondere Calciumsulfat und Siliciumdioxid, wobei Siliciumdioxid, wie in Fig. 1 angeführt, einer Reduktion zum Erhalt von elementaren Silicium unterzogen werden kann.

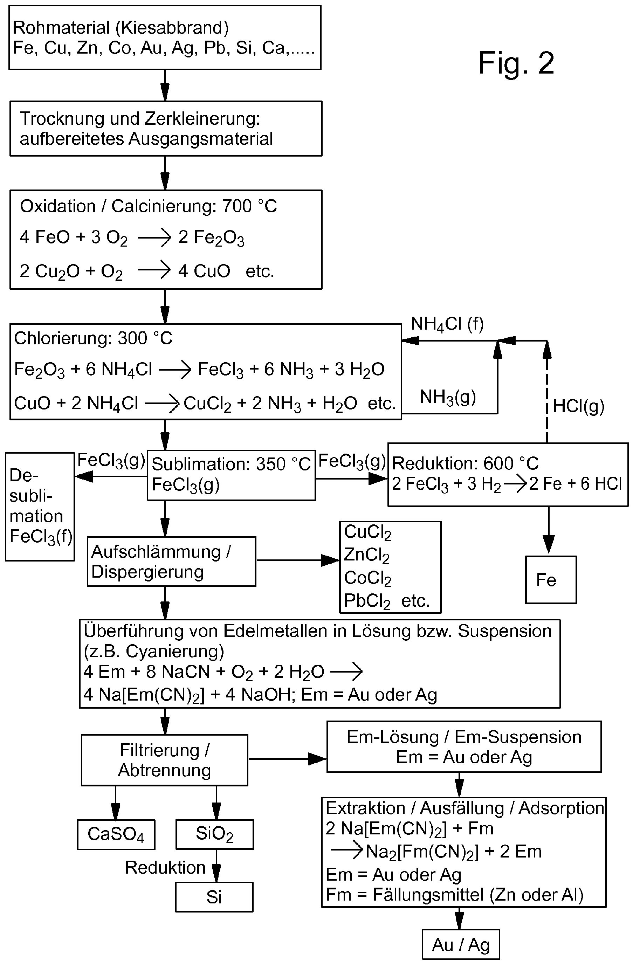

Fig. 2 schematisiert eine weitere besondere Ausführungsform des erfindungsgemäßen Verfahrens, wie sie nachfolgend weiterführend beschrieben wird:
So kann, wie in Fig. 2 dargestellt, ausgehend von einem Rohmaterial, wie insbesondere Kiesabbrand, welches Komponenten auf Basis von Eisen, Kupfer, Zink, Cobalt, Gold, Silber, Blei, Silicium und Calcium sowie auf Basis weiterer Elemente enthält, durch Trocknung und Zerkleinerung ein aufbereitetes Ausgangsmaterial erhalten werden.

Das so erhaltene Ausgangsmaterial kann einer Oxidation bzw. Calcinierung, beispielsweise bei Temperaturen von 700 °C in Gegenwart eines Oxidationsmittels, wie Luft und/oder Sauerstoff, unterzogen werden. Die Oxidationsbehandlung führt insbesondere zum Erhalt von Oxiden von Eisen und der weiteren Metalle, insbesondere auch unter Erhöhung der Oxidationsstufe der jeweiligen metallischen Elemente. So wird im Fall von Eisen beispielsweise ausgehend von Eisen(II)-oxid oder Eisen(11, III)-oxid maßgeblich Eisen(III)-oxid gemäß dem folgenden Reaktionsschema erhalten:

(x) 4 FeO + 3 O2 → 2 Fe₂O₃.

Gleichermaßen kann beispielsweise ausgehend von Kupfer(I)-oxid maßgeblich Kupfer(II)-oxid gemäß dem vorliegenden Reaktionsschema erhalten werden:

(xi) 2 Cu₂O + O₂ → 4 CuO.

Entsprechendes gilt im Allgemeinen für die Elemente der weiteren Metalle.

Was darüber hinaus das Edelmetall, insbesondere Gold, anbelangt, so wird dies im Rahmen der Oxidationsbehandlung aufgrund der edlen Eigenschaften im Allgemeinen nicht oxidiert. Für das Edelmetall Silber kann zumindest teilweise eine Umsetzung in das Oxid vorliegen.

Fig. 2 veranschaulicht darüber hinaus beispielhaft die auf die Oxidation folgende Chlorierung der zuvor erhaltenen Oxidationsprodukte unter Verwendung eines Chlorierungsmittels in Form von Ammoniumchlorid (NH₄Cl), welches den Oxidationsprodukten in fester Form zugegeben wird, beispielsweise in Form eines Pulvers. Die Chlorierung kann beispielsweise bei Temperaturen von 300 °C erfolgen. Dabei resultiert in Bezug auf Eisen(III)-oxid in entsprechender Weise Eisen(III)-chlorid (FeCl₃) sowie beispielhaft für Kupferoxid in entsprechender Weise Kupferchlorid (CuCl₂). Für die Oxide der weiteren Metalle gilt Entsprechendes. Bei der durchgeführten Chlorierung kann insbesondere gasförmiges Ammoniak (NH₃) als aus dem Chlorierungsmittel, insbesondere Ammoniumchlorid (NH₄Cl), hervorgehendes Umsetzungsprodukt, resultieren.

Fig. 2 verdeutlicht in diesem Zusammenhang weiterhin, dass das resultierende insbesondere gasförmige Ammoniak (NH₃) abgeführt und mit einer anorganischen Chlorverbindung, nämlich Chlorwasserstoff, in der Gasphase zur Reaktion zum Erhalt von rezykliertem Chlorierungsmittel, nämlich Ammoniumchlorid (NH₄Cl), gebracht werden kann.

Was den weiteren Verfahrensablauf anbelangt, so werden die erhaltenen chlorierten Produkte, insbesondere Eisenchlorid und gegebenenfalls die Chloride der weiteren Metalle, aus dem bei der Chlorierung erhaltenen Produktgemisch entfernt: So veranschaulicht Fig. 2 weiterhin, dass Eisen(III)-chlorid (FeCl₃) mittels Sublimation, insbesondere bei Temperaturen von 350 °C, in die Gasphase überführt und so aus dem Produktgemisch entfernt wird.

Nach erfolgter Sublimation bzw. Entfernung von Eisen(III)-chlorid können, wie in Fig. 2 dargestellt, nachfolgend noch die Chloride der weiteren Metalle, wie CuCl₂, ZnCl₂, CoCl₂, PbCl₂ etc., aus dem Produktgemisch abgetrennt werden, und zwar insbesondere durch Aufschlämmung bzw. Dispergierung des von Eisen(III)-chlorid befreiten Produktgemischs mit entsprechender Überführung der löslichen Chloride in eine insbesondere wässrige Lösung mit anschließender Abtrennung der Lösung, beispielsweise mittels Filtration.

Was darüber hinaus das durch Sublimation und insbesondere im gasförmigen Zustand vorliegende Eisen(III)-chlorid anbelangt, so kann gemäß dem erfindungsgemäßen Verfahren auf Basis von zwei verschiedenen Varianten bzw. Ausführungsformen verfahren werden, wie in Fig. 2 dargestellt: Zum einen kann das insbesondere gasförmige Eisen(III)-chlorid durch Desublimation zu festem Eisen(III)-chlorid zum Erhalt des entsprechenden Endprodukts desublimiert werden. Zum anderen kann insbesondere gasförmiges Eisen(III)-chlorid einer Reduktion, insbesondere bei 600 °C, unterzogen werden, wobei als Reduktionsmittel beispielsweise Wasserstoff eingesetzt werden kann. Die Reduktion kann dabei insbesondere gemäß der folgenden chemischen Reaktionsgleichung ablaufen: 2 FeCl₃ + 3 H₂ → 2 Fe + 6 HCl. Auf diese Weise wird metallisches Eisen erhalten. Im Rahmen der vorliegenden Erfindung ist es gleichermaßen möglich, dass beide zuvor angeführten Ausführungsformen zeitgleich bzw. parallel realisiert werden, beispielsweise durch entsprechende Behandlungen entsprechender Teilströme von Eisenchlorid.

Fig. 2 verdeutlicht weiterhin, dass bei der Reduktion von Eisen(III)-chlorid anfallender Chlorwasserstoff abgeführt und zur Rezyklierung des zuvor angeführten Chlorierungsmittels eingesetzt werden kann.

Was darüber hinaus das von den Chloriden der zuvor genannten Metalle befreite Produktgemisch anbelangt, so kann gleichermaßen eine Abtrennung des Edelmetalls, insbesondere von Gold und/oder Silber, durchgeführt werden, wie in Fig. 2 dargestellt: So können beispielsweise die Edelmetalle, wie Gold und/oder Silber, insbesondere über eine Komplexbildungsreaktion in Lösung bzw. Suspension, insbesondere wässrige Lösung bzw. Suspension, überführt werden, beispielsweise durch Verwendung einer entsprechenden Cyanidlauge. Die zugrundeliegende Komplexbildungsreaktion zum Erhalt von insbesondere in Wasser löslichem Edelmetall kann dabei auf Basis der nachfolgenden Reaktionsgleichung ablaufen: Em + 8 NaCN + O₂ + 2 H₂O → 4 Na[Em(CN)₂] + 4 NaOH; Em = Au oder Ag.

Fig. 2 veranschaulicht weiterhin, dass die in Lösung bzw. Suspension überführten Edelmetalle, insbesondere Gold und/oder Silber, durch entsprechende Filtration bzw. Abtrennung der festen Bestandteile zum Erhalt einer aufgereinigten Edelmetall-Lösung bzw. Edelmetall-Suspension weiter aufgereinigt werden können. Aus dieser Lösung bzw. Suspension kann mittels Extraktion bzw. Ausfällung bzw. Adsorption das isolierte Edelmetall, insbesondere Gold und/oder Silber erhalten werden. In diesem Zusammenhang zeigt Fig. 2 beispielhaft die zugrundeliegende Reaktion unter Verwendung eines Fällungsmittels wie Zink oder Aluminium: 2 Na[Em(CN)₂] + Fm → Na₂[Fm(CN)₂] + 2 Em; Em = Au oder Ag sowie Fm = Fällungsmittel (Zn oder Al).

Was darüber hinaus das verbleibende Produktgemisch anbelangt, so enthält dieses insbesondere Calciumsulfat sowie Siliciumdioxid, wobei Siliciumdioxid über eine entsprechende Reduktion, beispielsweise unter Verwendung von Kohlenstoff als Reaktionsmittel, zu Silicium überführt werden kann, wie gleichermaßen in Fig. 2 dargestellt.

Darüber hinaus betrifft die vorliegende Erfindung - gemäß einem **weiteren** Aspekt der vorliegenden Erfindung - die erfindungsgemäße Rückgewinnungs-Anlage zur (Rück-)Gewinnung von metallischem Eisen und/oder Eisenchlorid aus Erzen und/oder Erzrückständen in Form von Pyritrückständen, besonders bevorzugt aus bei der Schwefelsäureherstellung anfallendem Kiesabbrand, insbesondere Rückgewinnungs-Anlage zur Durchführung des zuvor definierten Verfahrens, wobei die Rückgewinnungs-Anlage umfasst:
(a) mindestens eine Bereitstellungs- und/oder Aufbereitungsvorrichtung zur Bereitstellung, insbesondere Aufbereitung, eines Ausgangsmaterials in Form mindestens eines Erzes und/oder Erzrückstands, wobei das Ausgangsmaterial Eisen als Hauptbestandteil, mindestens ein Edelmetall, ausgewählt aus Gold und/oder Silber, sowie mindestens ein weiteres Metall, ausgewählt aus der Gruppe von Kupfer, Zink, Blei, Cobalt, Titan, Mangan, Vanadium und Chrom, enthält;
(b) mindestens eine Oxidations- und/oder Röstvorrichtung zur Oxidationsbehandlung, insbesondere Calcinierung und/oder oxidativen Röstung, des bereitgestellten Ausgangsmaterials zum Erhalt von Eisenoxid und Oxiden der weiteren Metalle als Oxidationsprodukte in dem resultierenden Produktgemisch;
(c) mindestens eine Chlorierungsvorrichtung zur Chlorierung der Oxidationsprodukte, insbesondere Oxide, in dem Produktgemisch und zur Verwendung mindestens eines rezyklierbaren Chlorierungsmittels zur Chlorierung von Eisenoxid und Oxiden der weiteren Metalle zum Erhalt von Eisenchlorid, vorzugsweise Eisen(III)-chlorid, und von Chloriden der weiteren Metalle in dem Produktgemisch,
   wobei die Chlorierung als Festphasenreaktion unter Verwendung von Ammoniumchlorid (NH₄Cl) als Chlorierungsmittel durchgeführt wird, wobei die Chlorierungsvorrichtung mindestens eine Zuführeinrichtung zur Zufuhr des Chlorierungsmittels in Form von Ammoniumchlorid (NH₄Cl) aufweist und wobei das Ammoniumchlorid durch Rückgewinnung und/oder Abtrennung von bei der Chlorierung der Oxidationsprodukte aus dem Chlorierungsmittel resultierendem Ammoniak (NH₃) und nachfolgende Reaktion des Ammoniaks mit Chlorwasserstoff (HCl) rezykliert wird;
(d) mindestens eine Abtrennvorrichtung zur selektiven Abtrennung von Eisenchlorid, vorzugsweise Eisen(III)-chlorid, aus dem Produktgemisch, wobei die Abtrennvorrichtung als Sublimationsvorrichtung ausgebildet ist,
   wobei die Rückgewinnungs-Anlage nachgeschaltet und/oder in Prozessrichtung stromabwärts zur Abtrennvorrichtung mindestens eine Desublimationsvorrichtung zur Aufnahme und Desublimation von insbesondere sublimiertem Eisenchlorid und/oder zum Erhalt von insbesondere festem und/oder aufgereinigtem Eisenchlorid aufweist, insbesondere wobei die Desublimationsvorrichtung mit der Abtrennvorrichtung verbunden ist, oder
   wobei die Rückgewinnungs-Anlage nachgeschaltet und/oder in Prozessrichtung stromabwärts zur Abtrennvorrichtung mindestens eine Reduktionsvorrichtung zur Reduktion von insbesondere sublimiertem Eisenchlorid, insbesondere Eisen(III)-chlorid (FeCl₃), und zum Erhalt von metallischem Eisen und/oder zum Erhalt von Chlorwasserstoff (HCl) aufweist, insbesondere wobei die Reduktionsvorrichtung mit der Abtrennvorrichtung verbunden ist;
wobei die vorgenannten Vorrichtungen, nämlich die Bereitstellungs- und/oder Aufbereitungsvorrichtung, die Oxidations- und/oder Röstvorrichtung, die Chlorierungsvorrichtung und die Abtrennvorrichtung, in der angegebenen Reihenfolge in Prozessrichtung stromabwärts zueinander angeordnet sind und wobei die weiteren vorgenannten Vorrichtungen, nämlich die Desublimationsvorrichtung sowie die Reduktionsvorrichtung, wie zuvor definiert angeordnet sind und wobei die Anlage mindestens eine Reaktions- und Kondensationsvorrichtung zum Zusammenführen und/oder Inkontaktbringen und zur Reaktion von Ammoniak einerseits und Chlorwasserstoff andererseits zum Erhalt von rezykliertem Ammoniumchlorid aufweist.

Die erfindungsgemäße Rückgewinnungs-Anlage eignet sich in besonderer Weise zur Verwendung im Rahmen des zuvor beschriebenen Verfahrens nach der Erfindung. Insbesondere ermöglicht die erfindungsgemäße Rückgewinnungs-Anlage zum einen eine effiziente und umfängliche Aufreinigung bzw. Abtrennung der metallischen Komponenten aus dem zugrundeliegenden Ausgangsmaterial, wobei in diesem Zusammenhang insbesondere Eisen sowohl in metallischer Form als Rohmaterial für die weitere insbesondere industrielle Verwendung sowie in Form von Eisenchlorid, insbesondere Eisen(III)-chlorid, gewonnen werden kann. Zudem können auf Basis der erfindungsgemäßen Rückgewinnungs-Anlage Edelmetalle in Form von Gold und Silber gewonnen werden. Darüber hinaus ermöglicht die erfindungsgemäße Rückgewinnungs-Anlage die in Bezug auf das erfindungsgemäße Verfahren insbesondere vorgesehene Rezyklierung des Chlorierungsmittels, einhergehend mit den entsprechenden ökonomischen wie ökologischen Vorteilen.

Im Rahmen der vorliegenden Erfindung kann es gleichermaßen vorgesehen sein, dass die erfindungsgemäße Rückgewinnungs-Anlage mindestens eine Desublimationsvorrichtung und mindestens eine Reduktionsvorrichtung, wie jeweils zuvor beschrieben, aufweist, insbesondere sofern eine zeitgleiche bzw. parallele Rückgewinnung sowohl von Eisenchlorid als auch von metallischem Eisen durchgeführt werden soll, insbesondere auf Basis der Behandlung entsprechender Teilströme von insbesondere sublimierten Eisenchlorid.

Für diesbezüglich weitere Ausführungen zu der erfindungsgemäßen Rückgewinnungs-Anlage kann auf die die erfindungsgemäße Aufreinigungs-Anlage betreffenden Unteransprüche und auf die entsprechenden Figurendarstellungen verwiesen werden.

Die vorliegende Erfindung wird nunmehr im Hinblick auf die erfindungsgemäße Rückgewinnungs-Anlage anhand bevorzugter Ausführungsbeispiele bzw. Ausführungsformen darstellenden Zeichnungen bzw. Figurendarstellungen näher spezifiziert. Im Zusammenhang mit der Erläuterung dieser bevorzugten Ausführungsbeispiele der vorliegenden Erfindung, welche jedoch in Bezug auf die vorliegende Erfindung keinesfalls beschränkend sind, werden auch weitergehende Vorteile, Eigenschaften, Aspekte und Merkmale der vorliegenden Erfindung aufgezeigt.

In den weiterführenden Figurendarstellungen zeigt:

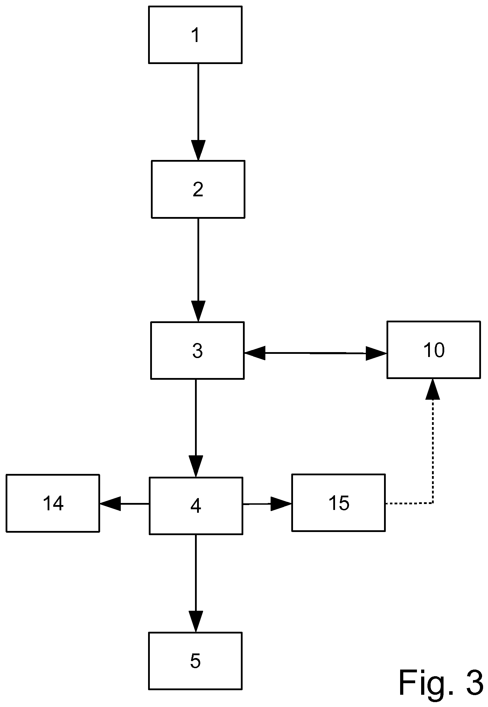

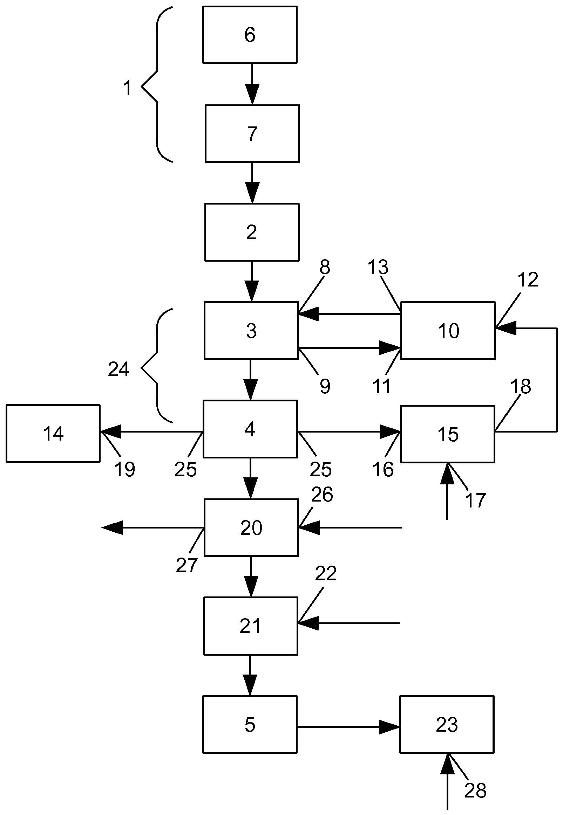

- Fig. 3: eine schematische Darstellung bzw. Übersicht der erfindungsgemäßen Rückgewinnungs-Anlage A zur Rohstoffgewinnung aus Erzen bzw. Erzrückständen, nämlich zur Rückgewinnung von Metallen aus Pyritrückständen, bevorzugt aus bei der Schwefelsäureherstellung anfallendem Kiesabbrand;
- Fig. 4: eine weitere schematische Darstellung bzw. Übersicht der erfindungsgemäßen Rückgewinnungs-Anlage A gemäß einer weiteren erfindungsgemäßen Ausführungsform.

Fig. 3 und Fig. 4 schematisieren somit bevorzugte Ausführungsformen der erfindungsgemäßen Rückgewinnungs-Anlage A, wie sie nachfolgend weiterführend definiert wird:
Insbesondere zeigen Fig. 3 und Fig. 4 die erfindungsgemäße Rückgewinnungs-Anlage A zur (Rück-)Gewinnung von metallischem Eisen und/oder Eisenchlorid aus Erzen und/oder Erzrückständen in Form von Pyritrückständen, besonders bevorzugt aus bei der Schwefelsäureherstellung anfallendem Kiesabbrand, insbesondere Rückgewinnungs-Anlage A zur Durchführung des zuvor definierten Verfahrens nach der Erfindung, wobei die Rückgewinnungs-Anlage A umfasst:
   (a) mindestens eine Bereitstellungs- und/oder Aufbereitungsvorrichtung 1 zur Bereitstellung, insbesondere Aufbereitung, eines Ausgangsmaterials in Form mindestens eines Erzes und/oder Erzrückstands, vorzugsweise mindestens eines bei der Schwefelsäureherstellung anfallenden Kiesabbrands, wobei das Ausgangsmaterial Eisen als Hauptbestandteil, mindestens ein Edelmetall, ausgewählt aus Gold und/oder Silber, sowie mindestens ein weiteres Metall, ausgewählt aus der Gruppe von Kupfer, Zink, Blei, Cobalt, Titan, Mangan, Vanadium und Chrom, enthält;
   (b) mindestens eine Oxidations- und/oder Röstvorrichtung 2 zur Oxidationsbehandlung, insbesondere Calcinierung und/oder oxidativen Röstung, des bereitgestellten Ausgangsmaterials zum Erhalt von Eisenoxid und Oxiden der weiteren Metalle als Oxidationsprodukte in dem resultierenden Produktgemisch;
   (c) mindestens eine Chlorierungsvorrichtung 3 zur Chlorierung der Oxidationsprodukte, insbesondere Oxide, in dem Produktgemisch und zur Verwendung mindestens eines rezyklierbaren Chlorierungsmittels zur Chlorierung von Eisenoxid und Oxiden der weiteren Metalle zum Erhalt von Eisenchlorid, vorzugsweise Eisen(III)-chlorid, und von Chloriden der weiteren Metalle in dem Produktgemisch, wobei die Chlorierung als Festphasenreaktion unter Verwendung von Ammoniumchlorid (NH₄Cl) als Chlorierungsmittel durchgeführt wird, wobei die Chlorierungsvorrichtung 3 mindestens eine Zuführeinrichtung 8 zur Zufuhr des Chlorierungsmittels in Form von Ammoniumchlorid (NH₄Cl) aufweist und wobei das Ammoniumchlorid durch Rückgewinnung und/oder Abtrennung von bei der Chlorierung der Oxidationsprodukte aus dem Chlorierungsmittel resultierendem Ammoniak (NH₃) und nachfolgende Reaktion des Ammoniaks mit Chlorwasserstoff (HCl) rezykliert wird;
   (d) mindestens eine Abtrennvorrichtung 4 zur selektiven Abtrennung und/oder Isolierung von Eisenchlorid, vorzugsweise Eisen(III)-chlorid, aus dem Produktgemisch, wobei die Abtrennvorrichtung 4 als Sublimationsvorrichtung ausgebildet ist,
      wobei die Rückgewinnungs-Anlage A nachgeschaltet und/oder in Prozessrichtung stromabwärts zur Abtrennvorrichtung 4 mindestens eine Desublimationsvorrichtung 14 zur Aufnahme und Desublimation von insbesondere sublimiertem Eisenchlorid und/oder zum Erhalt von insbesondere festem und/oder aufgereinigtem Eisenchlorid aufweist, insbesondere wobei die Desublimationsvorrichtung 14 mit der Abtrennvorrichtung 4 verbunden ist (letzteres insbesondere zur Aufnahme von insbesondere gasförmigem Eisenchlorid aus der Abtrennvorrichtung 4), oder
      wobei die Rückgewinnungs-Anlage A nachgeschaltet und/oder in Prozessrichtung stromabwärts zur Abtrennvorrichtung 4 mindestens eine Reduktionsvorrichtung 15 zur Reduktion von insbesondere sublimiertem Eisenchlorid, insbesondere Eisen(III)-chlorid (FeCl₃), und zum Erhalt von metallischem Eisen und/oder zum Erhalt von Chlorwasserstoff (HCl), aufweist, insbesondere wobei die Reduktionsvorrichtung 15 mit der Abtrennvorrichtung 4 verbunden ist (letzteres insbesondere zur Aufnahme von insbesondere gasförmigem Eisenchlorid aus der Abtrennvorrichtung 4);
wobei die vorgenannten Vorrichtungen 1, 2, 3, 4 in der angegebenen Reihenfolge in Prozessrichtung stromabwärts zueinander angeordnet sind und wobei die vorgenannten Vorrichtungen 14, 15 wie zuvor definiert angeordnet sind und
wobei die Anlage A mindestens eine Reaktions- und Kondensationsvorrichtung 10 zum Zusammenführen und/oder Inkontaktbringen und zur Reaktion von Ammoniak einerseits und Chlorwasserstoff andererseits zum Erhalt von rezykliertem Ammoniumchlorid aufweist.

Die Chlorierungsvorrichtung 3 kann erfindungsgemäß ausgewählt sein aus der Gruppe von Drehrohröfen und Trommelöfen.

Wie Fig. 4 zu entnehmen ist, so weist die Chlorierungsvorrichtung 3 mindestens eine Zuführeinrichtung 8 zur Zufuhr eines Chlorierungsmittels, insbesondere Ammoniumchlorid (NH₄Cl), auf. Zudem kann die Chlorierungsvorrichtung 3 mindestens eine Abführ- und/oder Ausschleusungseinrichtung 9 aufweisen, insbesondere zur Rückgewinnung und/oder Abtrennung von bei der Chlorierung der Oxidationsprodukte aus dem Chlorierungsmittel resultierenden Umsetzungsprodukten, insbesondere von vorzugsweise gasförmigem Ammoniak (NH₃).

Darüber hinaus ist in Fig. 3 und Fig. 4 weiterhin zu entnehmen, dass die Rückgewinnungs-Anlage A mindestens eine Reaktions- und Kondensationsvorrichtung 10 aufweist. Die Reaktions- und Kondensationsvorrichtung dient zum Zusammenführen bzw. Inkontaktbringen und zur Reaktion von insbesondere gasförmigem Ammoniak (NH₃) einerseits und Chlorwasserstoff (HCl) andererseits zum Erhalt von rezykliertem Ammoniumchlorid (NH₄Cl).

Die Reaktions- und Kondensationsvorrichtung 10 kann insbesondere mit der Chlorierungsvorrichtung 3 verbunden sein, und zwar insbesondere insofern, als, vorzugsweise unabhängig voneinander, gasförmiges Ammoniak aus der Chlorierungsvorrichtung 3 in die Reaktions- und Kondensationseinrichtung 10 geführt und rezykliertes Ammoniumchlorid aus der Reaktions- und Kondensationseinrichtung 10 in die Chlorierungsvorrichtung 3 geführt werden kann. Zudem kann die Reduktionsvorrichtung 15 mit der Reaktions- und Kondensationsvorrichtung 10 verbunden sein, insbesondere zur Abgabe einer anorganischen Chlorverbindung, insbesondere Chlorwasserstoff (HCl), aus der Reduktionsvorrichtung 15 in die Reaktions- und Kondensationsvorrichtung 10.

Die erfindungsgemäße Rückgewinnungs-Anlage A ermöglicht somit aufgrund der apparativen Besonderheit der gezielten Verwendung einer Reaktions- bzw. Kondensationsvorrichtung 10 die Rezyklierung des Chlorierungsmittels, und zwar insbesondere von Ammoniumchlorid.

Im Allgemeinen kann die Reaktions- bzw. Kondensationsvorrichtung 10, wie in Fig. 3 schematisiert, eine im Zusammenhang mit der Reduktion von in der Abtrennvorrichtung 4 aus dem Produktgemisch entfernten Eisenchlorid resultierende anorganische Chlorverbindung aufnehmen, welche der Rezyklierung des Chlorierungsmittels dient.

Was die Reaktions- bzw. Kondensationsvorrichtung 10 im Speziellen anbelangt, so kann es erfindungsgemäß vorgesehen sein, dass, wie in Fig. 4 dargestellt, diese eine Zuführeinrichtung 11 zur Zufuhr und/oder Aufnahme von insbesondere gasförmigem Ammoniak (NH₃) bzw. mindestens eine weitere Zuführeinrichtung 12 zur Zufuhr und/oder Aufnahme mindestens einer vorzugsweise anorganischen Chlorverbindung, insbesondere Chlorwasserstoff (HCl), und/oder mindestens eine Abführ- und/oder Ausschleusungseinrichtung 13, insbesondere zur Rückgewinnung und/oder Abtrennung des rezyklierten Chlorierungsmittels, insbesondere Ammoniumchlorid (NH₄Cl), aufweist. Dabei ist es erfindungsgemäß von Vorteil, wenn die Zuführeinrichtung 11 mit der Abführ- und/oder Ausschleusungsseinrichtung 9 der Chlorierungsvorrichtung 3 verbunden ist. Gleichermaßen ist es von Vorteil, wenn die Abführ- und/oder Ausschleusungseinrichtung 13 mit der Zuführeinrichtung 8 der Chlorierungsvorrichtung 3 verbunden ist. Hierdurch wird ein effizienter und selektiver Stofftransport der im Hinblick auf das Chlorierungsmittel relevanten Edukte bzw. Produkte ermöglicht.

Darüber hinaus zeigt Fig. 4, dass die Rückgewinnungs-Anlage A zudem mindestens eine Desublimationsvorrichtung 14, insbesondere zur Aufnahme und Desublimation von insbesondere sublimiertem Eisenchlorid, insbesondere Eisen(III)-chlorid (FeCl₃), bzw. zum Erhalt von insbesondere festem bzw. aufgereinigtem Eisenchlorid, insbesondere Eisen(III)-chlorid (FeCl₃), aufweist. Die Desublimationsvorrichtung 14 ist dabei mit der Abtrennvorrichtung 4 verbunden, und zwar insbesondere mit der Einrichtung 25 der Abtrennvorrichtung 4 zur Entnahme bzw. Abfuhr von insbesondere gasförmigem Eisenchlorid, insbesondere Eisen(III)-chlorid (FeCl₃). In diesem Zusammenhang sollte die Desublimationsvorrichtung 14 mindestens eine Zuführeinrichtung 19 aufweisen, und zwar insbesondere zur Aufnahme von insbesondere sublimiertem Eisenchlorid, insbesondere Eisen(III)-chlorid (FeCl₃), vorzugsweise aus der Abtrennvorrichtung 4.

Die Desublimationsvorrichtung kann beispielsweise als Abkühl- und/oder Kondensationsvorrichtung ausgebildet sein.

Fig. 4 zeigt weiterhin, dass die Anlage A nach der Erfindung zudem mindestens eine Reduktionsvorrichtung 15, insbesondere zur Reduktion von insbesondere sublimiertem Eisenchlorid, insbesondere Eisen(III)-chlorid (FeCl₃), und zum Erhalt von metallischem Eisen aufweist. In diesem Zusammenhang ist die Reduktionsvorrichtung 15 mit der Abtrennvorrichtung 4 verbunden sein. Zudem sollte die Reduktionsvorrichtung 15 mindestens eine Zuführeinrichtung 16 aufweisen, insbesondere zur Aufnahme von insbesondere sublimiertem Eisenchlorid, insbesondere Eisen(III)-chlorid (FeCl₃), vorzugsweise aus der Abtrennvorrichtung 4.

Insbesondere kann die Reduktionsvorrichtung 15, wie zuvor angeführt, mit der Abtrennvorrichtung 4 verbunden sein, insbesondere zur Aufnahme von Eisenchlorid. Vorzugsweise ist die Reduktionsvorrichtung 15 dabei über die Zuführeinrichtung 16 mit der Einrichtung 25 zur Entnahme bzw. Abfuhr von insbesondere sublimiertem Eisenchlorid, insbesondere Eisen(III)-chlorid (FeCl₃), verbunden.

Was die Reduktionsvorrichtung 15 weiterhin anbelangt, so kann diese mindestens eine weitere Zuführeinrichtung 17 zur Zufuhr und/oder Aufnahme eines Reduktionsmittels, insbesondere Wasserstoff oder Erdgas (insbesondere Methan), aufweisen.

Insbesondere kann die Reduktionsvorrichtung 15 zudem mit der Reaktions- und Kondensationsvorrichtung 10 verbunden sein, insbesondere zur Abgabe einer bei der Reduktion von Eisenchlorid entstehenden anorganischen Chlorverbindung, insbesondere Chlorwasserstoff, und Aufnahme in die Reaktions- und Kondensationsvorrichtung. In diesem Zusammenhang kann die Reduktionsvorrichtung 15 mindestens eine Abzugs- und/oder Ausführeinrichtung 18, insbesondere zur Rückgewinnung und/oder Abtrennung mindestens einer bei der Reduktion von Eisenchlorid, insbesondere Eisen(III)-chlorid, entstehenden anorganischen Chlorverbindung, insbesondere Chlorwasserstoff (HCl), und/oder zur Abfuhr mindestens einer bei der Reduktion von Eisenchlorid, insbesondere Eisen(III)-chlorid, entstehenden anorganischen Chlorverbindung, insbesondere Chlorwasserstoff (HCl), aufweisen. Insbesondere sollte die Abzugseinrichtung 18 mit der Zuführeinrichtung 12 der Reaktions- bzw. Kondensationsvorrichtung 10 verbunden sein.

Auf diese Art und Weise kann die im Hinblick auf die Rezyklierung des Chlorierungsmittels erforderliche anorganische Chlorverbindung über die Reduktion von Eisenchlorid aus dem der Rückgewinnungsanlage zugrundeliegenden Verfahrensführung selbst bereitgestellt und überführt werden, wobei die erfindungsgemäße Rückgewinnungs-Anlage A die diesbezüglichen konstruktiven Voraussetzungen, wie zuvor angeführt, bereitstellt.

Wie in Fig. 4 im Detail angeführt, kann die Bereitstellungs- und/oder Aufbereitungsvorrichtung 1 darüber hinaus und insbesondere im Hinblick auf die Bereitstellung des Ausgangsmaterials mindestens eine Zerkleinerungseinrichtung 6, insbesondere zur Zerkleinerung und/oder Homogenisierung des Ausgangsmaterials, bzw. mindestens eine Trocknungseinrichtung 7, insbesondere zur Trocknung des Ausgangsmaterial, umfassen. Gemäß einer erfindungsgemäß bevorzugten Ausführungsform kann dabei die Trocknungseinrichtung 7 in Prozessrichtung stromabwärts zu der Zerkleinerungseinrichtung 6 angeordnet sein.

Was die erfindungsgemäße Rückgewinnungs-Anlage A weiterhin anbelangt, so kann die Oxidations- bzw. Röstvorrichtung 2 ausgewählt sein aus der Gruppe von Drehrohröfen, Trommelöfen, Wirbelschichtöfen und Flugstromreaktoren. Insbesondere kann die Oxidations- und/oder Röstvorrichtung 2 mindestens eine Einrichtung zur Zufuhr mindestens eines Oxidationsmittels, insbesondere Luft und/oder Sauerstoff, aufweisen.

Was die erfindungsgemäße Rückgewinnungs-Anlage A weiterhin anbelangt, so ist die Abtrennvorrichtung 4 als Sublimationsvorrichtung ausgebildet ist. Insbesondere kann die Abtrennvorrichtung 4 ein Drehrohrofen, Wirbelschichtofen und/oder Trommelofen sein. Die Abtrennvorrichtung sollte gleichermaßen mindestens eine Einrichtung 25 zur Entnahme bzw. Abfuhr von insbesondere gasförmigem Eisenchlorid, insbesondere Eisen(III)-chlorid, aufweisen.

Fig. 4 verdeutlicht weiterhin eine erfindungsgemäße Ausführungsform, wonach die Chlorierungsvorrichtung 3 und die Abtrennvorrichtung 4 in eine gemeinsame Vorrichtung 24 zusammengeführt sein können.

In diesem Zusammenhang kann die gemeinsame Vorrichtung 24 in Form eines gemeinsamen Drehrohrofens, insbesondere mit mindestens zwei, vorzugsweise zwei Temperaturabschnitten, ausgebildet sein. Insbesondere kann in dem ersten Temperaturabschnitt bzw. in der ersten Temperaturzone die für die Chlorierung der Metallkomponenten erforderliche Temperatur vorliegen und die Chlorierung der Metallkomponenten in dem Material mit den zuvor erhaltenen Oxidationsprodukten durch Zugabe des Chlorierungsmittels erfolgen, wobei das so resultierende Produktgemisch mit den chlorierten Metallkomponenten nachfolgend in den zweiten Temperaturabschnitt bzw. in die zweite Temperaturzone überführt werden kann, wobei in dem zweiten Temperaturabschnitt bzw. in der zweiten Temperaturzone die für die Sublimation insbesondere von Eisen(III)-chlorid erforderlichen Temperaturen vorliegen. Die gemeinsame Vorrichtung 24 sollte in diesem Zusammenhang über die entsprechenden Einrichtungen zur Zufuhr des Chlorierungsmittels sowie zur Abfuhr von bei der Chlorierung aus dem Chlorierungsmittel resultierenden Umsetzungsprodukten, insbesondere Ammoniak (NH3), sowie mindestens eine weiterführende Einrichtung 25 zur Entnahme bzw. Abfuhr von insbesondere gasförmigem Eisenchlorid, insbesondere Eisen(III)-chlorid (FeCl₃), wie es bei der Sublimation resultiert, aufweisen.

Fig. 4 zeigt eine weitere Ausführungsform der erfindungsgemäßen Anlage A, wonach die Anlage A zudem mindestens eine Aufschlämm- bzw. Dispergiervorrichtung 20 aufweist, insbesondere zur Abtrennung und/oder Isolierung von Kupferchlorid, insbesondere Kupfer(II)-chlorid (CuCl₂), und/oder von Zinkchlorid, insbesondere Zink(II)-chlorid (ZnCl₂), und/oder von Bleichlorid, insbesondere Blei(II)-chlorid (PbCl₂), und/oder von Cobaltchlorid, insbesondere Cobalt(II)-chlorid (CoCl₂), aus dem von Eisenchlorid, insbesondere Eisen(III)-chlorid (FeCl₃), befreiten Produktgemisch.

In diesem Zusammenhang sollte die Aufschlämm- bzw. Dispergiervorrichtung 20 in Prozessrichtung stromabwärts zu der Abtrennvorrichtung 4 bzw. in Prozessrichtung stromaufwärts zu der Abtrenn- bzw. Filtervorrichtung 5 angeordnet sein. Die Aufschlämm- bzw. Dispergiervorrichtung 20 dient insbesondere zum Aufschlämmen bzw. Dispergieren des von Eisenchlorid, insbesondere Eisen(III)-chlorid (FeCl₃), befreiten Produktgemischs, wobei die zuvor angeführten Chloride der weiteren Metalle in eine Lösung bzw. in eine Suspension überführt werden. Diesbezüglich kann die Aufschlämm- bzw. Dispergiervorrichtung 20 gleichermaßen mindestens eine Einrichtung 26 zur Aufnahme eines Dispergier- bzw. Löse- und/oder Suspensionsmittels, insbesondere Wasser, aufweisen, welches sowohl zur Aufschlämmung des Produktgemischs als auch zur Überführung der in Rede stehenden Chloride der weiteren Metalle in eine Lösung bzw. Suspension dient. Zudem sollte die Aufschlämm- bzw. Dispergiervorrichtung 20 mindestens eine Abzugseinrichtung 27 zur Entnahme der vorzugsweise wässrigen Lösung bzw. Suspension der Chloride der weiteren Metalle aufweisen.

Insbesondere kann die Aufschlämm- und/oder Dispergiervorrichtung 20 ein Rührkessel bzw. ein Rührreaktor bzw. eine Gegenstromvorrichtung, vorzugsweise mit jeweils mindestens einer Abzugseinrichtung 27, sein. Die Abzugseinrichtung dient insbesondere zur Entnahme der vorzugsweise wässrigen Lösung bzw. Suspension der aus dem Produktgemisch abgetrennten Chloride der weiteren Metalle.

Fig. 4 zeigt weiterhin eine erfindungsgemäße Ausführungsform, wonach die Anlage A zudem mindestens eine Zugabe- und/oder Zuführvorrichtung 21, vorzugsweise mit einer Zugabeeinrichtung 22, aufweist, insbesondere zur Zugabe mindestens einer Komplexierungskomponente zur Überführung des Edelmetalls, insbesondere Gold und/oder Silber, in eine Lösung und/oder Suspension, vorzugsweise Lösung. In diesem Zusammenhang kann die Komplexierungskomponente ausgewählt sein aus der Gruppe von Cyanidlauge, lod/Brom-Lösung und Thiosulfatlösung.

Was die Zugabevorrichtung 21 anbelangt, so sollte diese in Prozessrichtung stromabwärts zu der Abtrennvorrichtung 4, insbesondere in Prozessrichtung stromabwärts zu der Aufschlämm- und/oder Dispergiervorrichtung 20, und/oder in Prozessrichtung stromaufwärts zu der Abtrenn- und/oder Filtervorrichtung 5 angeordnet sein. Die Zugabe- bzw. Zuführvorrichtung 21 dient insbesondere zur Aufnahme des von Eisenchlorid, insbesondere Eisen(III)-chlorid, sowie von den Chloriden der weiteren Metalle befreiten Produktgemischs.

In der Zugabe- bzw. Zuführvorrichtung 21 wird durch Zugabe der zuvor definierten Komponente das in dem Produktgemisch vorhandene Edelmetall, insbesondere Gold und/oder Silber, in eine Lösung bzw. Suspension überführt, wobei diesbezüglich insbesondere Wasser als Löse- bzw. Suspensionsmittel eingesetzt wird. In diesem Zusammenhang kann die Zugabe- bzw. Zuführvorrichtung 21 gegebenenfalls gleichermaßen mindestens eine Einrichtung zur Aufnahme des Löse- bzw. Suspendiermittels, insbesondere Wasser, aufweisen.

Die Zugabe- bzw. Zuführvorrichtung 21 dient somit insbesondere zur Zugabe und/oder zum Inkontaktbringen des der Komponente zur Überführung des Edelmetalls in eine Lösung und/oder Dispersion zu bzw. mit dem insbesondere aufgeschlämmten bzw. dispergierten Produktgemisch, welches von Eisenchlorid, insbesondere Eisen(III)-chlorid, sowie den Chloriden der weiteren Metalle befreit ist.

Beispielsweise kann es sich bei der Zugabe- bzw. Zuführvorrichtung 21 um einen Rührkessel oder dergleichen handeln.

Weiterhin kann die erfindungsgemäße Anlage A zudem mindestens eine Extraktionsvorrichtung 23, insbesondere zur Abtrennung und/oder Gewinnung des Edelmetalls, insbesondere Gold und/oder Silber, aus der Lösung und/oder Suspension, aufweisen. In diesem Zusammenhang kann die Extraktionsvorrichtung eine Ausfällvorrichtung und/oder Sorptionsvorrichtung, insbesondere Adsorptionsvorrichtung, sein.

Insbesondere kann die Extraktionsvorrichtung 23 in Prozessrichtung stromabwärts zu der Abtrenn- und/oder Filtervorrichtung 5 angeordnet sein.

Beispielsweise kann die Extraktionsvorrichtung 23 derart ausgebildet sein, dass diese mindestens eine Einrichtung 28 zur Aufnahme eines Ausfällmittels, wie insbesondere partikuläres Zink oder Aluminium, aufweist. Das auf diese Weise ausgefällte Gold kann über entsprechende Filtervorrichtungen oder Sedimentationsvorrichtungen abgetrennt und isoliert werden.

Im Rahmen der Abtrennung des Edelmetalls können im Allgemeinen auch Rührvorrichtungen, Verdickungsvorrichtungen sowie Filtrationsvorrichtungen, beispielsweise auf Basis von Trommelfiltern, insbesondere Trommelvakuumfiltern, eingesetzt werden.

Die jeweiligen Vorrichtung bzw. Einrichtungen der erfindungsgemäßen Rückgewinnungs-Anlage A können zur Gewährleistung der zugrundeliegenden Stoff- bzw. Materialtransportvorgänge über dem Fachmann an sich bekannte Transporteinrichtungen miteinander verbunden sein, beispielsweise auf Basis von Förder- und/oder Bandtransporteinrichtungen zum Transport von in fester Phase vorliegendem Material und/oder Rohrleitungseinrichtungen zum Transport von in der Gasphase befindlichen Stoffen.

Darüber hinaus kann die erfindungsgemäße Rückgewinnungs-Anlage gegebenenfalls mindestens eine weitere Vorrichtung zur weiteren Aufarbeitung des nach der Entfernung des Edelmetalls, insbesondere Gold und/oder Silber, verbleibenden und insbesondere festen Produktgemischs aufweisen. Insbesondere kann die erfindungsgemäße Anlage mindestens eine Vorrichtung zur Abtrennung von Siliciumdioxid und/oder mindestens eine Vorrichtung zur Reduktion von Siliciumdioxid zum Erhalt von elementarem Silicium aufweisen.

Insgesamt wird im Rahmen der vorliegenden Erfindung mit der Rückgewinnungs-Anlage A nach der Erfindung ein effizientes System zur Aufarbeitung insbesondere von Pyritabfällen, wie Kiesabbrand, bereitgestellt, welches die selektive Abtrennung bzw. Isolierung verschiedener wirtschaftlich-industriell relevanter Rohstoffe ermöglicht. Insbesondere erlaubt die erfindungsgemäße Rückgewinnungs-Anlage A eine effiziente Durchführung des Verfahrens nach der Erfindung, insbesondere im Hinblick auf die Rezyklierung des Chlorierungsmittels bei insgesamt verringertem Chemikalien- und Energieeinsatz.

Insbesondere betrifft die vorliegende Erfindung auch eine Rückgewinnungs-Anlage A, vorzugsweise wie zuvor definiert, zur (Rück-)Gewinnung von metallischem Eisen und/oder Eisenchlorid aus Erzen und/oder Erzrückständen in Form von Pyritrückständen, besonders bevorzugt aus bei der Schwefelsäureherstellung anfallendem Kiesabbrand, insbesondere Rückgewinnungs-Anlage A zur Durchführung des zuvor definierten Verfahrens nach der Erfindung, wobei die Rückgewinnungs-Anlage A umfasst:
(a) mindestens eine Bereitstellungs- und/oder Aufbereitungsvorrichtung 1 zur Bereitstellung, insbesondere Aufbereitung, eines Ausgangsmaterials in Form mindestens eines Erzes und/oder Erzrückstands, vorzugsweise mindestens eines bei der Schwefelsäureherstellung anfallenden Kiesabbrands, insbesondere wobei das Ausgangsmaterial Eisen als Hauptbestandteil, mindestens ein Edelmetall, ausgewählt aus Gold und/oder Silber, sowie mindestens ein weiteres Metall, ausgewählt aus der Gruppe von Kupfer, Zink, Blei, Cobalt, Titan, Mangan, Vanadium und Chrom, enthält;
(b) mindestens eine Oxidations- und/oder Röstvorrichtung 2 zur Oxidationsbehandlung, insbesondere Calcinierung und/oder oxidativen Röstung, des bereitgestellten Ausgangsmaterials zum Erhalt von Eisenoxid und Oxiden der weiteren Metalle als Oxidationsprodukte in dem resultierenden Produktgemisch;
(c) mindestens eine Chlorierungsvorrichtung 3 zur Chlorierung der Oxidationsprodukte, insbesondere Oxide, in dem Produktgemisch und zur Verwendung mindestens eines rezyklierbaren Chlorierungsmittels zur Chlorierung von Eisen und der weiteren Metalle zum Erhalt von Eisenchlorid, vorzugsweise Eisen(III)-chlorid, und von Chloriden der weiteren Metalle in dem Produktgemisch,
   wobei die Chlorierung als Festphasenreaktion unter Verwendung von Ammoniumchlorid (NH₄Cl) als Chlorierungsmittel durchgeführt wird, wobei die Chlorierungsvorrichtung mindestens eine Zuführeinrichtung zur Zufuhr des Chlorierungsmittels in Form von Ammoniumchlorid (NH₄Cl) aufweist und wobei das Ammoniumchlorid durch Rückgewinnung und/oder Abtrennung von bei der Chlorierung der Oxidationsprodukte aus dem Chlorierungsmittel resultierendem Ammoniak (NH₃) und nachfolgende Reaktion des Ammoniaks mit Chlorwasserstoff (HCl) rezykliert wird,
   wobei die Rückgewinnungs-Anlage A mindestens eine Reaktions- und Kondensationsvorrichtung 10 zum Zusammenführen und/oder Inkontaktbringen und zur Reaktion von insbesondere gasförmigem Ammoniak (NH₃) einerseits und mindestens einer vorzugsweise anorganischen Chlorverbindung in Form von Chlorwasserstoff (HCl) andererseits zum Erhalt von rezykliertem Chlorierungsmittel in Form von Ammoniumchlorid (NH₄Cl) aufweist, insbesondere wobei die Reaktions- und Kondensationsvorrichtung 10 mit der Chlorierungsvorrichtung 3 verbunden ist (letzteres insbesondere zur Aufnahme von Ammoniak (NH₃) aus der Chlorierungsvorrichtung 3 und insbesondere zur Abgabe von rezykliertem Chlorierungsmittel in Form von Ammoniumchlorid in die Chlorierungsvorrichtung 3);
(d) mindestens eine Abtrennvorrichtung 4 zur selektiven Abtrennung von Eisenchlorid, vorzugsweise Eisen(III)-chlorid, aus dem Produktgemisch, wobei die Abtrennvorrichtung 4 als Sublimationsvorrichtung ausgebildet ist,
   wobei die Rückgewinnungs-Anlage A nachgeschaltet und/oder in Prozessrichtung stromabwärts zur Abtrennvorrichtung 4 mindestens eine Desublimationsvorrichtung 14 zur Aufnahme und Desublimation von insbesondere sublimiertem Eisenchlorid und/oder zum Erhalt von insbesondere festem und/oder aufgereinigtem Eisenchlorid aufweist, insbesondere wobei die Desublimationsvorrichtung 14 mit der Abtrennvorrichtung 4 verbunden ist (letzteres insbesondere zur Aufnahme von insbesondere gasförmigem Eisenchlorid aus der Abtrennvorrichtung 4), oder
   wobei die Rückgewinnungs-Anlage A nachgeschaltet und/oder in Prozessrichtung stromabwärts zur Abtrennvorrichtung 4 mindestens eine Reduktionsvorrichtung 15 zur Reduktion von insbesondere sublimiertem Eisenchlorid, insbesondere Eisen(III)-chlorid (FeCl₃), und zum Erhalt von metallischem Eisen und/oder zum Erhalt von Chlorwasserstoff (HCl) aufweist, insbesondere wobei die Reduktionsvorrichtung 15 mit der Abtrennvorrichtung 4 verbunden ist (letzteres insbesondere zur Aufnahme von insbesondere gasförmigem Eisenchlorid aus der Abtrennvorrichtung 4) und/oder insbesondere wobei die Reduktionsvorrichtung 15 mit der Reaktions- und Kondensationsvorrichtung 10 verbunden ist (letzteres insbesondere zur Abgabe mindestens einer anorganischen Chlorverbindung in die Reaktions- und Kondensationsvorrichtung 10);
(e) gegebenenfalls mindestens eine Aufschlämm- und/oder Dispergiervorrichtung 20, insbesondere zur nachfolgenden Abtrennung und/oder Isolierung von Chloriden der weiteren Metalle, insbesondere von Kupferchlorid, insbesondere Kupfer(II)-chlorid (CuCl₂), und/oder von Zinkchlorid, insbesondere Zink(II)-chlorid (ZnCl₂), und/oder von Bleichlorid, insbesondere Blei(II)-chlorid (PbCl₂), und/oder von Cobaltchlorid, insbesondere Cobalt(II)-chlorid (CoCl₂), aus dem von Eisenchlorid, insbesondere Eisen(III)-chlorid (FeCl₃), befreiten Produktgemisch;
wobei die vorgenannten Vorrichtungen 1, 2, 3, 4, 20 in der angegebenen Reihenfolge in Prozessrichtung stromabwärts zueinander angeordnet sind und wobei die vorgenannten Vorrichtungen 10, 14, 15 wie zuvor definiert angeordnet sind.

Schließlich betrifft die vorliegende Erfindung - gemäß einem **weiteren** Aspekt der vorliegenden Erfindung - die Verwendung einer Rückgewinnungs-Anlage A, wie zuvor definiert, in einem Verfahren zur (Rück-)Gewinnung von metallischem Eisen und/oder Eisenchlorid aus Erzen und/oder Erzrückständen in Form von Pyritrückständen, bevorzugt aus bei der Schwefelsäureherstellung anfallendem Kiesabbrand, wie zuvor definiert.

Weitere Ausgestaltungen, Abwandlungen, Variationen, Modifikationen, Besonderheiten und Vorteile der vorliegenden Erfindung sind für den Fachmann beim Lesen der Beschreibung ohne Weiteres erkennbar und realisierbar, ohne dass er dabei den Rahmen der vorliegenden Erfindung verlässt.

Die vorliegende Erfindung wird anhand des nachfolgenden Ausführungsbeispiels veranschaulicht, welches die vorliegende Erfindung jedoch keinesfalls beschränken soll.

### Ausführungsbeispiel:

### Durchführung des erfindungsgemäßen Verfahrens gemäß einer bevorzugten Ausführungsform der vorliegenden Erfindung:

Das erfindungsgemäße Verfahren kann gemäß einer speziellen Ausführungsform der vorliegenden Erfindung wie nachfolgend beschrieben durchgeführt werden:

### 1. Bereitstellung des Rohmaterials:

Als Rohmaterial wird ein Pyritrückstand in Form von aus der Schwefelsäureherstellung stammendem Kiesabbrand in einer Menge von 1.000 kg eingesetzt. Das eingesetzte Rohmaterial wird zunächst einer Trocknung bei 120 °C unterzogen. Eine Probe des Rohmaterials wird unter Verwendung eines Massenspektrometers mit induktiv gekoppeltem Plasma (ICP; ELAN Modell DRC) hinsichtlich ihrer elementaren Zusammensetzung analysiert. Das Ausgangsmaterial enthält folgende elementare Bestandteile, wobei die entsprechenden Massenanteile auf das jeweilige Element bezogen sind:

| Element | Massenanteil |
|---|---|
| Fe | 52 Gew.-% |
| Au | 2 g/t |
| Ag | 10 g/t |
| Cu | 0,2 Gew.-% |
| Zn | 0,4 Gew.-% |
| Pb | 0,04 Gew.-% |
| Co | 0,01 Gew.-% |
| Si | 7 Gew.-% |
| Ca | 4,4 Gew.-% |

Eine weiterführende Analyse des eingesetzten Ausgangsmaterials zeigt, dass 65 % des Eisens in Form von Eisen(II, III)-oxid (Fe₃O₄) sowie 35 % des Eisens in Form von Eisen(II)-oxid (Fe₂O₃) vorliegt. Zudem liegt Silicium in Form von Siliciumoxid sowie Calcium in Form von Calciumsulfat vor. Die weiteren Metalle liegen mit Ausnahme von Gold in Form ihrer Oxide vor.

Das durch Trocknung erhaltene Ausgangsmaterial wird wie folgt weiterführend verarbeitet.

### 2. Oxidationsbehandlung des Ausgangsmaterials:

Nachfolgend wird das getrocknete Ausgangsmaterial einer Oxidationsbehandlung bzw. einer Calcinierung (oxidative Röstung) unterzogen. Hierzu wird das Ausgangsmaterial auf eine Temperatur von 700 °C erhitzt. Durch die Röstung wird insbesondere eine Überführung von Eisen in die trivalente Form unter Erhalt von Eisen(III)-oxid (Fe₂O₃) erreicht. Das erhaltene Produktgemisch wird hinsichtlich seiner Zusammensetzung weiterführend analysiert. Das nach der Oxidationsbehandlung erhaltene Produktgemisch enthält Eisen nunmehr zumindest im Wesentlichen vollständig in Form von Eisen(III)-oxid (Fe₂O₃). Die übrigen Metalle mit Ausnahme von Gold und Calcium liegen in Form von Oxiden vor, insbesondere in der höchsten Oxidationsstufe der jeweiligen Metalle.

### 3. Chlorierung von Eisen sowie der weiteren Metalle:

Die zuvor erhaltenen Oxidationsprodukte, insbesondere auf Basis von Eisen(III)-oxid sowie der Oxide der weiteren Metalle, wie Kupfer, Zink, Blei und Cobalt sowie Silber, werden einer Chlorierung unterzogen, wobei hierzu zu dem erhaltenen Produktgemisch festes bzw. pulverförmiges Ammoniumchlorid (NH₄Cl) gegeben wird. Das resultierende Gemisch wird auf eine Temperatur von 300 °C erhitzt. Hierbei wird Eisen(III)-oxid zu Eisen(III)-chlorid (FeCl₃) unter Freisetzung von Ammoniak und Wasser umgesetzt. Das resultierende gasförmige Ammoniak wird entfernt bzw. abgezogen und zur Rezyklierung des Chlorierungsmittels verwendet, wie unter Ziffer 6.) beschrieben.

Bei der Chlorierung resultieren gleichermaßen auch die Chloride der weiteren Metalle, insbesondere Kupferchlorid, Zinkchlorid, Bleichlorid und Cobaltchlorid sowie gegebenenfalls Silberchlorid (zumindest teilweise).

### 4. Entfernung von Eisenchlorid sowie der Chloride der weiteren Metalle aus dem Produktgemisch:

Das nach der Chlorierung erhaltene Produktgemisch wird zur selektiven Sublimation von Eisen(III)-chlorid (FeCl₃) auf eine Temperatur von 350 °C erhitzt, wobei Eisen(III)-chlorid in die Gasphase überführt wird und zur entsprechenden Weiterverarbeitung abgeführt bzw. abgezogen werden kann. Aufgrund der von Eisen(III)-chlorid verschiedenen Sublimationstemperaturen verbleiben die Chloride der weiteren Metalle zunächst zumindest im Wesentlichen in dem festen Produktgemisch. Im Produktgemisch verbleiben zudem die entsprechenden Edelmetalle sowie Siliciumdioxid und Calciumsulfat.

Die Chloride der weiteren Metalle werden anschließend aus dem verbleibenden Produktgemisch durch Aufschlämmung bzw. Dispergierung des Produktgemisches in Wasser ausgeschleust, wobei die Chloride der weiteren Metalle (im Wesentlichen mit Ausnahme von Silberchlorid) aufgrund ihrer guten Löslichkeitseigenschaften in Wasser in Lösung gebracht und auf diese Weise abgetrennt bzw. isoliert werden. Die so isolierten Chloride der weiteren Metalle können weiterführend aufgetrennt werden, beispielsweise mittels selektiver Sedimentation bzw. Fällung oder auf Basis elektrochemischer oder sorptiver, insbesondere adsorptiver Verfahren. Insbesondere können aus den so isolierten Chloriden auch die Metalle als solche gewonnen werden (z. B. durch Reduktion). Auf diese Weise werden insbesondere die Metalle Kupfer, Zink, Cobalt und Blei abgetrennt, während die Edelmetalle (Gold und Silber) aufgrund ihrer Unlöslichkeit im festen Rückstand verbleiben.

Eine für das verbleibende Produktgemisch durchgeführte Analyse ergibt, dass aufgrund der erfindungsgemäßen Verfahrensführung der Gehalt an Eisen sowie der weiteren Metalle in dem verbleibenden Produktgemisch bzw. Rückstand um mehr als 90 % reduziert werden kann. Hieraus resultiert gleichermaßen eine Aufkonzentrierung bzw. Anreicherung der Edelmetallkomponenten, insbesondere von Gold und/oder Silber, in dem verbleibenden Produktgemisch. So kann in Bezug auf das verbleibende, sowohl von Eisenchlorid als auch von den Chloriden der Metalle befreite Produktgemisch ein Gehalt an Gold von etwa 6 g/t und für Silber etwa 30 g/t ermittelt werden (während das Ausgangsmaterial etwa 2 g/t Gold und 10 g/t Silber enthält).

### 5. Verarbeitung von Eisen(III)-chlorid (FeCl₃):

Das zuvor mittels Sublimation abgetrennte Eisenchlorid kann gemäß einer ersten Variante des erfindungsgemäßen Verfahrens unter Abkühlung zum Erhalt von festem Eisen(III)-chlorid (FeCl₃) desublimiert werden. Das so erhaltene Eisen(III)-chlorid (FeCl₃) weist eine sehr hohe Reinheit auf und kann als entsprechendes Handelsprodukt vertrieben werden.

Gemäß einer zweiten Variante des erfindungsgemäßen Verfahrens kann das sublimierte Eisen(III)-chlorid einer Reduktion zum Erhalt von metallischem Eisen unterzogen werden. Hierzu wird Eisen(III)-chlorid (FeCl₃) bei Temperaturen von 600 °C mit einem Reduktionsmittel in Form von Wasserstoff in der Gasphase zur Reaktion gebracht. Es resultiert metallisches Eisen sowie Chlorwasserstoff. Der resultierende Chlorwasserstoff wird zur Rezyklierung des Chlorierungsmittels, wie in Ziffer 6.) beschrieben, abgetrennt bzw. abgezogen.

Das bei der Reduktion erhaltene Eisen wird mittels Röntgenfluoreszenzverfahren weiterführend analysiert. Das in zuvor beschriebener Weise erhaltene metallische Eisen weist eine Reinheit von mindestens 99,9 % auf. Gemäß dieser erfindungsgemäßen Variante wird somit hochreines metallisches Eisen als entsprechendes Handelsprodukt bereitgestellt.

### 6. Rezyklierung des Chlorierungsmittels:

Das bei der Chlorierung von Eisenoxid bzw. der Oxide der weiteren Metalle (vgl. Ausführungen in Ziffer 3.)) resultierende und abgezogene gasförmige Ammoniak wird mit dem aus der Reduktion von Eisen(III)-chlorid (vgl. Ausführungen in Ziffer 5.)) resultierenden und abgezogenen Chlorwasserstoff zusammengeführt und in der Gasphase zur Reaktion gebracht, so dass auf diese Weise rezykliertes Ammoniumchlorid (NH₄Cl) erhalten wird, welches dem Chlorierungsprozess gemäß Ziffer 3.) erneut zugeführt werden kann.

### 7. Rückgewinnung der Edelmetalle:

Was das verbleibende und von Eisenchlorid sowie den Chloriden der weiteren Metalle befreite und in fester bzw. unlöslicher Form vorliegende Produktgemisch anbelangt, so wird dieses einer weiterführenden Aufreinigung insbesondere zum Erhalt der Edelmetalle unterzogen. So kann dem verbleibenden Produktgemisch, welches gegebenenfalls erneut aufgeschlämmt bzw. dispergiert wird, mit Cyanidlauge versetzt werden, wodurch die in dem Produktgemisch enthaltenen Edelmetalle durch eine Komplexbildungsreaktion in eine wasserlösliche Form überführt werden. Das verbleibende Produktgemisch wird von dieser Lösung mittels Filtration abgetrennt. Die Edelmetallkomponenten in Form von Gold und/oder Silber können aus der Lösung mittels Ausfällverfahren, beispielsweise unter Einsatz von Zinkstaub oder dergleichen, gewonnen werden, so dass aufgereinigtes bzw. isoliertes Gold bzw. Silber erhalten wird. Dabei beträgt die Ausbeute an Gold, bezogen auf das Ausgangsmaterial, mindestens 90 %.

### 8. Rückgewinnung von Silicium und Calciumsulfat:

Das verbleibende Produktgemisch umfasst Siliciumdioxid, welches einer Reduktion zum Erhalt von Silicium unterzogen werden kann, sowie Calciumsulfat, welches gleichermaßen gewonnen werden kann.

Auf Basis des erfindungsgemäßen Verfahrens können, extrapoliert auf 100.000 t Rohmaterial in Form von Kiesabbrand, neben den Edelmetallen Gold und Silber auch etwa 50.000 t metallisches Eisen sowie etwa 30.000 t einer Mischung auf Basis von Siliciumdioxid und Calciumcarbonat gewonnen werden. Insbesondere ist es mit dem erfindungsgemäßen Verfahren möglich, Handelsprodukte sowohl in Form von metallischem Eisen als auch in Form von Eisen(III)-chlorid bereitzustellen. Zudem können Produkte auf Basis der Chloride der weiteren Metalle, wie zuvor angeführt, bzw. die Metalle als solche (insbesondere durch Reduktion) bereitgestellt werden. Insbesondere zeichnen sich die erhaltenen Substanzen durch eine hohe Stoffreinheit aus. Das erfindungsgemäße Verfahren ermöglich somit eine umfängliche und zudem selektive Aufarbeitung von Kiesabbrand. Nicht zuletzt aufgrund der Rezyklierung des erfindungsgemäß eingesetzten Chlorierungsmittels weist das erfindungsgemäße Verfahren eine hohe Gesamtwirtschaftlichkeit sowie verbesserte Umwelteigenschaften auf.

### Bezugszeichenliste:

- A: Rückgewinnungs-Anlage
- 1: Bereitstellungs- und/oder Aufbereitungsvorrichtung
- 2: Oxidations- und/oder Röstvorrichtung
- 3: Chlorierungsvorrichtung
- 4: Abtrennvorrichtung
- 5: Abtrenn- und/oder Filtervorrichtung
- 6: Zerkleinerungseinrichtung
- 7: Trocknungseinrichtung
- 8: Zuführeinrichtung der Chlorierungsvorrichtung
- 9: Abführ- und/oder Ausschleusungsseinrichtung der Chlorierungsvorrichtung
- 10: Reaktions- und Kondensationsvorrichtung
- 11: Zuführeinrichtung der Reaktions- und Kondensationsvorrichtung
- 12: weitere Zuführeinrichtung der Reaktions- und Kondensationsvorrichtung
- 13: Abführ- und/oder Ausschleusungseinrichtung der Reaktions- und Kondensationsvorrichtung
- 14: Desublimationsvorrichtung
- 15: Reduktionsvorrichtung
- 16: Zuführeinrichtung der Reduktionsvorrichtung
- 17: weitere Zuführeinrichtung der Reduktionsvorrichtung
- 18: Abzugs- und/oder Ausführeinrichtung der Reduktionsvorrichtung
- 19: Zuführeinrichtung der Desublimationsvorrichtung
- 20: Aufschlämm- und/oder Dispergiervorrichtung
- 21: Zugabe- und/oder Zuführvorrichtung
- 22: Zugabeeinrichtung der Zugabe- und/oder Zuführvorrichtung
- 23: Extraktionsvorrichtung
- 24: gemeinsame Vorrichtung
- 25: Einrichtung zur Eisenchlorid-Abfuhr der Abtrennvorrichtung
- 26: Einrichtung zur Aufnahme eine Löse- und/oder Suspensionsmittels der Aufschlämm- und/oder Dispergiervorrichtung
- 27: Abzugseinrichtung der Aufschlämm- und/oder Dispergiervorrichtung
- 28: Einrichtung zur Aufnahme eines Ausfällmittels der Extraktionsvorrichtung

## Patentansprüche

1. Verfahren zur (Rück-)Gewinnung von metallischem Eisen und/oder Eisenchlorid aus Erzen und/oder Erzrückständen in Form von Pyritrückständen, wobei das Verfahren die folgenden Verfahrensschritte umfasst:
(a) Bereitstellung, insbesondere Aufbereitung, eines Ausgangsmaterials in Form mindestens eines Erzes und/oder Erzrückstands, wobei das Ausgangsmaterial
(i) Eisen als Hauptbestandteil und
(ii) mindestens ein Edelmetall, ausgewählt aus Gold und/oder Silber, sowie
(iii) mindestens ein weiteres Metall, ausgewählt aus der Gruppe von Kupfer, Zink, Blei, Cobalt, Titan, Mangan, Vanadium und Chrom,
enthält;
(b) Oxidationsbehandlung, insbesondere Calcinierung und/oder oxidative Röstung, des in Verfahrensschritt (a) bereitgestellten Ausgangsmaterials unter Verwendung mindestens eines Oxidationsmittels unter Erhalt von Eisenoxid und Oxiden der weiteren Metalle;
(c) Chlorierung der in Verfahrensschritt (b) erhaltenen Oxidationsprodukte unter Verwendung mindestens eines rezyklierbaren Chlorierungsmittels, umfassend die Chlorierung von Eisenoxid und Oxiden der weiteren Metalle unter Erhalt von Eisenchlorid und Chloriden der weiteren Metalle;
(d) selektive Abtrennung von Eisenchlorid aus dem in Verfahrensschritt (c) erhaltenen Produktgemisch und nachfolgende Abtrennung von Chloriden der weiteren Metalle aus dem von Eisenchlorid befreiten Produktgemisch, wobei die selektive Abtrennung von Eisenchlorid mittels Sublimation des Eisenchlorids erfolgt und das auf diese Weise selektiv abgetrennte Eisenchlorid als solches mittels nachfolgender Desublimation gewonnen wird oder das auf diese Weise selektiv abgetrennte Eisenchlorid einer Reduktion zum Erhalt von metallischem Eisen unterzogen wird;
wobei in Verfahrensschritt (c) die Chlorierung als Festphasenreaktion und unter Verwendung von Ammoniumchlorid (NH₄Cl) als Chlorierungsmittel durchgeführt wird, wobei das in Verfahrensschritt (c) als Chlorierungsmittel eingesetzte Ammoniumchlorid durch Rückgewinnung von bei der Chlorierung der Oxidationsprodukte aus dem Chlorierungsmittel resultierendem Ammoniak (NH₃) und nachfolgende Reaktion des Ammoniaks mit Chlorwasserstoff (HCl) rezykliert wird und wobei die Rezyklierung des Ammoniumchlorids in einer Reaktions- und Kondensationsvorrichtung durchgeführt wird, und wobei die vorgenannten Verfahrensschritte (a) bis (d) in der vorangehend angeführten Reihenfolge durchgeführt werden.

2. Verfahren nach Anspruch 1,
wobei Ammoniak (NH₃) und Chlorwasserstoff (HCl) in der Gasphase zum Erhalt von Ammoniumchlorid (NH₄Cl) zur Reaktion gebracht werden; und/oder
wobei das rezyklierte Ammoniumchlorid (NH₄Cl) in Verfahrensschritt (c) erneut eingesetzt wird; und/oder
wobei durch die in Verfahrensschritt (d) durchgeführte Reduktion von Eisenchlorid Chlorwasserstoff (HCl) erhalten wird; und/oder
wobei in Verfahrensschritt (d) bei der Reduktion von Eisenchlorid Chlorwasserstoff (HCl) resultiert, wobei das in Verfahrensschritt (c) bei der Chlorierung resultierende Ammoniak (NH₃) einerseits und der in Verfahrensschritt (d) resultierende Chlorwasserstoff (HCl) andererseits zusammengeführt werden und zur Reaktion zum Erhalt des rezyklierten Chlorierungsmittels in Form von Ammoniumchlorid (NH₄Cl) gebracht werden.

3. Verfahren nach Anspruch 1 oder 2,
wobei das in Verfahrensschritt (d) erhaltene metallische Eisen eine Reinheit von mindestens 90 Gew.-%, berechnet als Element und bezogen auf das erhaltene metallische Eisen, aufweist; und
wobei das Ausgangsmaterial Eisen in Form mindestens eines Eisenoxids enthält; und
wobei das Ausgangsmaterial Gold in Form von metallischem Gold enthält; und
wobei das Ausgangsmaterial Silber in Form von metallischem Silber und/oder in Form von Silberoxid enthält.

4. Verfahren nach einem der vorangehenden Ansprüche,
wobei in Verfahrensschritt (a) und/oder vor Durchführung von Verfahrensschritt (b) eine Zerkleinerung und/oder Homogenisierung des Ausgangsmaterial durchgeführt wird, insbesondere wobei das Ausgangsmaterial auf eine mittlere Teilchengröße D₅₀ im Bereich von 0,1 µm bis 10 cm eingestellt wird; und/oder
wobei in Verfahrensschritt (b) die Oxidationsbehandlung als Festphasenreaktion durchgeführt wird und/oder wobei die Oxidationsbehandlung bei Temperaturen im Bereich von 500 °C bis 1.000 °C durchgeführt wird; und/oder
wobei bei der Oxidationsbehandlung in Verfahrensschritt (b) Eisen vollständig in Eisen(III)-oxid überführt wird; und/oder
wobei das bei der Oxidationsbehandlung in Verfahrensschritt (b) erhaltene Produktgemisch Eisen(III)-oxid in Mengen im Bereich von 10 Gew.-% bis 95 Gew.-%, bezogen auf das Trockengewicht des in Verfahrensschritt (b) erhaltenen Produktgemischs, enthält.

5. Verfahren nach einem der vorangehenden Ansprüche,
wobei in Verfahrensschritt (c) die Chlorierung bei Temperaturen im Bereich von 100 °C bis 320 °C durchgeführt wird; und/oder
wobei in Verfahrensschritt (d) die Sublimation von Eisenchlorid aus dem in Verfahrensschritt (c) erhaltenen Produktgemisch bei Temperaturen im Bereich von 200 °C bis 400 °C erfolgt.

6. Verfahren nach einem der vorangehenden Ansprüche,
wobei Verfahrensschritt (c) und Verfahrensschritt (d), insbesondere die Abtrennung von Eisenchlorid, kontinuierlich in einer gemeinsamen Vorrichtung erfolgt; und/oder
wobei in Verfahrensschritt (d) die Desublimation zum Erhalt von festem und/oder aufgereinigtem Eisenchlorid führt; und/oder
wobei in Verfahrensschritt (d) die Reduktion von Eisenchlorid in der Gasphase erfolgt, insbesondere bei Temperaturen im Bereich von 400 °C bis 800 °C; und/oder
wobei das in Verfahrensschritt (d) erhaltene, von Eisenchlorid befreite Produktgemisch einen Eisengehalt von weniger als 10 Gew.-%, berechnet als Element und bezogen auf das Trockengewicht des Produktgemischs, aufweist; und/oder
wobei in Verfahrensschritt (d) die nachfolgende Abtrennung von Chloriden der weiteren Metalle aus dem von Eisenchlorid befreiten Produktgemisch erfolgt.

7. Verfahren nach einem der vorangehenden Ansprüche, wobei in Verfahrensschritt (d) die nachfolgende Abtrennung der Chloride der weiteren Metalle derart erfolgt, dass das von Eisenchlorid befreite Produktgemisch in einer flüssigen Phase und/oder in einem flüssigen Medium aufgenommen wird.

8. Verfahren nach einem der vorangehenden Ansprüche, wobei das in Verfahrensschritt (d) erhaltene Produktgemisch, insbesondere das von Eisenchlorid und von den Chloriden der weiteren Metalle befreite Produktgemisch, jeweils berechnet als Element und jeweils bezogen auf das Trockengewicht des Produktgemischs, umfasst:
- Gold, insbesondere in Mengen im Bereich von 1 g/t bis 50 g/t;
- Silber, insbesondere in Mengen im Bereich von 2 g/t bis 600 g/t.

9. Verfahren nach einem der vorangehenden Ansprüche, wobei im Anschluss an Verfahrensschritt (d) ein Verfahrensschritt (e) durchgeführt wird, wobei in Verfahrensschritt (e) eine Abtrennung des Edelmetalls aus dem in Verfahrensschritt (d) erhaltenen und/oder dem von Eisenchlorid und von den Chloriden der weiteren Metalle befreiten Produktgemisch erfolgt.

10. Verfahren nach einem der vorangehenden Ansprüche, wobei das in Verfahrensschritt (d) und/oder in Verfahrensschritt (e) erhaltene Produktgemisch Silicium enthält und/oder wobei das in Verfahrensschritt (d) und/oder in Verfahrensschritt (e) erhaltene Produktgemisch mindestens ein Alkali- und/oder Erdalkalimetall enthält.

11. Rückgewinnungs-Anlage (A) zur (Rück-)Gewinnung von metallischem Eisen und/oder Eisenchlorid aus Erzen und/oder Erzrückständen in Form von Pyritrückständen, insbesondere Rückgewinnungs-Anlage (A) zur Durchführung eines Verfahrens nach einem der Ansprüche 1 bis 10,
wobei die Rückgewinnungs-Anlage (A) umfasst:
(a) mindestens eine Bereitstellungs- und/oder Aufbereitungsvorrichtung (1) zur Bereitstellung, insbesondere Aufbereitung, eines Ausgangsmaterials in Form mindestens eines Erzes und/oder Erzrückstands, wobei das Ausgangsmaterial Eisen als Hauptbestandteil, mindestens ein Edelmetall, ausgewählt aus Gold und/oder Silber, sowie mindestens ein weiteres Metall, ausgewählt aus der Gruppe von Kupfer, Zink, Blei, Cobalt, Titan, Mangan, Vanadium und Chrom, enthält;
(b) mindestens eine Oxidations- und/oder Röstvorrichtung (2) zur Oxidationsbehandlung, insbesondere Calcinierung und/oder oxidativen Röstung, des bereitgestellten Ausgangsmaterials zum Erhalt von Eisenoxid und Oxiden der weiteren Metalle als Oxidationsprodukte in dem resultierenden Produktgemisch;
(c) mindestens eine Chlorierungsvorrichtung (3) zur Chlorierung der Oxidationsprodukte in dem Produktgemisch und zur Verwendung mindestens eines rezyklierbaren Chlorierungsmittels zur Chlorierung von Eisenoxid und Oxiden der weiteren Metalle zum Erhalt von Eisenchlorid und von Chloriden der weiteren Metalle in dem Produktgemisch,
wobei die Chlorierung als Festphasenreaktion und unter Verwendung von Ammoniumchlorid (NH₄Cl) als Chlorierungsmittel durchgeführt wird, wobei die Chlorierungsvorrichtung (3) mindestens eine Zuführeinrichtung (8) zur Zufuhr des Chlorierungsmittels in Form von Ammoniumchlorid (NH₄Cl) aufweist und wobei das Ammoniumchlorid durch Rückgewinnung von bei der Chlorierung der Oxidationsprodukte aus dem Chlorierungsmittel resultierendem Ammoniak (NH₃) und nachfolgende Reaktion des Ammoniaks mit Chlorwasserstoff (HCl) rezykliert wird;
(d) mindestens eine Abtrennvorrichtung (4) zur selektiven Abtrennung von Eisenchlorid aus dem Produktgemisch, wobei die Abtrennvorrichtung (4) als Sublimationsvorrichtung ausgebildet ist,
wobei die Rückgewinnungs-Anlage (A) nachgeschaltet und/oder in Prozessrichtung stromabwärts zur Abtrennvorrichtung (4) mindestens eine Desublimationsvorrichtung (14) zur Aufnahme und Desublimation von insbesondere sublimiertem Eisenchlorid und/oder zum Erhalt von insbesondere festem und/oder aufgereinigtem Eisenchlorid aufweist oder
wobei die Rückgewinnungs-Anlage (A) nachgeschaltet und/oder in Prozessrichtung stromabwärts zur Abtrennvorrichtung (4) mindestens eine Reduktionsvorrichtung (15) zur Reduktion von insbesondere sublimiertem Eisenchlorid und zum Erhalt von metallischem Eisen und/oder zum Erhalt von Chlorwasserstoff (HCl), aufweist,
wobei die vorgenannten Vorrichtungen (1, 2, 3, 4) in der angegebenen Reihenfolge in Prozessrichtung stromabwärts zueinander angeordnet sind und wobei die vorgenannten Vorrichtungen (14, 15) wie zuvor definiert angeordnet sind und
wobei die Anlage (A) mindestens eine Reaktions- und Kondensationsvorrichtung (10) zum Zusammenführen und/oder Inkontaktbringen und zur Reaktion von Ammoniak einerseits und Chlorwasserstoff andererseits zum Erhalt von rezykliertem Ammoniumchlorid aufweist.

12. Anlage nach Anspruch 11,
wobei die Chlorierungsvorrichtung (3) mindestens eine Abführ- und/oder Ausschleusungseinrichtung (9) zur Rückgewinnung von bei der Chlorierung der Oxidationsprodukte aus dem Chlorierungsmittel resultierenden Umsetzungsprodukten in Form von Ammoniak (NH₃) aufweist; und/oder
wobei die Reaktions- und Kondensationsvorrichtung (10) mindestens eine Zuführeinrichtung (11) zur Zufuhr von Ammoniak (NH₃) und/oder mindestens eine weitere Zuführeinrichtung (12) zur Zufuhr und/oder Aufnahme von Chlorwasserstoff (HCl) und/oder mindestens eine Abführ- und/oder Ausschleusungseinrichtung (13) zur Rückgewinnung des rezyklierten Chlorierungsmittels in Form von Ammoniumchlorid (NH₄Cl) aufweist.

13. Anlage nach Anspruch 11 oder 12, wobei die Chlorierungsvorrichtung (3) und die Abtrennvorrichtung (4) in eine gemeinsame Vorrichtung (24) zusammengeführt sind.

14. Anlage nach einem der Ansprüche 11 bis 13,
wobei die Anlage (A) zudem mindestens eine Aufschlämm- und/oder Dispergiervorrichtung (20) aufweist, insbesondere zur nachfolgenden Abtrennung von Chloriden der weiteren Metalle aus dem von Eisenchlorid befreiten Produktgemisch; und/oder
wobei die Anlage (A) zudem mindestens eine Zugabe- und/oder Zuführvorrichtung (21) aufweist, insbesondere zur Zugabe mindestens einer Komplexierungskomponente zur Überführung des Edelmetalls in eine Lösung und/oder Suspension, und/oder wobei die Anlage (A) mindestens eine Abtrenn- und/oder Filtervorrichtung (5) aufweist, insbesondere zur Abtrennung des Edelmetalls aus dem von Eisenchlorid und gegebenenfalls Chloriden der weiteren Metalle befreiten Produktgemisch; und/oder
wobei die Anlage (A) zudem mindestens eine Extraktionsvorrichtung (23), insbesondere zur Gewinnung des Edelmetalls aus der Lösung und/oder Suspension, aufweist.

15. Verwendung einer Rückgewinnungs-Anlage, wie in den Ansprüchen 11 bis 14 definiert, in einem Verfahren zur (Rück-)Gewinnung von metallischem Eisen und/oder Eisenchlorid aus Erzen und/oder Erzrückständen in Form von Pyritrückständen, insbesondere wie in einem der Ansprüche 1 bis 10 definiert.

## Claims

1. Method for the exploitation/recovery of metallic iron and/or iron chloride from ores and/or ore residues in the form of pyrite residues, wherein the method comprises the following method steps:
(a) providing, in particular preparing, a starting material in the form of at least one ore and/or ore residue, wherein the starting material contains:
(i) iron as the main component, and
(ii) at least one noble metal selected from gold and/or silver;
(iii) at least one further metal selected from the group consisting of copper, zinc, lead, cobalt, titanium, manganese, vanadium and chromium;
(b) oxidation treatment, in particular calcination and/or oxidative roasting, of the starting material provided in method step (a) using at least one oxidizing agent to obtain iron oxide and oxides of the further metals;
(c) chlorination of the oxidation products obtained in method step (b), using at least one recyclable chlorinating agent, which comprises chlorinating iron oxide and oxides of the further metals to obtain iron chloride and chlorides of the other metals;
(d) selective separation of iron chloride from the product mixture obtained in method step (c) and subsequent removal of chlorides from the further metals of the product mixture released from iron chloride, wherein the selective separation of iron chloride is effected by means of sublimation of the iron chloride, while the iron chloride selectively separated as such in this way is obtained by means of subsequent desublimation, or the iron chloride selectively separated in this way is subjected to a reduction to obtain metallic iron;
wherein the chlorination is carried out as a solid phase reaction by using (NH₄Cl) as the chlorinating agent, the ammonium chloride used as the chlorinating agent in method step (c), wherein the ammonium chloride used as the chlorinating agent is recycled by recovering the ammonia (NH₃) resulting from the chlorinating agent through the chlorination of the oxidation products, and subsequent reaction of the ammonia with hydrogen chloride (HCl), and wherein the recycling of the ammonium chloride is carried out in a reaction and condensation apparatus, and
wherein the above-mentioned method steps (a) to (d) are carried out in the above-mentioned order.

2. Method according to claim 1,
wherein ammonia (NH₃) and hydrogen chloride (HCl) are reacted in the gas phase to obtain ammonium chloride (NH₄Cl); and/or
wherein the recycled ammonium chloride (NH₄Cl) is reused in method step (c); and/or
wherein hydrogen chloride (HCl) is obtained by the reduction of iron chloride carried out in method step (d); and/or
wherein, hydrogen chloride (HCl) is obtained during the reduction of iron chloride in method step (d), wherein the ammonia (NH₃) resulting from the chlorination in method step (c), on the one hand, and the hydrogen chloride (HCl) resulting from method step (d), on the other hand, are combined, and used for the reaction to obtain the recycled chlorinating agent in the form of ammonium chloride (NH₄Cl).

3. Method according to claim 1 or 2,
wherein the metallic iron obtained in method step (d) has a purity of at least 90 wt.-%, calculated as the element and based on the metallic iron obtained; and
wherein the starting material contains iron in the form of at least one iron oxide; and
wherein the starting material comprises gold in the form of metallic gold; and wherein the starting material contains silver in the form of metallic silver and/or in the form of silver oxide.

4. Method according to one of the preceding claims,
wherein a comminution and/or homogenization of the starting material is carried out in method step (a) and/or before carrying out method step (b), in particular wherein the starting material is adjusted to an average particle size D₅₀ in the range from 0.1 µm to 10 cm; and/or
wherein the oxidation treatment is carried out as a solid-phase reaction in method step (b) and/or wherein the oxidation treatment is carried out at temperatures in the range from 500 °C to 1000 °C; and/or
wherein during the oxidation treatment in method step (b), iron is completely converted into iron(III)oxide; and/or
wherein the product mixture obtained in the oxidation treatment in method step (b) contains iron(III)oxide in amounts ranging from 10 wt.-% to 95 wt.-%, based on the dry weight of the product mixture obtained in method step (b).

5. Method according to one of the preceding claims,
wherein, in method step (c), the chlorination is carried out at temperatures in the range from 100 °C to 320 °C; and/or
wherein, in method step (d), the sublimation of iron chloride from the product mixture obtained in method step (c) is carried out at temperatures in the range from 200 °C to 400 °C.

6. Method according to one of the preceding claims,
wherein method step (c) and method step (d), in particular the separation of iron chloride, takes place continuously in a common device; and/or
wherein, in method step (d), the desublimation leads to the obtaining of solid and/or purified iron chloride; and/or
wherein, in method step (d), the reduction of iron chloride in the gas phase is carried out, in particular, at temperatures in the range from 400 °C to 800 °C; and/or
wherein the product mixture obtained in method step (d) from iron chloride has an iron content of less than 10 wt.-%, calculated as the element and based on the dry weight of the product mixture; and/or
wherein, in method step (d), the subsequent removal of chlorides of the further metals from the product mixture released from iron chloride is carried out.

7. Method according to one of the preceding claims,
wherein the subsequent separation of the chlorides of the further metals takes place in method step (d) in such a way that the product mixture released from iron chloride is absorbed in a liquid phase and/or in a liquid medium.

8. Method according to one of the preceding claims,
wherein the product mixture obtained in method step (d), in particular the product mixture released from iron chloride and from the chlorides of the further metals, calculated as the element and respectively based on the dry weight of the product mixture, comprises:
- gold, in particular in amounts ranging from 1 g/t to 50 g/t;
- silver, in particular in amounts ranging from 2 g/t to 600 g/t.

9. Method according to one of the preceding claims,
wherein a method step (e) is carried out following method step (d) of the method, wherein, in a method step (e), a separation of the noble metal obtained in step (d), and/or separation of the product mixture free of iron chloride and the chlorides of the further metals, is carried out.

10. Method according to one of the preceding claims,
wherein the product mixture obtained in method step (d) and/or in method step (e) comprises silicon, and/or wherein the product mixture obtained in method step (d) and/or in method step (e) contains alkali metal and/or alkaline earth metal.

11. Recovery plant (A) for recovering metallic iron and/or iron chloride from ores and/or ore residues in the form of pyrite residues, in particular a recovery plant (A) for carrying out a method according to one of the claims 1 to 10,
wherein the recovery system (A) comprises:
(a) at least a provision or preparation apparatus (1) for the provision, in particular the preparation, of a starting material in the form of at least an ore and/or an ore residue, wherein the starting material comprises iron as the main component, at least one noble metal selected from the group consisting of gold and/or silver, and at least one further metal selected from the group consisting of copper, zinc, lead, cobalt, titanium, manganese, vanadium and chromium;
(b) at least one oxidation and/or roasting apparatus (2) for the oxidation treatment, in particular calcination and/or oxidative roasting, of the starting material provided to obtain iron oxide and oxides of the further metals as oxidation products in the resulting product mixture;
(c) at least one chlorination device (3) for chlorinating the oxidation products in the product mixture and for using at least one recyclable chlorinating agent for chlorinating iron oxide and oxides of the further metals to obtain iron chloride and chlorides of the further metals in the product mixture,
wherein the chlorination is carried out as a solid phase reaction and using ammonium chloride (NH₄Cl) as a chlorinating agent, wherein the chlorination apparatus (3) comprises at least one feed device (8) to supply the chlorinating agent in the form of ammonium chloride (NH₄Cl), and wherein the ammonium chloride is recycled by recovering the ammonia (NH₃) resulting from the chlorination of the oxidation products through the chlorinating agent, and the subsequent reaction of the ammonia with hydrogen chloride (HCl);
(d) at least one separation device (4) for the selective separation of iron chloride from the product mixture, wherein the separation device (4) is designed as a sublimation apparatus,
wherein the recovery plant (A), comprising at least one desublimation device (14) to receive and desublimate, in particular, sublimated iron chloride and/or for obtaining, in particular, solid and/or purified iron chloride, is located downstream of the separation device (4) and/or downstream in the processing direction, or
wherein the recovery plant (A), comprising at least one reduction device (15) for the reduction of, in particular, sublimated iron chloride and for obtaining metallic iron and/or for obtaining hydrogen chloride (HCl), is located downstream of the separation device (4) and/or downstream in the processing direction,
wherein the above-mentioned apparatuses (1, 2, 3, 4) are arranged downstream from each other in the order indicated, and
wherein the aforementioned devices (14, 15) are arranged as defined above, and
wherein the recovery plant (A), comprising at least one reaction and condensation device (10) for merging and/or bringing into contact and reacting ammonia, on the one hand, and hydrogen chloride, on the other hand, to obtain recycled ammonium chloride.

12. System according to claim 11,
wherein the chlorination apparatus (3) comprises at least one discharge and/or removal device (9) to recover reaction products resulting from the chlorination of the oxidation products through the chlorinating agent in the form of ammonia (NH₃); and/or
wherein the reaction and condensation device (10) comprises at least one feed device (11) to supply ammonia (NH₃) and/or at least one further feed device (12) for the supply and/or absorption of hydrogen chloride (HCl), and/or at least one discharge and or removal device (13) to recover the recycled chlorinating agent in the form of ammonium chloride (NH₄Cl).

13. Plant according to claim 11 or 12,
wherein the chlorination device (3) and the separation device (4) are combined in a common device (24).

14. Plant according to one of the claims 11 to 13,
wherein the plant (A) additionally comprises at least one slurry and/or dispersing device (20), in particular for the subsequent separation of chlorides of the further metals from the product mixture freed from iron chloride; and/or
wherein the plant (A) further comprises at least one addition and/or feed apparatus (21), in particular for the addition of at least one complexing component for transferring the noble metal into a solution and/or suspension, and/or wherein the plant (A) comprises at least one separation and/or filter apparatus (5), in particular for separating the noble metal from the product mixture freed from iron chloride and, optionally, chlorides of the further metals; and/or
wherein the plant (A) further comprises at least one extraction apparatus (23), in particular to recover the noble metal from the solution and/or suspension.

15. Use of a recovery plant as defined in claims 11 to 14 in a method for recovering metallic iron and/or iron chloride from ores and/or ore residues in the form of pyrite residues, in particular as defined in one of the claims 1 to 10.

## Revendications

1. Procédé pour l'extraction/la récupération de fer métallique et/ou de chlorure de fer à partir de minerais et/ou de résidus de minerais sous forme de résidus de pyrite, le procédé comprenant les étapes de procédé suivantes :
(a) mise à disposition, en particulier préparation, d'une matière de départ sous forme d'au moins un minerai et/ou d'un résidu de minerai, la matière de départ contenant
(i) du fer en tant que constituant principal, et
(ii) au moins un métal noble choisi parmi l'or et/ou l'argent, ainsi que
(iii) au moins un métal supplémentaire, choisi dans le groupe consistant en le cuivre, le zinc, le plomb, le cobalt, le titane, le manganèse, le vanadium et le chrome ;
(b) traitement par oxydation, en particulier calcination et/ou grillage oxydant, de la matière de départ mise à disposition dans l'étape de procédé (a), par utilisation d'au moins un oxydant, avec obtention d'oxyde de fer et d'oxydes des métaux supplémentaires ;
(c) chloration des produits d'oxydation obtenus dans l'étape de procédé (b), par utilisation d'au moins un agent de chloration recyclable, comprenant la chloration de l'oxyde de fer et des oxydes des métaux supplémentaires, avec obtention de chlorure de fer et de chlorures des métaux supplémentaires ;
(d) séparation sélective, d'avec le mélange de produits obtenu dans l'étape de procédé (c), du chlorure de fer, puis séparation, à partir du mélange de produits débarrassé du chlorure de fer, de chlorures des métaux supplémentaires, la séparation sélective du chlorure de fer s'effectuant par sublimation du chlorure de fer, et le chlorure de fer ainsi sélectivement séparé étant obtenu en tant que tel à l'aide d'une désublimation subséquente, ou le chlorure de fer ainsi sélectivement séparé étant soumis à une réduction pour donner du fer métallique ;
dans lequel, dans l'étape de procédé (c), la chloration est mise en oeuvre sous forme d'une réaction en phase solide et par utilisation de chlorure d'ammonium (NH₄Cl) en tant qu'agent de chloration, le chlorure d'ammonium utilisé en tant qu'agent de chloration dans l'étape de procédé (c) étant recyclé par récupération, à partir de l'ammoniac (NH₃) obtenu à partir de l'agent de chloration, des produits de l'oxydation, puis réaction de l'ammoniac avec du chlorure d'hydrogène (HCl), le recyclage du chlorure d'ammonium étant mis en oeuvre dans un dispositif de réaction et de condensation,
les étapes de procédé (a) à (d) mentionnées ci-dessus étant mises en oeuvre dans l'ordre indiqué ci-dessus.

2. Procédé selon la revendication 1,
dans lequel on fait réagir de l'ammoniac (NH₃) et du chlorure d'hydrogène (HCl) en phase gazeuse pour obtenir du chlorure d'ammonium (NH₄Cl) ; et/ou
dans lequel le chlorure d'ammonium recyclé (NH₄Cl) est de nouveau utilisé dans l'étape de procédé (c) ; et/ou
dans lequel, sous l'effet de la réduction du chlorure de fer mise en oeuvre dans l'étape de procédé (d), on obtient du chlorure d'hydrogène (HCl) ; et/ou
dans lequel, dans l'étape de procédé (d), lors de la réduction du chlorure de fer, on obtient du chlorure d'hydrogène (HCl), ce à l'occasion de quoi on réunit d'une part l'ammoniac (NH₃) obtenu lors de la chloration dans l'étape de procédé (c), et d'autre part le chlorure d'hydrogène (HCl) obtenu dans l'étape de procédé (d), et on les fait réagir pour obtenir sous forme de chlorure d'ammonium (NH₄Cl) l'agent de chloration recyclé.

3. Procédé selon la revendication 1 ou 2, dans lequel le fer métallique obtenu dans l'étape de procédé (d) présente une pureté d'au moins 90 % en poids, exprimée sous forme élémentaire, et par rapport au fer métallique obtenu ; et
dans lequel la matière de départ contient du fer sous forme d'au moins un oxyde de fer ; et
dans lequel la matière de départ contient de l'or sous forme d'or métallique ; et
dans lequel la matière de départ contient de l'argent sous forme d'argent métallique et/ou sous forme d'oxyde d'argent.

4. Procédé selon l'une des revendications précédentes,
dans lequel, dans l'étape de procédé (a), et/ou avant la mise en oeuvre de l'étape de procédé (b), on met en oeuvre un broyage et/ou une homogénéisation de la matière de départ, en particulier dans lequel la matière de départ est ajustée à une granulométrie moyenne D₅₀ comprise dans la plage de 0,1 µm à 10 cm ; et/ou
dans lequel, dans l'étape de procédé (b), le traitement par oxydation est mis en oeuvre sous forme d'une réaction en phase solide, et/ou dans lequel le traitement par oxydation est mis en oeuvre à des températures comprises dans la plage de 500°C à 1000°C ; et/ou
dans lequel, lors du traitement par oxydation dans l'étape de procédé (b), le fer est entièrement converti en oxyde de fer(III) ; et/ou
dans lequel le mélange de produits obtenu dans l'étape de procédé (b) lors du traitement par oxydation contient de l'oxyde de fer(III) en des quantités comprises dans la plage de 10 % en poids à 95 % en poids, par rapport à l'extrait sec du mélange de produits obtenu dans l'étape de procédé (b).

5. Procédé selon l'une des revendications précédentes,
dans lequel, dans l'étape de procédé (c), on met en oeuvre la chloration à des températures comprises dans la plage de 100°C à 320°C ; et/ou
dans lequel, dans l'étape de procédé (d), la sublimation du chlorure de fer, à partir du mélange de produits obtenu dans l'étape de procédé (c), est réalisée à des températures comprises dans la plage de 200°C à 400°C.

6. Procédé selon l'une des revendications précédentes,
dans lequel l'étape de procédé (c) et l'étape de procédé (d), en particulier la séparation du chlorure de fer, sont réalisés en continu dans un dispositif commun ; et/ou
dans lequel, dans l'étape de procédé (d), la sublimation conduit à l'obtention de chlorure de fer solide et/ou purifié ; et/ou
dans lequel, dans l'étape de procédé (d), la réduction du chlorure de fer a lieu en phase gazeuse, en particulier à des températures comprises dans la plage de 400°C à 800°C ; et/ou
dans lequel le mélange de produits obtenu dans l'étape de procédé (d), débarrassé du chlorure de fer, présente une teneur en fer inférieure à 10 % en poids, exprimée sous forme élémentaire, et par rapport à l'extrait sec du mélange de produits ; et/ou
dans lequel, dans l'étape de procédé (d), la séparation subséquente des chlorures des métaux supplémentaires a lieu à partir du mélange de produits débarrassé du chlorure de fer.

7. Procédé selon l'une des revendications précédentes, dans lequel, dans l'étape de procédé (d), la séparation subséquence des chlorures des métaux supplémentaires est réalisée de telle sorte que le mélange de produits débarrassé du chlorure de fer soit repris dans une phase liquide et/ou dans un milieu liquide.

8. Procédé selon l'une des revendications précédentes, dans lequel le mélange de produits obtenu dans l'étape de procédé (d), en particulier le mélange de produits débarrassé du chlorure de fer et des chlorures des métaux supplémentaires, comprend, chacun étant exprimé sous forme élémentaire, et chacun par rapport à l'extrait du mélange de produits :
- de l'or, en particulier en des quantités comprises dans la plage de 1 g/t à 50 g/t ;
- de l'argent, en particulier en des quantités comprises dans la plage de 2 g/t à 600 g/t.

9. Procédé selon l'une des revendications précédentes, dans lequel, après l'étape de procédé (d), on met en oeuvre une étape de procédé (e), ce à l'occasion de quoi, dans l'étape de procédé (e), on procède à une séparation du métal noble à partir du mélange de produits obtenu dans l'étape de procédé (d) et/ou du mélange de produits débarrassé du chlorure de fer et des chlorures des métaux supplémentaires.

10. Procédé selon l'une des revendications précédentes, dans lequel le mélange de produits obtenu dans l'étape de procédé (d) et/ou dans l'étape de procédé (e) contient du silicium, et/ou dans lequel le mélange de produits obtenu dans l'étape de procédé (d) et/ou dans l'étape de procédé (e) contient au moins un métal alcalin et/ou un métal alcalino-terreux.

11. Installation de récupération (A), pour l'extraction/la récupération de fer métallique et/ou de chlorure de fer à partir de minerais et/ou de résidus de minerais sous forme de résidus de pyrite, en particulier installation de récupération (A) pour la mise en oeuvre d'un procédé selon l'une des revendications 1 à 10,
l'installation de récupération (A) comprenant :
(a) au moins un dispositif de mise à disposition et/ou de préparation (1), pour la mise à disposition, en particulier la préparation, d'une matière de départ sous forme d'au moins un minerai et/ou d'un résidu de minerais, la matière de départ contenant du fer en tant que constituant principal, au moins un métal noble, choisi parmi l'or et/ou l'argent, ainsi qu'au moins un métal supplémentaire, choisi dans le groupe consistant en le cuivre, le zinc, le plomb, le cobalt, le titane, le manganèse, le vanadium et le chrome ;
(b) au moins un dispositif d'oxydation et/ou de grillage (2) pour le traitement par oxydation, en particulier la calcination et/ou le grillage oxydant, de la matière de départ mise à disposition, pour obtenir de l'oxyde de fer et des oxydes de métaux supplémentaires, sous forme de produits d'oxydation dans le mélange de produits obtenu ;
(c) au moins un dispositif de chloration (3), pour la chloration des produits d'oxydation dans le mélange de produits et pour l'utilisation d'au moins un agent de chloration recyclable pour la chloration de l'oxyde de fer et des oxydes des métaux supplémentaires, pour donner du chlorure de fer et des chlorures de métaux supplémentaires dans le mélange de produits,
dans lequel la chloration est mise en oeuvre sous forme d'une réaction en phase solide et par utilisation, en tant qu'agent de chloration, de chlorure d'ammonium (NH₄Cl), le dispositif de chloration (3) présentant au moins un dispositif d'amenée (8), pour amener l'agent de chloration sous forme de chlorure d'ammonium (NH₄Cl), et le chlorure d'ammonium étant recyclé par récupération de l'ammoniac (NH₃) obtenu lors de la chloration des produits d'oxydation à partir de l'agent de chloration, et par une réaction subséquente de l'ammoniac avec du chlorure d'hydrogène (HCl) ;
(d) au moins un dispositif de séparation (4), pour la séparation sélective du chlorure de fer à partir du mélange de produits, le dispositif de séparation (4) étant configuré sous forme d'un dispositif de sublimation,
l'installation de récupération (A) présentant, en aval de celle-ci et/ou en aval du dispositif de séparation (A) dans la direction du procédé, un dispositif de désublimation (14), destiné à la réception et à la désublimation du chlorure de fer en particulier sublimé, et/ou pour donner en particulier du chlorure de fer solide et/ou purifié, ou
l'installation de récupération (A) présentant, en aval de celle-ci, et/ou en aval du dispositif de séparation (4) dans la direction du procédé, au moins un dispositif de réduction (15) pour la réduction du chlorure de fer en particulier sublimé et pour l'obtention de fer métallique et/ou pour l'obtention de chlorure d'hydrogène (HCl),
les dispositifs (1, 2, 3, 4) mentionnés ci-dessus étant disposés en aval les uns des autres dans l'ordre indiqué dans la direction du procédé, et les dispositifs (14, 15) mentionnés ci-dessus étant disposés comme défini ci-dessus, et
l'installation (A) présentant au moins un dispositif de réaction et de condensation (10), pour la réunion et/ou la mise en contact et pour la réaction d'une part de l'ammoniac et d'autre part du chlorure d'hydrogène, pour donner du chlorure d'ammonium recyclé.

12. Installation selon la revendication 11,
dans laquelle le dispositif de chloration (3) présente au moins un dispositif d'évacuation et/ou de déchargement (9) pour la récupération, sous forme d'ammoniac (NH₃), des produits de réaction obtenus lors de la chloration des produits d'oxydation à partir de l'agent de chloration ; et/ou
dans laquelle le dispositif de réaction et de condensation (10) présente au moins un dispositif d'amenée (11) pour amener de l'ammoniac (NH₃) et/ou au moins un dispositif d'amenée supplémentaire (12) pour amener et/ou recevoir le chlorure d'hydrogène (HCl) et/ou au moins un dispositif d'évacuation et/ou de déchargement (13) pour la récupération de l'agent de chloration recyclé, sous forme de chlorure d'ammonium (NH₄Cl).

13. Installation selon la revendication 11 ou 12, dans laquelle le dispositif de chloration (3) et le dispositif de séparation (4) sont réunis dans un dispositif commun (24).

14. Installation selon l'une des revendications 11 à 13,
l'installation (A) présentant en outre au moins un dispositif de mise en suspension et/ou de dispersion (20), en particulier pour l'isolement subséquent des chlorures des métaux supplémentaires à partir du mélange de produits débarrassé du chlorure de fer ; et/ou
l'installation (A) présentant en outre un dispositif d'addition et d'amenée (21), en particulier pour ajouter au moins un composant de complexation pour mettre le métal noble en solution et/ou en suspension, et/ou l'installation (A) présentant au moins un dispositif de séparation et/ou de filtration (5), en particulier pour la séparation du métal noble à partir du mélange de produits débarrassé du chlorure de fer et éventuellement des chlorures des métaux supplémentaires ; et/ou
l'installation (A) présentant en outre au moins un dispositif d'extraction (23), en particulier pour extraire le métal noble de la solution et/ou de la suspension.

15. Utilisation d'une installation de récupération telle que définie dans les revendications 11 à 14, dans un procédé d'extraction/de récupération de fer métallique et/ou de chlorure de fer à partir de minerais et/ou de résidus de minerais sous forme de résidus de pyrite, tel que défini dans l'une des revendications 1 à 10.
